# EUROPEAN PATENT APPLICATION

(11) **EP 4 351 249 A1**
(43) Date of publication of application: **10.04.2024**
(21) Application number: 22827577.2
(22) Date of filing: 21.06.2022
(51) Int. Cl.: H04W 72/04

(54) **METHOD FOR COMMUNICATION, DEVICE, STORAGE MEDIUM, AND PROGRAM PRODUCT**

(30) Priority: 23.06.2021 CN 202110698499
(71) Applicant: Huawei Technologies Co., Ltd., Shenzhen, Guangdong 518129 (CN)
(72) Inventor: LIU, Chenchen, Shenzhen, Guangdong 518129 (CN); GONG, Bo, Shenzhen, Guangdong 518129 (CN); YU, Jian, Shenzhen, Guangdong 518129 (CN); LU, Yuxin, Shenzhen, Guangdong 518129 (CN); GAN, Ming, Shenzhen, Guangdong 518129 (CN)
(74) Representative: Epping - Hermann - Fischer
(86) International application number: PCT/CN2022/100205
(87) International publication number: WO 2022/268084

(57) **Abstract**

Embodiments of this disclosure provide a communication method and device, a storage medium, and a program product. According to the communication method of this disclosure, a physical layer protocol data unit (PPDU) is transmitted or received based on a tone plan of a first bandwidth. The tone plan includes a physical resource unit (PRU), and the PRU includes discrete subcarriers. According to embodiments of this disclosure, an original nominal RU is processed to obtain a PRU including discrete subcarriers. Discretized subcarriers of the PRU may be evenly distributed on a larger bandwidth without changing subcarrier division of the original nominal RU. When it is ensured that a large PAPR is not generated in data transmission due to discrete subcarriers, a transmit end can perform communication at a high transmit power.

## Description

### TECHNICAL FIELD

Embodiments of this disclosure mainly relate to the communication field, and in particular, to a tone plan method and device, a storage medium, and a program product.

### BACKGROUND

The wireless local area network (wireless local area network, WLAN) technology has evolved for a plurality of generations from the 802.11a/g, 802.11n, 802.11ac, and 802.11ax standards to the 802.11be standard. In this case, data throughput continuously increases. Therefore, the 802.11ax standard is also referred to as a high efficiency (High Efficiency, HE) wireless standard, and the 802.11be standard may also be referred to as an extremely high throughput (Extremely High Throughput, EHT) wireless standard.

In terms of bandwidth configurations, currently, the 802.11ax standard supports the following bandwidth configurations: 20 MHz, 40 MHz, 80 MHz, 160 MHz, and 80+80 MHz. A difference between the 160 MHz and 80+80 MHz bandwidth configurations lies in that the 160 MHz bandwidth is a contiguous frequency band, and the two 80 MHz bandwidths may be separated. The 802.11be standard supports larger and more flexible bandwidth configurations, such as 240 MHz/160+80 MHz and 320 MHz/160+160 MHz. As a bandwidth increases, a maximum transmit power of a communication device increases accordingly. The maximum transmit power and a maximum power spectral density of the communication device are limited by relevant laws and regulations in various countries. Compared with the maximum transmit power, the maximum power spectral density is limited more strictly. An allowed maximum transmit power is generally limited more by the power spectral density. In a case of a specific bandwidth, the communication device can usually perform communication only at a power lower than the maximum transmit power due to a limitation of the maximum power spectral density.

### SUMMARY

In general, embodiments of this disclosure provide a communication method and device, and a computer-readable storage medium.

According to a first aspect of this disclosure, a communication method is provided. The method includes: sending or receiving a physical layer protocol data unit PPDU based on a tone plan corresponding to a first bandwidth, where the tone plan includes a physical resource unit PRU, and the PRU includes discrete subcarriers.

In a first implementation of the first aspect, the PPDU includes indication information, and the indication information indicates that the PPDU is transmitted or received by using a virtual resource unit VRU including consecutive subcarriers, or the PPDU is transmitted or received by using the PRU. Therefore, it may be determined, based on the indication information, whether the PPDU uses the resource unit including consecutive subcarriers or the resource unit including discrete subcarriers.

In a second implementation of the first aspect, there is a mapping relationship between the PRU and the VRU.

In a third implementation of the first aspect, the first bandwidth is 80 MHz, and a tone plan corresponding to the 80 MHz includes a first PRU, a second PRU, a third PRU, and a fourth PRU. Indices of discrete subcarriers of the first PRU are [-500:4:-368, -365:4:-261, -250:4:-146, - 145:4:-13, 15:4:143, 148:4:252, 259:4:363, 370:4:498].

Indices of discrete subcarriers of the second PRU are [-499:4:-367, -366:4:-262, -252:4:-148, - 143:4:-15, 14:4:142, 149:4:253, 261:4:365, 68:4:500].

Indices of discrete subcarriers of the third PRU are [-498:4:-370, -363:4:-259, -251:4:-147, - 144:4:-12, 13:4:145, 146:4:250, 260:4:364, 369:4:497].

Indices of discrete subcarriers of the fourth PRU are [-497:4:-369, -364:4:-260, -253:4:-149, - 142:4:-14, 12:4:144, 147:4:251, 262:4:366, 367:4:499].

Herein, a:b:c indicates subcarrier indices from an index a to an index c by using b as a step.

With reference to the third implementation of the first aspect, indices of pilot subcarriers of the first PRU are {-468, -400, -246, -178, 152, 220, 426, 494}, indices of pilot subcarriers of the second PRU are {-334, -266, -220, -152, 18, 86, 400, 468}, indices of pilot subcarriers of the third PRU are {-494, -426, -112, -44, 178, 246, 292, 360}, and indices of pilot subcarriers of the fourth PRU are {-360, -292, -86, -18, 44, 112, 266, 334}.

In a fourth implementation of the first aspect, the first bandwidth is 80 MHz, and a tone plan corresponding to the 80 MHz includes a first PRU, a second PRU, a third PRU, and a fourth PRU.

Indices of discrete subcarriers of the first PRU are [-500:4:-368, -365:4:-261, -253:4:-149, - 142:4:-14, 15:4:143, 148:4:252, 262:4:366, 367:4:499].

Indices of discrete subcarriers of the second PRU are [-499:4:-367, -366:4:-262, -252:4:-148, - 143:4:-15, 14:4:142, 149:4:253, 261:4:365, 368:4:500].

Indices of discrete subcarriers of the third PRU are [-498:4:-370, -363:4:-259, -251:4:-147, - 144:4:-12, 13:4:145, 146:4:250, 260:4:364, 369:4:497].

Indices of discrete subcarriers of the fourth PRU are [-497:4:-369, -364:4: -260, -250:4: -146, - 145:4: -13, 12:4:144, 147:4:251, 259:4:363, 370:4:498].

Herein, a:b:c indicates subcarrier indices from an index a to an index c by using b as a step.

With reference to the fourth implementation of the first aspect, indices of pilot subcarriers of the first PRU are {-468, -400, -86, -18, 152, 220, 266, 334}, indices of pilot subcarriers of the second PRU are {-334, -266, -220, -152, 18, 86, 400, 468}, indices of pilot subcarriers of the third PRU are {-494, -426, -112, -44, 178, 246, 292, 360}, and indices of pilot subcarriers of the fourth PRU are {-360, -292, -246, -178, 44, 112, 426, 494}.

In a fifth implementation of the first aspect, the first bandwidth is 80 MHz, and a tone plan corresponding to the 80 MHz includes a first PRU, a second PRU, a third PRU, and a fourth PRU. Indices of discrete subcarriers of the first PRU are [-500:4:0368, 0365:4: 0261, -252:4: □148, □143:4:□15, 13:4:145, 146:4:250, 259:4:363, 370:4:498].

Indices of discrete subcarriers of the second PRU are [-499:4:-367, -366:4:-262, -253:4:-149, - 142:4:-14, 12:4:144, 147:4:251, 260:4:364, 369:4:497].

Indices of discrete subcarriers of the third PRU are [-498:4:-370, -363:4:-259, -251:4:-147, - 144:4:-12, 15:4:143, 148:4:252, 262:4:366, 367:4:499].

Indices of discrete subcarriers of the fourth PRU are [-497:4: -369, -364:4: -260, -250:4: -146, -145:4: -13, 14:4:142, 149:4:253, 261:4:365, 368:4:500].

Herein, a:b:c indicates subcarrier indices from an index a to an index c by using b as a step.

With reference to the fifth implementation of the first aspect, indices of pilot subcarriers of the first PRU are {-468, -400, -220, -152, 178, 246, 426, 494}, indices of pilot subcarriers of the second PRU are {-334, -266, -86, -18, 44, 112, 292, 360}, indices of pilot subcarriers of the third PRU are {-494, -426, -112, -44, 152, 220, 266, 334}, and indices of pilot subcarriers of the fourth PRU are {-360, -292, -246, -178, 18, 86, 400, 468}.

In a sixth implementation of the first aspect, the first bandwidth is 80 MHz, and a tone plan corresponding to the 80 MHz includes a first PRU, a second PRU, a third PRU, and a fourth PRU. Indices of discrete subcarriers of the first PRU are [-500:4:0368, 0365:4: 0261, -250:4:□146, □145:4:□13, 15:4:143, 148:4:252, 259:4:363, 370:4:498].

Indices of discrete subcarriers of the second PRU are [-499:4:-367, -366:4:-262, -253:4:-149, - 142:4:-14, 12:4:144, 147:4:251, 260:4:364, 369:4:497].

Indices of discrete subcarriers of the third PRU are [-498:4:-370, -363:4:-259, -252:4:-148, - 143:4:-15, 13:4:145, 146:4:250, 261:4:365, 368:4:500].

Indices of discrete subcarriers of the fourth PRU are [-497:4:-369, -364:4:-260, -251:4:-147, - 144:4:-12, 14:4:142, 149:4:253, 262:4:366, 367:4:499].

Herein, a:b:c indicates subcarrier indices from an index a to an index c by using b as a step.

With reference to the sixth implementation of the first aspect, indices of pilot subcarriers of the first PRU are {-468, -400, -246, -178, 152, 220, 426, 494}, indices of pilot subcarriers of the second PRU are {-334, -266, -86, -18, 44, 112, 292, 360}, indices of pilot subcarriers of the third PRU are {-494, -426, -220, -152, 178, 246, 400, 468}, and indices of pilot subcarriers of the fourth PRU are {-360, -292, -112, -44, 18, 86, 266, 334}.

In a seventh implementation of the first aspect, the first bandwidth is 80 MHz, and a tone plan corresponding to the 80 MHz includes a first PRU, a second PRU, a third PRU, and a fourth PRU. Indices of discrete subcarriers of the first PRU are [-500:4:-368, -365:4:-261, -252:4:-148, - 143:4:-15, 13:4:145, 146:4:250, 259:4:363, 370:4:498].

Indices of discrete subcarriers of the second PRU are [-499:4:-367, -366:4:-262, -253:4:-149, - 142:4:-14, 12:4:144, 147:4:251, 260:4:364, 369:4:497].

Indices of discrete subcarriers of the third PRU are [-498:4:-370, -363:4:-259, -250:4:-146, - 145:4:-13, 15:4:143, 148:252, 261:4:365, 368:4:500].

Indices of discrete subcarriers of the fourth PRU are [-497:4:-369, -364:4:-260, -251:4:-147, - 144:4:-12, 14:4:142, 149:4:253, 262:4:366, 367:4:499].

Herein, a:b:c indicates subcarrier indices from an index a to an index c by using b as a step.

With reference to the seventh implementation of the first aspect, indices of pilot subcarriers of the first PRU are {-468, -400, -220, -152, 178, 246, 426, 494}, indices pilot subcarriers of the second PRU are {-334, -266, -86, -18, 44, 112, 292, 360}, indices of pilot subcarriers of the third PRU are {-494, -426, -246, -178, 152, 220, 400, 468}, and indices of pilot subcarriers of the fourth PRU are {-360, -292, -112, -44, 18, 86, 266, 334}.

In an eighth implementation of the first aspect, the first bandwidth is 80 MHz, and a tone plan corresponding to the 80 MHz includes a first PRU, a second PRU, a third PRU, and a fourth PRU. Indices of discrete subcarriers of the first PRU are [-500:4:-368, -365:4:-261, -250:4:-146, - 145:4:-13, 15:4:143, 148:4:252, 259:4:363, 370:4:498].

Indices of discrete subcarriers of the second PRU are [-499:4:-367, -366:4:-262, -253:4:-149, - 142:4:-14, 12:4:144, 147:4:251, 260:4:364, 369:4:497].

Indices of discrete subcarriers of the third PRU are [-498:4:-370, -363:4:-259, -252:4:-148, - 143:4:-15, 13:4:145, 146:4:250, 261:4:365, 368:4:500].

Indices of discrete subcarriers of the fourth PRU are [-497:4:-369, -364:4:-260, -251:4:-147, - 144:4:-12, 14:4:142, 149:4:253, 262:4:366, 367:4:499].

Herein, a:b:c indicates subcarrier indices from an index a to an index c by using b as a step.

With reference to the eighth implementation of the first aspect, indices of pilot subcarriers of the first PRU are{-468, -400, -246, -178, 152, 220, 426, 494}, indices of pilot subcarriers of the second PRU are {-334, -266, -86, -18, 44, 112, 292, 360}, indices of pilot subcarriers of the third PRU are {-494, -426, -220, -152, 178, 246, 400, 468}, and indices of pilot subcarriers of the fourth PRU are {-360, -292, -112, -44, 18, 86, 266, 334}.

In a ninth implementation of the first aspect, the first bandwidth is 80 MHz, and a tone plan corresponding to the 80 MHz includes a first PRU, a second PRU, a third PRU, and a fourth PRU. Indices of discrete subcarriers of the first PRU are [-500:4:-368, -365:4:-261, -252:4:-148, - 143:4:-15, 13:4:145, 146:4:250, 259:4:363, 370:4:498].

Indices of discrete subcarriers of the second PRU are [-499:4:-367, -366:4:-262, -251:4:-147, - 144:4:-12, 14:4:142, 149:4:253, 260:4:364, 369:4:497].

Indices of discrete subcarriers of the third PRU are [-498:4:-370, -363:4:-259, -250:4:-146, - 145:4:-13, 15:4:143, 148:252, 261:4:365, 368:4:500].

Indices of discrete subcarriers of the fourth PRU are [-497:4:-369, -364:4:-260, -253:4:-149, - 142:4:-14, 12:4:144, 147:4:251, 262:4:366, 367:4:499].

Herein, a:b:c indicates subcarrier indices from an index a to an index c by using b as a step.

With reference to the ninth implementation of the first aspect, indices of pilot subcarriers of the first PRU are {-468, -400, -220, -152, 178, 246, 426, 494}, indices of pilot subcarriers of the second PRU are {-334, -266, -112, -44, 18, 86, 292, 360}, indices of pilot subcarriers of the third PRU are {-494, -426, -246, -178, 152, 220, 400, 468}, and indices of pilot subcarriers of the fourth PRU are {-360, -292, -86, -18, 44, 112, 266, 334}.

In a tenth implementation of the first aspect, the first bandwidth is 80 MHz, and a tone plan corresponding to the 80 MHz includes a first PRU, a second PRU, a third PRU, and a fourth PRU. Indices of discrete subcarriers of the first PRU are [-500:4:-368, -365:4:-261, -253:4:-149, - 142:4:-14, 15:4:143, 148:4:252, 262:4:366, 367:4:499].

Indices of discrete subcarriers of the second PRU are [-499:4:-367, -366:4:-262, -251:4:-147, - 144:4:-12, 14:4:142, 149:4:253, 260:4:364, 369:4:497].

Indices of discrete subcarriers of the third PRU are [-498:4:-370, -363:4:-259, -252:4:-148, - 143:4:-15, 13:4:145, 146:4:250, 261:4:365, 368:4:500].

Indices of discrete subcarriers of the fourth PRU are [-497:4: -369, -364:4: -260, -250:4: -146, -145:4: -13, 12:4:144, 147:4:251, 259:4:363, 370:4:498].

Herein, a:b:c indicates subcarrier indices from an index a to an index c by using b as a step.

With reference to the tenth implementation of the first aspect, indices of pilot subcarriers of the first PRU are {-468, -400, -86, -18, 152, 220, 266, 334}, indices of pilot subcarriers of the second PRU are {-334, -266, -112, -44, 18, 86, 292, 360}, indices of pilot subcarriers of the third PRU are {-494, -426, -220, -152, 178, 246, 400, 468}, and indices of pilot subcarriers of the fourth PRU are {-360, -292, -246, -178, 44, 112, 426, 494}.

In an eleventh implementation of the first aspect, the first bandwidth is 80 MHz, and a tone plan corresponding to the 80 MHz includes a first PRU, a second PRU, a third PRU, and a fourth PRU. Indices of discrete subcarriers of the first PRU are [-500:4:-368, -365:4:-261, -252:4:-148, - 143:4:-15, 13:4:145, 146:4:250, 259:4:363, 370:4:498].

Indices of discrete subcarriers of the second PRU are [-499:4:-367, -366:4:-262, -253:4:-149, - 142:4:-14, 15:4:143, 148:4:252, 261:4:365, 368:4:500].

Indices of discrete subcarriers of the third PRU are [-498:4:-370, -363:4:-259, -250:4:-146, - 145:4:-13, 12:4:144, 147:4:251, 260:4:364, 369:4:497].

Indices of discrete subcarriers of the fourth PRU are [-497:4:-369, -364:4:-260, -251:4:-147, - 144:4:-12, 14:4:142, 149:4:253, 262:4:366, 367:4:499].

Herein, a:b:c indicates subcarrier indices from an index a to an index c by using b as a step.

With reference to the eleventh implementation of the first aspect, indices of discrete subcarriers of the first PRU are {-468, -400, -220, -152, 178, 246, 426, 494}, indices of discrete subcarriers of the second PRU are {-334, -266, -86, -18, 152, 220, 400, 468}, indices of discrete subcarriers of the third PRU are {-494, -426, -246, -178, 44, 112, 292, 360}, and indices of discrete subcarriers of the fourth PRU are {-360, -292, -112, -44, 18, 86, 266, 334}.

In a twelfth implementation of the first aspect, the first bandwidth is 80 MHz, and a tone plan corresponding to the 80 MHz includes a first PRU, a second PRU, a third PRU, and a fourth PRU. Indices of discrete subcarriers of the first PRU are [-500:4:-368, -365:4:-261, -252:4:-148, - 143:4:-15, 14:4:142, 149:4:253, 262:4:366, 367:4:499].

Indices of discrete subcarriers of the second PRU are [-499:4:-367, -366:4:-262, -251:4:-147, - 144:4:-12, 15:4:143, 148:4:252, 259:4:363, 370:4:498].

Indices of discrete subcarriers of the third PRU are [-498:4:-370, -363:4:-259, -250:4:-146, - 145:4:-13, 12:4:144, 147:4:251, 260:4:364, 369:4:497].

Indices of discrete subcarriers of the fourth PRU are [-497:4:-369, -364:4:-260, -253:4:-149, - 142:4:-14, 13:4:145, 146:4:250, 261:4:365, 368:4:500].

Herein, a:b:c indicates subcarrier indices from an index a to an index c by using b as a step.

With reference to the twelfth implementation of the first aspect, indices of pilot subcarriers of the first PRU are {-468, -400, -220, -152, 18, 86, 266, 334}, indices of pilot subcarriers of the second PRU are {-334, -266, -112, -44, 152, 220, 426, 494}, indices of pilot subcarriers of the third PRU are {-494, -426, -246, -178, 44, 112, 292, 360}, and indices of pilot subcarriers of the fourth PRU are {-360, -292, -86, -18, 178, 246, 400, 468}.

In a thirteenth implementation of the first aspect, the first bandwidth is 80 MHz, and a tone plan corresponding to the 80 MHz includes a first PRU, a second PRU, a third PRU, and a fourth PRU. Indices of discrete subcarriers of the first PRU are [-500:4:-368, -365:4:-261, -250:4:-146, - 145:4:-13, 15:4:143, 148:4:252, 259:4:363, 370:4:498].

Indices of discrete subcarriers of the second PRU are [-499:4:-367, -366:4:-262, -251:4:-147, - 144:4:-12, 14:4:142, 149:4:253, 260:4:364, 369:4:497].

Indices of discrete subcarriers of the third PRU are [-498:4:-370, -363:4:-259, -252:4:-148, - 143:4:-15, 13:4:145, 146:4:250, 261:4:365, 368:4:500].

Indices of discrete subcarriers of the fourth PRU are [-497:4:-369, -364:4:-260, -253:4:-149, - 142:4:-14, 12:4:144, 147:4:251, 262:4:366, 367:4:499].

Herein, a:b:c indicates subcarrier indices from an index a to an index c by using b as a step.

With reference to the thirteenth implementation of the first aspect, indices of pilot subcarriers of the first PRU are {-468, -400, -246, -178, 152, 220, 426, 494}, indices of pilot subcarriers of the second PRU are {-334, -266, -112, -44, 18, 86, 292, 360}, indices of pilot subcarriers of the third PRU are {-494, -426, -220, -152, 178, 246, 400, 468}, and indices of pilot subcarriers of the fourth PRU are {-360, -292, -86, -18, 44, 112, 266, 334}.

In a fourteenth implementation of the first aspect, the first bandwidth is 80 MHz, and a tone plan corresponding to the 80 MHz includes a first PRU, a second PRU, a third PRU, and a fourth PRU. Indices of discrete subcarriers of the first PRU are [-500:4:-368, -365:4:-261, -253:4:-149, - 142:4:-14, 13:4:145, 146:4:250, 260:4:364, 369:4:497].

Indices of discrete subcarriers of the second PRU are [-499:4:-367, -366:4:-262, -252:4:-148, - 143:4:-15, 14:4:142, 149:4:253, 261:4:365, 368:4:500].

Indices of discrete subcarriers of the third PRU are [-498:4:-370, -363:4:-259, -251:4:-147, - 144:4:-12, 15:4:143, 148:4:252, 262:4:366, 367:4:499].

Indices of discrete subcarriers of the fourth PRU are [-497:4: -369, -364:4: -260, -250:4: -146, -145:4: -13, 12:4:144, 147:4:251, 259:4:363, 370:4:498].

Herein, a:b:c indicates subcarrier indices from an index a to an index c by using b as a step.

With reference to the fourteenth implementation of the first aspect, indices of pilot subcarriers of the first PRU are {-468, -400, -86, -18, 178, 246, 292, 360}, indices of pilot subcarriers of the second PRU are {-334, -266, -220, -152, 18, 86, 400, 468}, indices of pilot subcarriers of the third PRU are {-494, -426, -112, -44, 152, 220, 266, 334}, and indices of pilot subcarriers of the fourth PRU are {-360, -292, -246, -178, 44, 112, 426, 494}.

In a fifteenth implementation of the first aspect, the first bandwidth is 80 MHz, and a tone plan corresponding to the 80 MHz includes a first PRU, a second PRU, a third PRU, and a fourth PRU. Indices of discrete subcarriers of the first PRU are [-500:4:-368, -365:4:-261, -253:4:-149, - 142:4:-14, 13:4:145, 146:4:250, 260:4:364, 369:4:497].

Indices of discrete subcarriers of the second PRU are [-499:4:-367, -366:4:-262, -252:4:-148, - 143:4:-15, 12:4:144, 147:4:251, 259:4:363, 370:4:498].

Indices of discrete subcarriers of the third PRU are [-498:4:-370, -363:4:-259, -251:4:-147, - 144:4:-12, 15:4:143, 148:4:252, 262:4:366, 367:4:499].

Indices of discrete subcarriers of the fourth PRU are [-497:4: -369, -364:4: -260, -250:4: -146, -145:4: -13, 14:4:142, 149:4:253, 261:4:365, 368:4:500].

Herein, a:b:c indicates subcarrier indices from an index a to an index c by using b as a step.

With reference to the fifteenth implementation of the first aspect, indices of pilot subcarriers of the first PRU are {-468, -400, -86, -18, 178, 246, 292, 360}, indices of pilot subcarriers of the second PRU are {-334, -266, -220, -152, 44, 112, 426, 494}, indices of pilot subcarriers of the third PRU are {-494, -426, -112, -44, 152, 220, 266, 334}, and indices of pilot subcarriers of the fourth PRU are {-360, -292, -246, -178, 18, 86, 400, 468}.

In a sixteenth implementation of the first aspect, the first bandwidth is 80 MHz, and a tone plan corresponding to the 80 MHz includes a first PRU, a second PRU, a third PRU, a fourth PRU, a fifth PRU, a sixth PRU, a seventh PRU, and an eighth PRU.

Indices of discrete subcarriers of the first PRU are [-499:8:-395, -361:8:-265, -252:8:-148, - 112:8:-16, 19:8:115, 152:8:248, 262:8:358, 401:8:497].

Indices of discrete subcarriers of the second PRU are [-498:8:-394, -362:8:-266, -251:8:-147, - 111:8:-15, 20:8:116, 151:8:247, 263:8:359, 398:8:494].

Indices of discrete subcarriers of the third PRU are [-497:8:-401, -364:8:-260, -248:8:-152, - 115:8:-19, 13:8:117, 154:8:250, 266:8:362, 399:8:495].

Indices of discrete subcarriers of the fourth PRU are [-496:8:-400, -365:8:-261, -247:8:-151, - 116:8:-20, 15:8:111, 153:8:249, 264:8:360, 394:8:498].

Indices of discrete subcarriers of the fifth PRU are [-495:8:-399, -359:8:-263, -250:8:-154, - 114:8:-18, 14:8:118, 150:8:246, 267:8:363, 395:8:499].

Indices of discrete subcarriers of the sixth PRU are [-494:8:-398, -358:8:-262, -245:8:-149, - 113:8:-17, 16:8:112, 148:8:252, 261:8:365, 397:8:493].

Indices of discrete subcarriers of the seventh PRU are [-493:8:-397, -363:8:-267, -246:8:-150, - 118:8:-14, 18:8:114, 147:8:251, 265:8:361, 396:8:492].

Indices of discrete subcarriers of the eighth PRU are [-492:8:-396, -360:8:-264, -249:8:-153, - 117:8:-13, 17:8:113, 149:8:245, 260:8:364, 400:8:496].

Herein, a:b:c indicates subcarrier indices from an index a to an index c by using b as a step.

With reference to the sixteenth implementation of the first aspect, indices of pilot subcarriers of the first PRU are {-220, -112, 152, 334}, indices of pilot subcarriers of the second PRU are {-426, -266, 44, 494}, indices of pilot subcarriers of the third PRU are {-292, -152, 178, 266}, indices of pilot subcarriers of the fourth PRU are{-400, -44, 360, 426}, indices of pilot subcarriers of the fifth PRU are {-178, -18, 86, 246}, indices of pilot subcarriers of the sixth PRU are {-494, -334, 112, 220}, indices of pilot subcarriers of the seventh PRU are {-246, -86, 18, 468}, and indices of pilot subcarriers of the eighth PRU are {-468, -360, 292, 400}.

In a seventeenth implementation of the first aspect, the first bandwidth is 80 MHz, and a tone plan corresponding to the 80 MHz includes a first PRU, a second PRU, a third PRU, a fourth PRU, a fifth PRU, a sixth PRU, a seventh PRU, and an eighth PRU.

Indices of discrete subcarriers of the first PRU are [-499:8:-395, -359:8:-263, -252:8:-148, - 111:8:-15, 20:8:116, 151:8:247, 264:8:360, 400:8:496].

Indices of discrete subcarriers of the second PRU are [-498:8:-394, -363:8:-267, -247:8:-151, - 112:8:-16, 19:8:115, 147:8:251, 262:8:358, 398:8:494].

Indices of discrete subcarriers of the third PRU are [-497:8:-401, -364:8:-260, -248:8:-152, - 117:8:-13, 17:8:113, 153:8:249, 266:8:362, 396:8:492].

Indices of discrete subcarriers of the fourth PRU are [-496:8:-400, -360:8:-264, -251:8:-147, - 115:8:-19, 15:8:111, 154:8:250, 260:8:364, 399:8:495].

Indices of discrete subcarriers of the fifth PRU are [-495:8:-399, -365:8:-261, -246:8:-150, - 116:8:-20, 14:8:118, 152:8:248, 263:8:359, 401:8:497].

Indices of discrete subcarriers of the sixth PRU are [-494:8:-398, -358:8:-262, -245:8:-149, - 118:8:-14, 13:8:117, 150:8:246, 265:8:361, 397:8:493].

Indices of discrete subcarriers of the seventh PRU are [-493:8:-397, -361:8:-265, -250:8:-154, - 114:8:-18, 16:8:112, 148:8:252, 267:8:363, 395:8:499].

Indices of discrete subcarriers of the eighth PRU are [-492:8:-396, -362:8:-266, -249:8:-153, - 113:8:-17, 18:8:114, 149:8:245, 261:8:365, 394:8:498].

Herein, a:b:c indicates subcarrier indices from an index a to an index c by using b as a step.

With reference to the seventeenth implementation of the first aspect, indices of pilot subcarriers of the first PRU are {-220, 44, 360, 400}, indices of pilot subcarriers of the second PRU are {-426, -112, 334, 494}, indices of pilot subcarriers of the third PRU are {-292, -152, 266, 468}, indices of pilot subcarriers of the fourth PRU are {-400, -360, 178, 292}, indices of pilot subcarriers of the fifth PRU are {-246, -44, 86, 152}, indices of pilot subcarriers of the sixth PRU are {-494, - 334, -86, 246}, indices of pilot subcarriers of the seventh PRU are {-178, -18, 112, 220}, and indices of pilot subcarriers of the eighth PRU are {-468, -266, 18, 426}.

In an eighteenth implementation of the first aspect, the first bandwidth is 80 MHz, and a tone plan corresponding to the 80 MHz includes a first PRU, a second PRU, a third PRU, a fourth PRU, a fifth PRU, a sixth PRU, a seventh PRU, and an eighth PRU.

Indices of discrete subcarriers of the first PRU are [-499:8:-395, -361:8:-265, -248:8:-152, - 111:8:-15, 19:8:115, 148:8:252, 262:8:358, 400:8:496].

Indices of discrete subcarriers of the second PRU are [-498:8:-394, -365:8:-261, -249:8:-153, - 112:8:-16, 20:8:116, 149:8:245, 265:8:361, 398:8:494].

Indices of discrete subcarriers of the third PRU are [-497:8:-401, -362:8:-266, -252:8:-148, - 116:8:-20, 17:8:113, 152:8:248, 261:8:365, 397:8:493].

Indices of discrete subcarriers of the fourth PRU are [-496:8:-400, -358:8:-262, -245:8:-149, - 115:8:-19, 13:8:117, 151:8:247, 264:8:360, 394:8:498].

Indices of discrete subcarriers of the fifth PRU are [-495:8:-399, -359:8:-263, -246:8:-150, - 118:8:-14, 18:8:114, 154:8:250, 267:8:363, 395:8:499].

Indices of discrete subcarriers of the sixth PRU are [-494:8:-398, -363:8:-267, -247:8:-151, - 117:8:-13, 16:8:112, 153:8:249, 260:8:364, 396:8:492].

Indices of discrete subcarriers of the seventh PRU are [-493:8:-397, -360:8:-264, -250:8:-154, - 113:8:-17, 14:8:118, 147:8:251, 266:8:362, 401:8:497].

Indices of discrete subcarriers of the eighth PRU are [-492:8:-396, -364:8:-260, -251:8:-147, - 114:8:-18, 15:8:111, 150:8:246, 263:8:359, 399:8:495].

Herein, a:b:c indicates subcarrier indices from an index a to an index c by using b as a step.

With reference to the eighteenth implementation of the first aspect, indices of pilot subcarriers of the first PRU are {-152, 220, 334, 400}, indices of pilot subcarriers of the second PRU are {-426, -112, 44, 494}, indices of pilot subcarriers of the third PRU are {-266, -220, -44, 152}, indices of pilot subcarriers of the fourth PRU are {-400, -334, 360, 426}, indices of pilot subcarriers of the fifth PRU are {-246, -86, 18, 178}, indices of pilot subcarriers of the sixth PRU are {-494, 112, 292, 468}, indices of pilot subcarriers of the seventh PRU are {-360, -178, 86, 266}, and indices of pilot subcarriers of the eighth PRU are {-468, -292, -18, 246}.

In a nineteenth implementation of the first aspect, the first bandwidth is 80 MHz, and a tone plan corresponding to the 80 MHz includes a first PRU, a second PRU, a third PRU, a fourth PRU, a fifth PRU, a sixth PRU, a seventh PRU, and an eighth PRU.

Indices of discrete subcarriers of the first PRU are [-499:8:-395, -361:8:-265, -245:8:-149, - 116:8:-20, 16:8:112, 152:8:248, 260:8:364, 397:8:493].

Indices of discrete subcarriers of the second PRU are [-498:8:-394, -359:8:-263, -246:8:-150, - 114:8:-18, 17:8:113, 147:8:251, 262:8:358, 401:8:497].

Indices of discrete subcarriers of the third PRU are [-497:8:-401, -365:8:-261, -248:8:-152, - 113:8:-17, 14:8:118, 153:8:249, 266:8:362, 396:8:492].

Indices of discrete subcarriers of the fourth PRU are [-496:8:-400, -364:8:-260, -247:8:-151, - 115:8:-19, 18:8:114, 154:8:250, 267:8:363, 395:8:499].

Indices of discrete subcarriers of the fifth PRU are [-495:8:-399, -358:8:-262, -249:8:-153, - 118:8:-14, 15:8:111, 150:8:246, 261:8:365, 398:8:494].

Indices of discrete subcarriers of the sixth PRU are [-494:8:-398, -363:8:-267, -251:8:-147, - 112:8:-16, 20:8:116, 151:8:247, 263:8:359, 394:8:498].

Indices of discrete subcarriers of the seventh PRU are [-493:8:-397, -362:8:-266, -250:8:-154, - 111:8:-15, 13:8:117, 148:8:252, 264:8:360, 399:8:495].

Indices of discrete subcarriers of the eighth PRU are [-492:8:-396, -360:8:-264, -252:8:-148, - 117:8:-13, 19:8:115, 149:8:245, 265:8:361, 400:8:496].

Herein, a:b:c indicates subcarrier indices from an index a to an index c by using b as a step.

With reference to the nineteenth implementation of the first aspect, indices of pilot subcarriers of the first PRU are {-44, 112, 152, 292}, indices of pilot subcarriers of the second PRU are {-426, -246, -18, 334}, indices of pilot subcarriers of the third PRU are {-152, 86, 266, 468}, indices of pilot subcarriers of the fourth PRU are {-400, -292, 18, 178}, indices of pilot subcarriers of the fifth PRU are {-334, -86, 246, 494}, indices of pilot subcarriers of the sixth PRU are {-494, -112, 44, 426}, indices of pilot subcarriers of the seventh PRU are {-266, -178, 220, 360}, and indices of pilot subcarriers of the eighth PRU are {-468, -360, -220, 400}.

In a twentieth implementation of the first aspect, the first bandwidth is 80 MHz, and a tone plan corresponding to the 80 MHz includes a first PRU, a second PRU, a third PRU, a fourth PRU, a fifth PRU, a sixth PRU, a seventh PRU, and an eighth PRU.

Indices of discrete subcarriers of the first PRU are [-499:8:-395, -363:8:-267, -246:8:-150, - 118:8:-14, 18:8:114, 154:8:250, 263:8:359, 399:8:495].

Indices of discrete subcarriers of the second PRU are [-498:8:-394, -362:8:-266, -247:8:-151, - 111:8:-15, 13:8:117, 153:8:249, 264:8:360, 396:8:492].

Indices of discrete subcarriers of the third PRU are [-497:8:-401, -365:8:-261, -252:8:-148, - 112:8:-16, 20:8:116, 152:8:248, 265:8:361, 397:8:493].

Indices of discrete subcarriers of the fourth PRU are [-496:8:-400, -364:8:-260, -251:8:-147, - 115:8:-19, 17:8:113, 149:8:245, 262:8:358, 398:8:494].

Indices of discrete subcarriers of the fifth PRU are [-495:8:-399, -359:8:-263, -250:8:-154, - 114:8:-18, 14:8:118, 150:8:246, 267:8:363, 395:8:499].

Indices of discrete subcarriers of the sixth PRU are [-494:8:-398, -358:8:-262, -245:8:-149, - 113:8:-17, 19:8:115, 147:8:251, 260:8:364, 400:8:496].

Indices of discrete subcarriers of the seventh PRU are [-493:8:-397, -361:8:-265, -248:8:-152, - 116:8:-20, 16:8:112, 148:8:252, 261:8:365, 401:8:497].

Indices of discrete subcarriers of the eighth PRU are [-492:8:-396, -360:8:-264, -249:8:-153, - 117:8:-13, 15:8:111, 151:8:247, 266:8:362, 394:8:498].

Herein, a:b:c indicates subcarrier indices from an index a to an index c by using b as a step.

With reference to the twentieth implementation of the first aspect, indices of pilot subcarriers of the first PRU are {-246, -86, 18, 178}, indices of pilot subcarriers of the second PRU are {-426, -266, 360, 468}, indices of pilot subcarriers of the third PRU are {-220, -112, 44, 152}, indices of pilot subcarriers of the fourth PRU are {-400, -292, 334, 494}, indices of pilot subcarriers of the fifth PRU are {-178, -18, 86, 246},indices of pilot subcarriers of the sixth PRU are {-494, - 334, 292, 400}, indices of pilot subcarriers of the seventh PRU are {-152, -44, 112, 220}, and indices of pilot subcarriers of the eighth PRU are {-468, -360, 266, 426}.

In a twenty-first implementation of the first aspect, the first bandwidth is 80 MHz, and a tone plan corresponding to the 80 MHz includes a first PRU, a second PRU, a third PRU, a fourth PRU, a fifth PRU, a sixth PRU, a seventh PRU, and an eighth PRU.

Indices of discrete subcarriers of the first PRU are [-499:8:-395, -359:8:-263, -252:8:-148, - 112:8:-16, 20:8:116, 152:8:248, 267:8:363, 399:8:495].

Indices of discrete subcarriers of the second PRU are [-498:8:-394, -362:8:-266, -245:8:-149, - 117:8:-13, 17:8:113, 153:8:249, 262:8:358, 398:8:494].

Indices of discrete subcarriers of the third PRU are [-497:8:-401, -361:8:-265, -250:8:-154, - 114:8:-18, 14:8:118, 150:8:246, 261:8:365, 397:8:493].

Indices of discrete subcarriers of the fourth PRU are [-496:8:-400, -364:8:-260, -251:8:-147, - 111:8:-15, 19:8:115, 151:8:247, 264:8:360, 396:8:492].

Indices of discrete subcarriers of the fifth PRU are [-495:8:-399, -363:8:-267, -248:8:-152, - 116:8:-20, 16:8:112, 148:8:252, 263:8:359, 395:8:499].

Indices of discrete subcarriers of the sixth PRU are [-494:8:-398, -358:8:-262, -249:8:-153, - 113:8:-17, 13:8:117, 149:8:245, 266:8:362, 394:8:498].

Indices of discrete subcarriers of the seventh PRU are [-493:8:-397, -365:8:-261, -246:8:-150, - 118:8:-14, 18:8:114, 154:8:250, 265:8:361, 401:8:497].

Indices of discrete subcarriers of the eighth PRU are [-492:8:-396, -360:8:-264, -247:8:-151, - 115:8:-19, 15:8:111, 147:8:251, 260:8:364, 400:8:496].

Herein, a:b:c indicates subcarrier indices from an index a to an index c by using b as a step.

With reference to the twenty-first implementation of the first aspect, indices of pilot subcarriers of the first PRU are {-220, -112, 44, 152}, indices of pilot subcarriers of the second PRU are {-426, -266, 334, 494}, indices of pilot subcarriers of the third PRU are {-178, -18, 86, 246}, indices of pilot subcarriers of the fourth PRU are {-400, -292, 360, 468}, indices of pilot subcarriers of the fifth PRU are {-152, -44, 112, 220}, indices of pilot subcarriers of the sixth PRU are {-494, -334, 266, 426}, indices of pilot subcarriers of the seventh PRU are {-246, -86, 18, 178}, and indices of pilot subcarriers of the eighth PRU are {-468, -360, 292, 400}.

In a twenty-second implementation of the first aspect, the first bandwidth is 160 MHz, and a tone plan corresponding to the 160 MHz includes a first PRU, a second PRU, a third PRU, a fourth PRU, a fifth PRU, a sixth PRU, a seventh PRU, and an eighth PRU.

Indices of discrete subcarriers of the first PRU are [-1012:8:-884, -877:8:-773, -761:8:-665, - 654:8:-526, -497:8:-369, -360:8:-264, -253:8:-149, -138:8:-18, 13:8:141, 146:8:250, 265:8:361, 368:8:496, 529:8:657, 662:8:758, 772:8:876, 885:8:1005].

Indices of discrete subcarriers of the second PRU are [-1011:8:-883, -878:8:-774, -765:8:-661, -650:8:-530, -496:8:-368, -361:8:-265, -252:8:-148, -139:8:-19, 12:8:140, 147:8:251, 266:8:362, 367:8:495, 527:8:655, 664:8:760, 775:8:871, 882:8:1010].

Indices of discrete subcarriers of the third PRU are [-1010:8:-882, -871:8:-775, -759:8:-663, - 656:8:-528, -499:8:-371, -366:8:-262, -246:8:-150, -145:8:-17, 18:8:138, 149:8:253, 260:8:364, 373:8:493, 524:8:652, 659:8:763, 776:8:872, 881:8:1009].

Indices of discrete subcarriers of the fourth PRU are [-1009:8:-881, -872:8:-776, -758:8:-662, - 657:8:-529, -493:8:-373, -364:8:-260, -247:8:-151, -144:8:-16, 14:8:142, 153:8:249, 261:8:365, 372:8:500, 530:8:650, 661:8:765, 774:8:878, 883:8:1011].

Indices of discrete subcarriers of the fifth PRU are [-1008:8:-880, -873:8:-777, -763:8:-659, - 652:8:-524, -498:8:-370, -359:8:-263, -250:8:-146, -141:8:-13, 17:8:145, 150:8:246, 264:8:360, 369:8:497, 531:8:651, 660:8:764, 771:8:875, 886:8:1006].

Indices of discrete subcarriers of the sixth PRU are [-1007:8:-879, -874:8:-778, -764:8:-660, - 651:8:-531, -494:8:-374, -363:8:-259, -249:8:-153, -142:8:-14, 15:8:143, 152:8:248, 262:8:366, 371:8:499, 528:8:656, 663:8:759, 773:8:877, 884:8:1012].

Indices of discrete subcarriers of the seventh PRU are [-1006:8:-886, -875:8:-771, -760:8:-664, -655:8:-527, -495:8:-367, -362:8:-266, -251:8:-147, -140:8:-12, 19:8:139, 148:8:252, 263:8:359, 370:8:498, 525:8:653, 658:8:762, 777:8:873, 880:8:1008].

Indices of discrete subcarriers of the eighth PRU are [-1005:8:-885, -876:8:-772, -762:8:-658, - 653:8:-525, -500:8:-372, -365:8:-261, -248:8:-152, -143:8:-15, 16:8:144, 151:8:247, 259:8:363, 374:8:494, 526:8:654, 665:8:761, 778:8:874, 879:8:1007].

Herein, a:b:c indicates subcarrier indices from an index a to an index c by using b as a step.

With reference to the twenty-second implementation of the first aspect, indices of pilot subcarriers of the first PRU are {-980, -598, -360, -18, 178, 400, 758, 804}, indices of pilot subcarriers of the second PRU are {-846, -530, -400, -220, 44, 266, 664, 938}, indices of pilot subcarriers of the third PRU are {-938, -624, -334, -246, 18, 292, 556, 872}, indices of pilot subcarriers of the fourth PRU are {-872, -758, -292, -112, 86, 468, 530, 846}, indices of pilot subcarriers of the fifth PRU are {-912, -556, -426, -178, 246, 360, 732, 1006}, indices of pilot subcarriers of the sixth PRU are {-778, -732, -494, -86, 152, 334, 624, 980}, indices of pilot subcarriers of the seventh PRU are {-1006, -664, -266, -44, 220, 426, 690, 912}, and indices of pilot subcarriers of the eighth PRU are {-804, -690, -468, -152, 112, 494, 598, 778}.

In a twenty-third implementation of the first aspect, the first bandwidth is 160 MHz, and a tone plan corresponding to the 160 MHz includes a first PRU, a second PRU, a third PRU, a fourth PRU, a fifth PRU, a sixth PRU, a seventh PRU, and an eighth PRU.

Indices of discrete subcarriers of the first PRU are [-1012:8:-884, -877:8:-773, -761:8:-665, - 654:8:-526, -497:8:-369, -360:8:-264, -253:8:-149, -138:8:-18, 19:8:139, 148:8:252, 266:8:362, 367:8:495, 528:8:656, 663:8:759, 774:8:878, 883:8:1011].

Indices of discrete subcarriers of the second PRU are [-1011:8:-883, -878:8:-774, -758:8:-662, -657:8:-529, -494:8:-374, -363:8:-259, -249:8:-153, -142:8:-14, 12:8:140, 147:8:251, 265:8:361, 368:8:496, 531:8:651, 660:8:764, 776:8:872, 881:8:1009].

Indices of discrete subcarriers of the third PRU are [-1010:8:-882, -871:8:-775, -760:8:-664, - 655:8:-527, -499:8:-371, -366:8:-262, -252:8:-148, -139:8:-19, 18:8:138, 149:8:365, 372:8:500, 529:8:657, 662:8:758, 777:8:873, 880:8:1008].

Indices of discrete subcarriers of the fourth PRU are [-1009:8:-881, -872:8:-776, -765:8:-661, - 650:8:-530, -495:8:-367, -362:8:-266, -247:8:-151, -144:8:-16, 14:8:142, 153:8:249, 260:8:364, 373:8:493, 525:8:653, 658:8:762, 773:8:877, 884:8:1012].

Indices of discrete subcarriers of the fifth PRU are [-1008:8:-880, -873:8:-777, -762:8:-658, - 653:8:-525, -498:8:-370, -359:8:-263, -251:8:-147, -140:8:-12, 17:8:145, 150:8:246, 264:8:360, 369:8:497, 530:8:650, 661:8:765, 772:8:876, 885:8:1005].

Indices of discrete subcarriers of the sixth PRU are [-1007:8:-879, -874:8:-778, -763:8:-659, - 652:8:-524, -493:8:-373, -364:8:-260, -250:8:-146, -141:8:-13, 16:8:144, 151:8:247, 263:8:359, 370:8:498, 527:8:655, 664:8:760, 771:8:875, 886:8:1006].

Indices of discrete subcarriers of the seventh PRU are [-1006:8:-886, -875:8:-771, -764:8:-660, -651:8:-531, -496:8:-368, -361:8:-265, -246:8:-150, -145:8:-17, 15:8:143, 152:8:248, 262:8:366, 371:8:499, 524:8:652, 659:8:763, 775:8:871, 882:8:1010].

Indices of discrete subcarriers of the eighth PRU are [-1005:8:-885, -876:8:-772, -759:8:-663, - 656:8:-528, -500:8:-372, -365:8:-261, -248:8:-152, -143:8:-15, 13:8:141, 146:8:250, 259:8:363, 374:8:494, 526:8:654, 665:8:761, 778:8:874, 879:8:1007].

Herein, a:b:c indicates subcarrier indices from an index a to an index c by using b as a step.

With reference to the twenty-third implementation of the first aspect, indices of pilot subcarriers of the first PRU are {-980, -598, -360, -18, 220, 266, 624, 846}, indices of pilot subcarriers of the second PRU are {-846, -758, -494, -86, 44, 400, 732, 872}, indices of pilot subcarriers of the third PRU are {-938, -664, -334, -220, 18, 468, 758, 912}, indices of pilot subcarriers of the fourth PRU are {-872, -530, -266, -112, 86, 292, 690, 980}, indices of pilot subcarriers of the fifth PRU are {-912, -690, -426, -44, 246, 360, 530, 804}, indices of pilot subcarriers of the sixth PRU are {-778, -556, -292, -178, 112, 426, 664, 1006}, indices of pilot subcarriers of the seventh PRU are {-1006, -732, -400, -246, 152, 334, 556, 938}, and indices of pilot subcarriers of the eighth PRU are {-804, -624, -468, -152, 178, 494, 598, 778}.

In a twenty-fourth implementation of the first aspect, the first bandwidth is 160 MHz, and a tone plan corresponding to the 160 MHz includes a first PRU, a second PRU, a third PRU, a fourth PRU, a fifth PRU, a sixth PRU, a seventh PRU, and an eighth PRU.

Indices of discrete subcarriers of the first PRU are [-1012:8:-884, -877:8:-773, -759:8:-663, - 656:8:-528, -495:8:-367, -362:8:-266, -248:8:-152, -143:8:-15, 14:8:142, 153:8:249, 259:8:363, 374:8:494, 531:8:651, 660:8:764, 774:8:878, 883:8:1011].

Indices of discrete subcarriers of the second PRU are [-1011:8:-883, -878:8:-774, -764:8:-660, -651:8:-531, -497:8:-369, -360:8:-264, -253:8:-149, -138:8:-18, 16:8:144, 151:8:247, 266:8:362, 367:8:495, 524:8:652, 659:8:763, 775:8:871, 882:8:1010].

Indices of discrete subcarriers of the third PRU are [-1010:8:-882, -871:8:-775, -760:8:-664, - 655:8:-527, -500:8:-372, -365:8:-261, -247:8:-151, -144:8:-16, 13:8:141, 146:8:250, 260:8:364, 373:8:493, 530:8:650, 661:8:765, 778:8:874, 879:8:1007].

Indices of discrete subcarriers of the fourth PRU are [-1009:8:-881, -872:8:-776, -758:8:-662, - 657:8:-529, -494:8:-374, -363:8:-147, -140:8:-12, 19:8:139, 148:8:252, 262:8:366, 371:8:499, 526:8:654, 665:8:761, 777:8:873, 880:8:1008].

Indices of discrete subcarriers of the fifth PRU are [-1008:8:-880, -873:8:-777, -762:8:-658, - 653:8:-525, -493:8:-373, -364:8:-260, -249:8:-153, -142:8:-14, 15:8:143, 152:8:248, 261:8:365, 372:8:500, 529:8:657, 662:8:758, 771:8:875, 886:8:1006].

Indices of discrete subcarriers of the sixth PRU are [-1007:8:-879, -874:8:-778, -761:8:-665, - 654:8:-526, -499:8:-371, -366:8:-262, -252:8:-148, -139:8:-19, 18:8:138, 149:8:253, 265:8:361, 368:8:496, 527:8:655, 664:8:760, 773:8:877, 884:8:1012].

Indices of discrete subcarriers of the seventh PRU are [-1006:8:-886, -875:8:-659, -652:8:-524, -498:8:-370, -359:8:-263, -250:8:-146, -141:8:-13, 17:8:145, 150:8:246, 264:8:360, 369:8:497, 528:8:656, 663:8:759, 772:8:876, 885:8:1005].

Indices of discrete subcarriers of the eighth PRU are [-1005:8:-885, -876:8:-772, -765:8:-661, - 650:8:-530, -496:8:-368, -361:8:-265, -246:8:-150, -145:8:-17, 12:8:140, 147:8:251, 263:8:359, 370:8:498, 525:8:653, 658:8:762, 776:8:872, 881:8:1009].

Herein, a:b:c indicates subcarrier indices from an index a to an index c by using b as a step.

With reference to the twenty-fourth implementation of the first aspect, indices of pilot subcarriers of the first PRU are {-980, -624, -266, -152, 86, 494, 732, 846}, indices of pilot subcarriers of the second PRU are {-846, -732, -360, -18, 112, 266, 556, 938}, indices of pilot subcarriers of the third PRU are {-938, -664, -468, -112, 178, 292, 530, 778}, indices of pilot subcarriers of the fourth PRU are {-872, -758, -494, -44, 220, 334, 598, 912}, indices of pilot subcarriers of the fifth PRU are {-912, -690, -292, -86, 152, 468, 758, 1006}, indices of pilot subcarriers of the sixth PRU are {-778, -598, -334, -220, 18, 400, 664, 980}, indices of pilot subcarriers of the seventh PRU are {-1006, -556, -426, -178, 246, 360, 624, 804}, and indices of pilot subcarriers of the eighth PRU are {-804, -530, -400, -246, 44, 426, 690, 872}.

In a twenty-fifth implementation of the first aspect, the first bandwidth is 160 MHz, and a tone plan corresponding to the 160 MHz includes a first PRU, a second PRU, a third PRU, a fourth PRU, a fifth PRU, a sixth PRU, a seventh PRU, and an eighth PRU.

Indices of discrete subcarriers of the first PRU are [-1012:8:-884, -877:8:-773, -762:8:-658, - 653:8:-525, -498:8:-370, -359:8:-263, -252:8:-148, -139:8:-19, 16:8:144, 151:8:247, 266:8:362, 367:8:495, 530:8:650, 661:8:765, 776:8:872, 881:8:1009].

Indices of discrete subcarriers of the second PRU are [-1011:8:-883, -878:8:-774, -764:8:-660, -651:8:-531, -495:8:-367, -362:8:-266, -247:8:-151, -144:8:-16, 14:8:142, 153:8:249, 264:8:360, 369:8:497, 524:8:652, 659:8:875, 886:8:1006].

Indices of discrete subcarriers of the third PRU are [-1010:8:-882, -871:8:-775, -765:8:-661, - 650:8:-530, -500:8:-372, -365:8:-261, -246:8:-150, -145:8:-17, 13:8:141, 146:8:250, 265:8:361, 368:8:496, 527:8:655, 664:8:760, 772:8:876, 885:8:1005].

Indices of discrete subcarriers of the fourth PRU are [-1009:8:-881, -872:8:-776, -763:8:-659, - 652:8:-524, -493:8:-373, -364:8:-260, -249:8:-153, -142:8:-14, 18:8:138, 149:8:253, 262:8:366, 371:8:499, 528:8:656, 663:8:759, 778:8:874, 879:8:1007].

Indices of discrete subcarriers of the fifth PRU are [-1008:8:-880, -873:8:-777, -760:8:-664, - 655:8:-527, -494:8:-374, -363:8:-259, -250:8:-146, -141:8:-13, 17:8:145, 150:8:246, 260:8:364, 373:8:493, 526:8:654, 665:8:761, 773:8:877, 884:8:1012].

Indices of discrete subcarriers of the sixth PRU are [-1007:8:-879, -874:8:-778, -761:8:-665, - 654:8:-526, -496:8:-368, -361:8:-265, -248:8:-152, -143:8:-15, 12:8:140, 147:8:363, 374:8:494, 531:8:651, 660:8:764, 774:8:878, 883:8:1011].

Indices of discrete subcarriers of the seventh PRU are [-1006:8:-886, -875:8:-771, -758:8:-662, -657:8:-529, -497:8:-369, -360:8:-264, -251:8:-147, -140:8:-12, 19:8:139, 148:8:252, 263:8:359, 370:8:498, 525:8:653, 658:8:762, 777:8:873, 880:8:1008].

Indices of discrete subcarriers of the eighth PRU are [-1005:8:-885, -876:8:-772, -759:8:-663, - 656:8:-528, -499:8:-371, -366:8:-262, -253:8:-149, -138:8:-18, 15:8:143, 152:8:248, 261:8:365, 372:8:500, 529:8:657, 662:8:758, 775:8:871, 882:8:1010].

Herein, a:b:c indicates subcarrier indices from an index a to an index c by using b as a step.

With reference to the twenty-fifth implementation of the first aspect, indices of pilot subcarriers of the first PRU are {-980, -690, -426, -220, 112, 266, 530, 872}, indices of pilot subcarriers of the second PRU are {-846, -732, -266, -112, 86, 360, 556, 1006}, indices of pilot subcarriers of the third PRU are {-938, -530, -468, -246, 178, 400, 664, 804}, indices of pilot subcarriers of the fourth PRU are {-872, -556, -292, -86, 18, 334, 624, 778}, indices of pilot subcarriers of the fifth PRU are {-912, -664, -494, -178, 246, 292, 598, 980}, indices of pilot subcarriers of the sixth PRU are {-778, -598, -400, -152, 44, 494, 732, 846}, indices of pilot subcarriers of the seventh PRU are {-1006, -758, -360, -44, 220, 426, 690, 912}, and indices of pilot subcarriers of the eighth PRU are {-804, -624, -334, -18, 152, 468, 758, 938}.

In a twenty-sixth implementation of the first aspect, the first bandwidth is 160 MHz, and a tone plan corresponding to the 160 MHz includes a first PRU, a second PRU, a third PRU, a fourth PRU, a fifth PRU, a sixth PRU, a seventh PRU, and an eighth PRU.

Indices of discrete subcarriers of the first PRU are [-1012:8:-884, -877:8:-773, -760:8:-664, - 655:8:-527, -499:8:-371, -366:8:-262, -252:8:-148, -139:8:-19, 14:8:142, 153:8:249, 265:8:361, 368:8:496, 530:8:650, 661:8:765, 778:8:874, 879:8:1007].

Indices of discrete subcarriers of the second PRU are [-1011:8:-883, -878:8:-774, -765:8:-661, -650:8:-530, -500:8:-372, -365:8:-261, -249:8:-153, -142:8:-14, 19:8:139, 148:8:252, 266:8:362, 367:8:495, 528:8:656, 663:8:759, 776:8:872, 881:8:1009].

Indices of discrete subcarriers of the third PRU are [-1010:8:-882, -871:8:-775, -764:8:-660, - 651:8:-531, -497:8:-369, -360:8:-264, -253:8:-149, -138:8:-18, 16:8:144, 151:8:247, 261:8:365, 372:8:500, 529:8:657, 662:8:758, 774:8:878, 883:8:1011].

Indices of discrete subcarriers of the fourth PRU are [-1009:8:-881, -872:8:-776, -761:8:-665, - 654:8:-526, -495:8:-367, -362:8:-266, -251:8:-147, -140:8:-12, 18:8:138, 149:8:253, 262:8:366, 371:8:499, 531:8:651, 660:8:764, 777:8:873, 880:8:1008].

Indices of discrete subcarriers of the fifth PRU are [-1008:8:-880, -873:8:-777, -763:8:-659, - 652:8:-524, -493:8:-373, -364:8:-260, -250:8:-146, -141:8:-13, 17:8:145, 150:8:246, 263:8:359, 370:8:498, 527:8:655, 664:8:760, 771:8:875, 886:8:1006].

Indices of discrete subcarriers of the sixth PRU are [-1007:8:-879, -874:8:-778, -762:8:-658, - 653:8:-525, -494:8:-374, -363:8:-259, -247:8:-151, -144:8:-16, 15:8:143, 152:8:248, 260:8:364, 373:8:493, 526:8:654, 665:8:761, 773:8:877, 884:8:1012].

Indices of discrete subcarriers of the seventh PRU are [-1006:8:-886, -875:8:-771, -759:8:-663, -656:8:-528, -498:8:-370, -359:8:-263, -246:8:-150, -145:8:-17, 12:8:140, 147:8:251, 264:8:360, 369:8:497, 525:8:653, 658:8:762, 772:8:876, 885:8:1005].

Indices of discrete subcarriers of the eighth PRU are [-1005:8:-885, -876:8:-772, -758:8:-662, - 657:8:-529, -496:8:-368, -361:8:-265, -248:8:-152, -143:8:-15, 13:8:141, 146:8:250, 259:8:363, 374:8:494, 524:8:652, 659:8:763, 775:8:871, 882:8:1010].

Herein, a:b:c indicates subcarrier indices from an index a to an index c by using b as a step.

With reference to the twenty-sixth implementation of the first aspect, indices of pilot subcarriers of the first PRU are {-980, -664, -334, -220, 86, 400, 530, 778}, indices of pilot subcarriers of the second PRU are {-846, -530, -468, -86, 220, 266, 624, 872}, indices of pilot subcarriers of the third PRU are {-938, -732, -360, -18, 112, 468, 758, 846}, indices of pilot subcarriers of the fourth PRU are {-872, -598, -266, -44, 18, 334, 732, 912}, indices of pilot subcarriers of the fifth PRU are {-912, -556, -292, -178, 246, 426, 664, 1006}, indices of pilot subcarriers of the sixth PRU are {-778, -690, -494, -112, 152, 292, 598, 980}, indices of pilot subcarriers of the seventh PRU are {-1006, -624, -426, -246, 44, 360, 690, 804}, and indices of pilot subcarriers of the eighth PRU are {-804, -758, -400, -152, 178, 494, 556, 938}.

In a twenty-seventh implementation of the first aspect, the first bandwidth is 160 MHz, a tone plan corresponding to the 160 MHz includes a first PRU, a second PRU, a third PRU, and a fourth PRU, and each PRU includes 484 discrete subcarriers.

Indices of discrete subcarriers of the first PRU are [-1012:8:-884, -877:8:-773, -760:8:-664, - 655:8:-527, -499:8:-371, -366:8:-262, -252:8:-148, -139:8:-19, 14:8:142, 153:8:249, 265:8:361, 368:8:496, 530:8:650, 661:8:765, 778:8:874, 879:8:1007]U[-1007:8:-879, -874:8:-778, -762:8:-658, -653:8:-525, -494:8:-374, -363:8:-259, -247:8:-151, -144:8:-16, 15:8:143, 152:8:248, 260:8:364, 373:8:493, 526:8:654, 665:8:761, 773:8:877, 884:8:1012].

Indices of discrete subcarriers of the second PRU are [-1011:8:-883, -878:8:-774, -765:8:-661, -650:8:-530, -500:8:-372, -365:8:-261, -249:8:-153, -142:8:-14, 19:8:139, 148:8:252, 266:8:362, 367:8:495, 528:8:656, 663:8:759, 776:8:872, 881:8:1009]U[-1009:8:-881, -872:8:-776, -761:8:-665, -654:8:-526, -495:8:-367, -362:8:-266, -251:8:-147, -140:8:-12, 18:8:138, 149:8:253, 262:8:366, 371:8:499, 531:8:651, 660:8:764, 777:8:873, 880:8:1008].

Indices of discrete subcarriers of the third PRU are [-1010:8:-882, -871:8:-775, -764:8:-660, - 651:8:-531, -497:8:-369, -360:8:-264, -253:8:-149, -138:8:-18, 16:8:144, 151:8:247, 261:8:365, 372:8:500, 529:8:657, 662:8:758, 774:8:878, 883:8:1011]U[-1006:8:-886, -875:8:-771, -759:8:-663, -656:8:-528, -498:8:-370, -359:8:-263, -246:8:-150, -145:8:-17, 12:8:140, 147:8:251, 264:8:360, 369:8:497, 525:8:653, 658:8:762, 772:8:876, 885:8:1005].

Indices of discrete subcarriers of the fourth PRU are [-1008:8:-880, -873:8:-777, -763:8:-659, - 652:8:-524, -493:8:-373, -364:8:-260, -250:8:-146, -141:8:-13, 17:8:145, 150:8:246, 263:8:359, 370:8:498, 527:8:655, 664:8:760, 771:8:875, 886:8:1006]U[-1005:8:-885, -876:8:-772, -758:8:-662, -657:8:-529, -496:8:-368, -361:8:-265, -248:8:-152, -143:8:-15, 13:8:141, 146:8:250, 259:8:363, 374:8:494, 524:8:652, 659:8:763, 775:8:871, 882:8:1010].

Herein, a:b:c indicates subcarrier indices from an index a to an index c by using b as a step.

With reference to the twenty-seventh implementation of the first aspect, indices of pilot subcarriers of the first PRU are {-980, -778, -698, -664, -494, -334, -220, -112, 86, 152, 292, 400, 530, 598, 778, 980}, indices of pilot subcarriers of the second PRU are {-872, -846, -598, -530, -468, -266, -86, -44, 18, 220, 266, 334, 624, 732, 872, 912}, indices of pilot subcarriers of the third PRU are {-1006, -938, -732, -624, -426, -360, -246, -18, 44, 112, 360, 468, 690, 758, 804, 846}, and indices of pilot subcarriers of the fourth PRU are {-912, -804, -758, -556, -400, -292, -178, -152, 178, 246, 426, 494, 556, 664, 938, 1006}.

In a twenty-eighth implementation of the first aspect, the first bandwidth is 160 MHz, a tone plan corresponding to the 160 MHz includes a first PRU, a second PRU, a third PRU, and a fourth PRU, and each PRU includes 484 discrete subcarriers.

Indices of discrete subcarriers of the first PRU are [-1012:8:-884, -877:8:-773, -762:8:-658, - 653:8:-525, -498:8:-370, -359:8:-263, -252:8:-148, -139:8:-19, 16:8:144, 151:8:247, 266:8:362, 367:8:495, 530:8:650, 661:8:765, 776:8:872, 881:8:1009]U[-1007:8:-879, -874:8:-778, -761:8:-665, -654:8:-526, -496:8:-368, -361:8:-265, -248:8:-152, -143:8:-15, 12:8:140, 147:8:363, 374:8:494, 531:8:651, 660:8:764, 774:8:878, 883:8:1011].

Indices of discrete subcarriers of the second PRU are [-1011:8:-883, -878:8:-774, -764:8:-660, -651:8:-531, -495:8:-367, -362:8:-266, -247:8:-151, -144:8:-16, 14:8:142, 153:8:249, 264:8:360, 369:8:497, 524:8:652, 659:8:875, 886:8:1006]U[-1008:8:-880, -873:8:-777, -760:8:-664, -655:8:-527, -494:8:-374, -363:8:-259, -250:8:-146, -141:8:-13, 17:8:145, 150:8:246, 260:8:364, 373:8:493, 526:8:654, 665:8:761, 773:8:877, 884:8:1012].

Indices of discrete subcarriers of the third PRU are [-1010:8:-882, -871:8:-775, -765:8:-661, - 650:8:-530, -500:8:-372, -365:8:-261, -246:8:-150, -145:8:-17, 13:8:141, 146:8:250, 265:8:361, 368:8:496, 527:8:655, 664:8:760, 772:8:876, 885:8:1005]U[-1009:8:-881, -872:8:-776, -763:8:-659, -652:8:-524, -493:8:-373, -364:8:-260, -249:8:-153, -142:8:-14, 18:8:138, 149:8:253, 262:8:366, 371:8:499, 528:8:656, 663:8:759, 778:8:874, 879:8:1007].

Indices of discrete subcarriers of the fourth PRU are [-1006:8:-886, -875:8:-771, -758:8:-662, - 657:8:-529, -497:8:-369, -360:8:-264, -251:8:-147, -140:8:-12, 19:8:139, 148:8:252, 263:8:359, 370:8:498, 525:8:653, 658:8:762, 777:8:873, 880:8:1008]U[-1005:8:-885, -876:8:-772, -759:8:-663, -656:8:-528, -499:8:-371, -366:8:-262, -253:8:-149, -138:8:-18, 15:8:143, 152:8:248, 261:8:365, 372:8:500, 529:8:657, 662:8:758, 775:8:871, 882:8:1010].

Herein, a:b:c indicates subcarrier indices from an index a to an index c by using b as a step. With reference to the twenty-eighth implementation of the first aspect, indices of pilot subcarriers of the first PRU are {-980, -778, -690, -598, -426, -400, -220, -152, 44, 112, 266, 494, 530, 732, 846, 872}, indices of pilot subcarriers of the second PRU are {-912, -846, -732, -664, -494, -266, -178, -112, 86, 246, 292, 360, 556, 598, 980, 1006}, indices of pilot subcarriers of the third PRU are {-938, -872, -556, -530, -468, -292, -246, -86, 18, 178, 334, 400, 624, 664, 778, 804}, and indices of pilot subcarriers of the fourth PRU are {-1006, -804, -758, -624, -360, -334, -44, -18, 152, 220, 426, 468, 690, 758, 912, 938}.

In a twenty-ninth implementation of the first aspect, the first bandwidth is 160 MHz, a tone plan corresponding to the 160 MHz includes a first PRU, a second PRU, a third PRU, and a fourth PRU, and each PRU includes 484 discrete subcarriers.

Indices of discrete subcarriers of the first PRU are [-1012:8:-884, -877:8:-773, -759:8:-663, - 656:8:-528, -495:8:-367, -362:8:-266, -248:8:-152, -143:8:-15, 14:8:142, 153:8:249, 259:8:363, 374:8:494, 531:8:651, 660:8:764, 774:8:878, 883:8:1011]U[-1009:8:-881, -872:8:-776, -758:8:-662, -657:8:-529, -494:8:-374, -363:8:-147, -140:8:-12, 19:8:139, 148:8:252, 262:8:366, 371:8:499, 526:8:654, 665:8:761, 777:8:873, 880:8:1008].

Indices of discrete subcarriers of the second PRU are [-1011:8:-883, -878:8:-774, -764:8:-660, -651:8:-531, -497:8:-369, -360:8:-264, -253:8:-149, -138:8:-18, 16:8:144, 151:8:247, 266:8:362, 367:8:495, 524:8:652, 659:8:763, 775:8:871, 882:8:1010]U[-1006:8:-886, -875:8:-659, -652:8:-524, -498:8:-370, -359:8:-263, -250:8:-146, -141:8:-13, 17:8:145, 150:8:246, 264:8:360, 369:8:497, 528:8:656, 663:8:759, 772:8:876, 885:8:1005].

Indices of discrete subcarriers of the third PRU are [-1010:8:-882, -871:8:-775, -760:8:-664, - 655:8:-527, -500:8:-372, -365:8:-261, -247:8:-151, -144:8:-16, 13:8:141, 146:8:250, 260:8:364, 373:8:493, 530:8:650, 661:8:765, 778:8:874, 879:8:1007]U[-1005:8:-885, -876:8:-772, -765:8:-661, -650:8:-530, -496:8:-368, -361:8:-265, -246:8:-150, -145:8:-17, 12:8:140, 147:8:251, 263:8:359, 370:8:498, 525:8:653, 658:8:762, 776:8:872, 881:8:1009].

Indices of discrete subcarriers of the fourth PRU are [-1008:8:-880, -873:8:-777, -762:8:-658, - 653:8:-525, -493:8:-373, -364:8:-260, -249:8:-153, -142:8:-14, 15:8:143, 152:8:248, 261:8:365, 372:8:500, 529:8:657, 662:8:758, 771:8:875, 886:8:1006]U[-1007:8:-879, -874:8:-778, -761:8:-665, -654:8:-526, -499:8:-371, -366:8:-262, -252:8:-148, -139:8:-19, 18:8:138, 149:8:253, 265:8:361, 368:8:496, 527:8:655, 664:8:760, 773:8:877, 884:8:1012].

Herein, a:b:c indicates subcarrier indices from an index a to an index c by using b as a step.

With reference to the twenty-ninth implementation of the first aspect, indices of pilot subcarriers of the first PRU are {-980, -872, -758, -624, -494, -266, -152, -44, 86, 220, 334, 494, 598, 732, 846, 912}, indices of pilot subcarriers of the second PRU are {-1006, -846, -732, -556, -426, - 360, -178, -18, 112, 246, 266, 360, 556, 624, 804, 938}, indices of pilot subcarriers of the third PRU are {-938, -804, -664, -530, -468, -400, -246, -112, 44, 178, 292, 426, 530, 690, 778, 872}, and indices of pilot subcarriers of the fourth PRU are {-912, -778, -690, -598, -334, -292, -220, -86, 18, 152, 400, 468, 664, 758, 980, 1006}.

In a thirtieth implementation of the first aspect, the PPDU is transmitted or received on a total bandwidth of 320 MHz. The total bandwidth includes a first part of bandwidth, a second part of bandwidth, a third part of bandwidth, and a fourth part of bandwidth each of which is 80 MHz. Each of the first part of bandwidth, the second part of bandwidth, the third part of bandwidth, and the fourth part of bandwidth includes PRUs based on the tone plan corresponding to the first bandwidth.

In a thirty-first implementation of the first aspect, the PPDU is transmitted or received on a total bandwidth of 320 MHz. The total bandwidth includes a first part of bandwidth and a second part of bandwidth each of which is 160 MHz. Each of the first part of bandwidth and the second part of bandwidth includes PRUs based on the tone plan corresponding to the first bandwidth. According to the communication solution of this disclosure, subcarriers of the virtual resource unit VRU are discretely distributed on a larger bandwidth, to form the PRU, so that a transmit-end device can be allowed to transmit data at a high transmit power. In addition, because the discretized subcarriers are evenly distributed on the bandwidth segment by segment, it can be ensured that a large PAPR increase is not caused in data transmission due to the discrete subcarriers of the VRU. In the foregoing subcarrier division solution, an LTF (long training field) field corresponding to each user can have a low PAPR. In the technical solutions of this disclosure, bandwidth resources can be fully utilized in this manner, thereby improving system efficiency.

According to a second aspect of this disclosure, a communication device is provided. The communication device includes at least one processor and at least one memory including computer program code. The at least one memory and the computer program code are used together with the at least one processor to enable the communication device to send or receive a physical layer protocol data unit PPDU based on a tone plan corresponding to a first bandwidth. The tone plan includes a physical resource unit PRU, and the PRU includes discrete subcarriers.

In a first implementation of the second aspect, the PPDU includes indication information, and the indication information indicates that the PPDU is transmitted or received by using a virtual resource unit VRU including consecutive subcarriers, or the PPDU is transmitted or received by using the PRU. Therefore, it may be determined, based on the indication information, whether the PPDU uses the resource unit including consecutive subcarriers or the resource unit including discrete subcarriers.

In a second implementation of the second aspect, there is a mapping relationship between the PRU and the VRU.

According to a third aspect of this disclosure, a communication device is provided. The communication device includes a unit configured to send or receive a physical layer protocol data unit PPDU based on a tone plan corresponding to a first bandwidth. The tone plan includes a physical resource unit PRU, and the PRU includes discrete subcarriers.

In a first implementation of the third aspect, the PPDU includes indication information, and the indication information indicates whether the PPDU uses the PRU or a virtual resource unit VRU including consecutive subcarriers. Therefore, it may be determined, based on the indication information, whether the PPDU uses the resource unit including consecutive subcarriers or the resource unit including discrete subcarriers.

In a second implementation of the third aspect, there is a mapping relationship between the PRU and the VRU.

According to a fourth aspect of this disclosure, a communication device is provided. The communication device includes a transceiver unit, configured to send or receive a physical layer protocol data unit PPDU based on a tone plan corresponding to a first bandwidth. The tone plan includes a physical resource unit PRU, and the PRU includes discrete subcarriers.

According to a fifth aspect of this disclosure, a communication device is provided, including an input/output port and a processing circuit. The input/output port is configured to send or receive a physical layer protocol data unit PPDU based on a tone plan corresponding to a first bandwidth. The tone plan includes a physical resource unit PRU, and the PRU includes discrete subcarriers. According to a sixth aspect of this disclosure, a computer-readable storage medium is provided. The computer-readable storage medium stores a computer program. When the program is executed by a processor, a physical layer protocol data unit PPDU is transmitted or received based on a tone plan corresponding to a first bandwidth. The tone plan includes a physical resource unit PRU, and the PRU includes discrete subcarriers.

According to a seventh aspect of this disclosure, a computer program product is provided. The computer program product includes computer-executable instructions. When the computer-executable instructions are executed by a processor, a method is implemented. The method includes: sending or receiving a physical layer protocol data unit PPDU based on a tone plan corresponding to a first bandwidth. The tone plan includes a physical resource unit PRU, and the PRU includes discrete subcarriers.

SUMMARY is provided to describe a selection of concepts in a simplified form, which is further described in DESCRIPTION OF EMBODIMENTS. SUMMARY is not intended to identify key or essential features of this disclosure or to limit the scope of this disclosure.

### BRIEF DESCRIPTION OF DRAWINGS

The foregoing and other features, advantages, and aspects of embodiments of this disclosure become more obvious with reference to the accompanying drawings and the following detailed descriptions. In the accompanying drawings, same or similar reference numerals represent same or similar elements.
FIG. 1A is a schematic diagram of a contiguous RU-based tone plan for a 20 MHz bandwidth;
FIG. 1B is a schematic diagram of a contiguous RU-based tone plan for a 40 MHz bandwidth;
FIG. 1C is a schematic diagram of a contiguous RU-based tone plan for 80 MHz;
FIG. 2 is a schematic diagram of a communication environment in which an embodiment of this disclosure can be implemented;
FIG. 3 is a schematic diagram of reassembling physical resource units PRUs according to an embodiment of this disclosure;
FIG. 4 is a flowchart of a process of reassembling physical resource units PRUs according to an embodiment of this disclosure;
FIG. 5 is a flowchart of a communication method according to an embodiment of this disclosure;
FIG. 6 is a schematic block diagram of a communication device according to an embodiment of this disclosure;
FIG. 7 is a schematic block diagram of a communication device according to an embodiment of this disclosure; and
FIG. 8 is a simplified block diagram of an example device suitable for implementing some embodiments of this disclosure.

In the various drawings, same or similar reference numerals represent same or similar elements.

### DESCRIPTION OF EMBODIMENTS

The following describes embodiments of this disclosure in detail with reference to the accompanying drawings. Although some embodiments of this disclosure are shown in the accompanying drawings, it should be understood that this disclosure may be implemented in various forms, and should not be construed as being limited to embodiments described herein. On the contrary, these embodiments are provided so that this disclosure is thoroughly and completely understood. It should be understood that the accompanying drawings and embodiments of this disclosure are merely used as examples, but are not intended to limit the protection scope of this disclosure.

The technical solutions in embodiments of this application may be applied to a wireless local area network (Wireless Local Area Network, WLAN for short) system, or may be applied to a communication system of another standard, for example, a long term evolution (Long Term Evolution, LTE for short) system, a 5G system, or another future communication system. For example, in the WLAN system, a station (Station, STA for short) and an access point (Access Point, AP for short) are basic component devices of the WLAN system. The AP is an access point used by a mobile user to access a wired network, and is mainly deployed within a home, a building, and a campus. A typical coverage radius ranges from tens of meters to hundreds of meters. Certainly, the AP may also be deployed outdoors. The AP is equivalent to a bridge that connects the wired network and a wireless network. A main function of the AP is to connect wireless network clients together, and then connect the wireless network to the Ethernet. Specifically, the AP may be a device with a Wi-Fi (English: Wireless Fidelity, Chinese: wireless fidelity) chip, for example, a terminal device or a network device with a Wi-Fi chip. Optionally, the AP may be a device that supports the 802.11ax standard. Optionally, the AP may be alternatively a device that supports a plurality of WLAN standards, such as 802.11ac, 802.11n, 802.11g, 802.11b, and 802.11a. Further, the AP may be alternatively a device that supports WLAN standards of 802.11be and another future 802.11 standard. A standard type supported by the AP is not limited in embodiments of this application.

The STA is generally a terminal device in the WLAN system. The STA may be mobile or fixed. The STA is a most basic component device of the wireless local area network. The STA may be a wireless communication chip, a wireless sensor, or a wireless communication terminal, such as a mobile phone supporting a Wi-Fi communication function, a tablet computer supporting a Wi-Fi communication function, a set-top box supporting a Wi-Fi communication function, a smart television supporting a Wi-Fi communication function, a smart wearable device supporting a Wi-Fi communication function, a vehicle-mounted communication device supporting a Wi-Fi communication function, or a computer supporting a Wi-Fi communication function. Similarly, the STA may be a device that supports the 802.11ax standard, or the STA may be a device that supports a plurality of WLAN standards such as 802.11ac, 802.11n, 802.11g, 802.11b, and 802.11a. Further, the STA may be alternatively a device that supports a WLAN standard of 802.11be and another future 802.11 standard. A standard type supported by the STA is not limited in embodiments of this application.

The term "include" and similar terms used in this specification should be understood as open inclusion, that is, "include but not limited to". Unless otherwise stated, the term "or" means "and/or". The term "based on" means "at least partially based on". The terms "example embodiments" and "some embodiments" represent "at least one example embodiment". The terms "first", "second", and the like may indicate different or same objects. Other explicit and implicit definitions may be further included in the following.

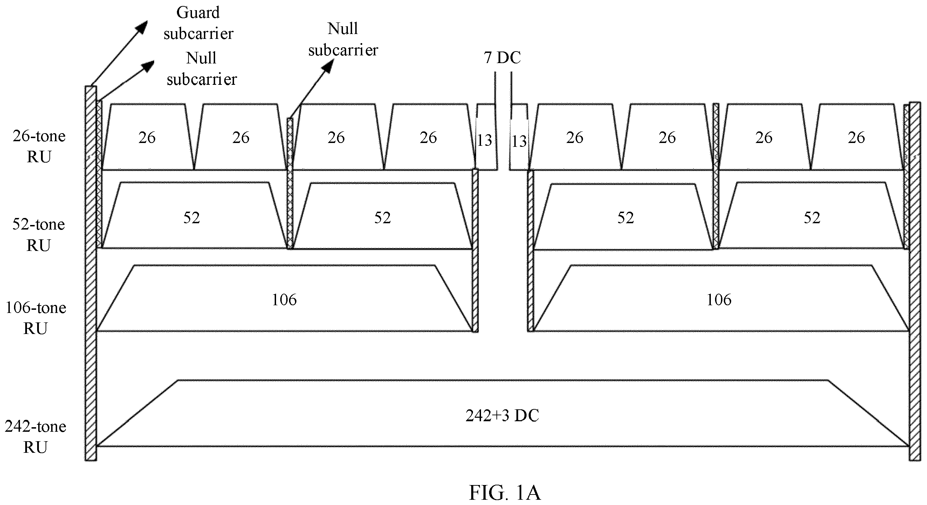

IEEE 802.11 is one of mainstream wireless access standards and has been widely used in commercial applications in the past decade. A communication device may transmit data on a specific bandwidth. Resources in the bandwidth may be arranged based on a preset tone plan (tone plan). For example, a contiguous resource unit (resource unit, RU)-based tone plan is defined in the 802.11be standard. FIG. 1A is a schematic diagram of a contiguous RU-based tone plan for a 20 MHz bandwidth. As shown in FIG. 1A, when the bandwidth is 20 MHz, the entire bandwidth may include one 242-tone RU, or may include various combinations of smaller RUs such as a 26-tone RU, a 52-tone RU, and a 106-tone RU.

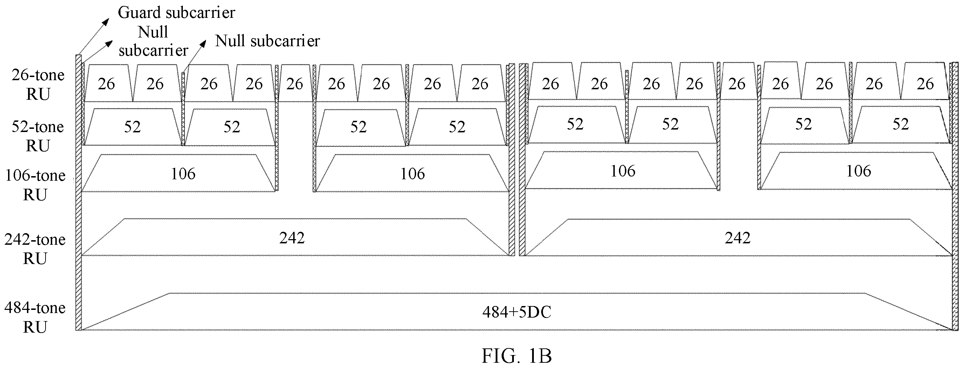

FIG. 1B is a schematic diagram of a contiguous RU-based tone plan for a 40 MHz bandwidth. As shown in FIG. 1B, when the bandwidth is 40 MHz, the entire bandwidth may include one 484-tone RU, or may include various combinations of smaller RUs such as a 26-tone RU, a 52-tone RU, a 106-tone RU, and a 242-tone RU. The tone plan of the 40 MHz bandwidth may be considered as replication of the tone plan of the 20 MHz bandwidth.

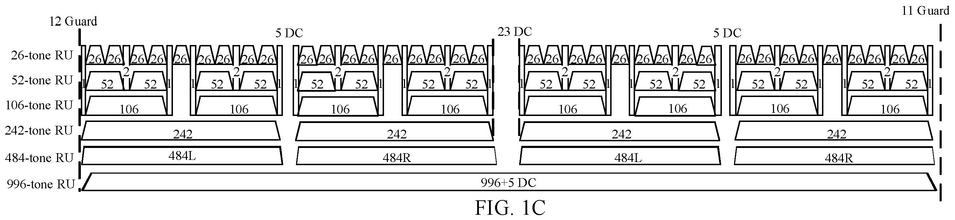

FIG. 1C is a schematic diagram of a contiguous RU-based tone plan for 80 MHz. As shown in FIG. 1C, when the bandwidth is 80 MHz, the entire bandwidth includes four RUs in units of 242-tone RUs. The entire bandwidth may include one 996-tone RU, or may include various combinations of smaller RUs such as a 26-tone RU, a 52-tone RU, a 106-tone RU, a 242-tone RU, and a 484-tone RU. Herein, 484L and 484R respectively represent a left half part and a right half part of a single 484-tone RU. Each part includes 242 subcarriers.

A similar tone plan may also be used for another bandwidth configuration. For example, when the bandwidth is 160 MHz or 80+80 MHz, a corresponding tone plan may be considered as replication of the tone plan of two 80 MHz bandwidths. To be specific, the entire bandwidth may include one 2x996-tone RU, or may include various combinations of smaller RUs such as a 26-tone RU, a 52-tone RU, a 106-tone RU, a 242-tone RU, a 484-tone RU, and a 996-tone RU. When the bandwidth is 240 MHz or 160+80 MHz, a corresponding tone plan may be considered as replication of tone distribution of three 80 MHz bandwidths. When the bandwidth is 320 MHz or 160+160 MHz, a corresponding tone plan may be considered as replication of the tone plan of four 80 MHz bandwidths.

The foregoing tone plans are in units of 242-tone RUs. A left part of the schematic diagram corresponds to a lowest frequency, and a right part corresponds to a highest frequency. From left to right, the 242-tone RUs are numbered as a first RU, a second RU, a third RU, a fourth RU, ..., and a sixteenth RU. It should be noted that, in a data field, there are a maximum of sixteen 242-tone RUs in a one-to-one correspondence with sixteen 20 MHz channels in ascending order of frequencies.

In addition to the foregoing RUs, the following RUs are further introduced into the 802.11be standard:
a 52+26-tone RU formed by one conventional 52-tone RU and one conventional 26-tone RU;
a 106+26-tone RU formed by one conventional 106-tone RU and one conventional 26-tone RU;
a 484+242-tone RU formed by one conventional 484-tone RU and one conventional 242-tone RU;
a 996+484-tone RU formed by one conventional 996-tone RU and one conventional 484-tone RU;
a 2*996+484-tone RU formed by two conventional 996-tone RUs and one conventional 484-tone RU;
a 3*996-tone RU formed by three conventional 996-tone RUs; and
a 3*996+484-tone RU formed by three conventional 996-tone RUs and one conventional 484-tone RU.

In the foregoing bandwidth configurations, a single RU includes consecutive subcarriers, and is also referred to as a contiguous RU or a nominal RU. In addition to an RU used for data transmission, usually, a guard (Guard) subcarrier, a null subcarrier, a direct current (Direct Current, DC) subcarrier, and the like are further included. It should be understood that the resource unit is a relative concept, and a size of the resource unit depends on a quantity of included subcarriers (tones). In terms of the bandwidth, the 26-tone RU roughly corresponds to 2 MHz, the 52-tone RU roughly corresponds to 4 MHz, the 106-tone RU roughly corresponds to 8 MHz, and the 242-tone RU roughly corresponds to 20 MHz. A size of another RU may be similarly obtained based on an addition relationship or a multiple relationship. Details are not described herein.

The conventional nominal RU includes data (Data) subcarriers and pilot (Pilot) subcarriers that are consecutively distributed in frequency domain. The data subcarrier is used to carry data information from an upper layer, and the pilot subcarrier transmits a fixed value, so that a receive-end device performs phase estimation, phase correction, and the like. A nominal RU distributed on the 20 MHz bandwidth includes 256 subcarriers, and index values are [-128, ..., 0, ..., 127]. Table 1 shows RU indices and subcarrier ranges of various bandwidth configurations of 20 MHz. Herein, RU# identifies an RU index, [a, b] represents a subcarrier range of a corresponding RU from an index a to an index b with a and b included, {x, y, ...} indicates a corresponding index representing a pilot subcarrier, and a quantity of elements in {} represents a quantity of pilot subcarriers.

**Table 1: RU indices and subcarrier ranges of various bandwidth configurations of the 20 MHz bandwidth**

| RU type | RU index, subcarrier range, and pilot subcarrier location | | | | |
|---|---|---|---|---|---|
| 26-tone RU 2 pilots | RU 1 | RU 2 | RU 3 | RU 4 | RU 5 |
| | [-121: -96] | [-95: -70] | [-68: -43] | [-42: -17] | [-16: -4, 4: 16] |
| | {-116,-102} | {90, 76} | {62, 48} | {36, 22} | {10, 10} |
| | RU 6 | RU 7 | RU 8 | RU 9 | |
| | [17: 42] | [43: 68] | [70: 95] | [96: 121] | |
| | {22, 36} | {48, 62} | {76,90} | {102, 116} | |
| 52-tone RU 4 pilots | RU 1 | RU 2 | RU 3 | RU 4 | |
| | [-121: -70] | [-68: -17] | [17: 68] | [70: 121] | |
| | {116, 102, 90, 76} | {62, 48, 36, 22} | {22, 36, 48, 62} | {76, 90, 102, 116} | |
| 106-tone RU 4 pilots | RU 1 | | RU 2 | | |
| | [-122: -17] | | [17: 122] | | |
| | {116,90,48,22} | | {22, 48, 90, 116} | | |
| 242-tone RU 8 pilots | RU 1 | | | | |
| | [-122: -2, 2: 122] | | | | |
| | 116, 90, 48, 22, 22, 48, 90, 116} | | | | |

Similarly, Table 2 below shows RU indices and subcarrier ranges of various bandwidth configurations of 40 MHz.

**Table 2: RU indices and subcarrier ranges of various bandwidth configurations of 40 MHz**

| RU type | RU index, subcarrier range, and pilot subcarrier location | | | | |
|---|---|---|---|---|---|
| 26-tone RU | CRU 1 | CRU 2 | CRU 3 | CRU 4 | CRU 5 |
| | [-243: -218] | [-217: -192] | [-189: -164] | [-163: -138] | [-136: -111] |
| | {238, 224} | {212, 198} | {184, 170} | {158, 144} | {130, 116} |
| | CRU 6 | CRU 7 | CRU 8 | CRU 9 | |
| | [-109: -84] {104, 90} | [-83: -58] {78, 64} | [-55: -30] {50, 36} | [-29: -4] {24, 10} | |
| | CRU 10 | CRU 11 | CRU 12 | CRU 13 | CRU 14 |
| | [4: 29] {10, 24} | [30: 55] {36, 50} | [58:83] {64, 78} | [84:109] {90, 104} | [111: 136] {116, 130} |
| | CRU 15 | CRU 16 | CRU 17 | CRU 18 | |
| | [138: 163] {144,158} | [164: 189] {170, 184} | [192: 217] {198,212} | [218: 243] {224, 238} | |
| 52-tone RU | CRU 1 | CRU 2 | CRU 3 | CRU 4 | |
| | [-243: -192] {238, 224, 212, 198} | [-189: -138] {184,170, 158, 144} | [-109: -58] {104, 90, 78, 64} | [-55: -4] {50, 36, 24, 10} | |
| | CRU 5 | CRU 6 | CRU 7 | CRU 8 | |
| | [4: 55] {10, 24, 36, 50} | [58: 109] {64, 78, 90, 104} | [138: 189] {144,158, 170, 184} | [192: 243] {198, 212, 224, 238} | |
| 106-tone RU | CRU 1 | CRU 2 | CRU 3 | CRU 4 | |
| | [-243: -138] {238, 212, 170, 144} | [-109: -4] {104, 78, 36, 10} | [4: 109] {10, 36, 78, 104} | [138: 243] {144, 170, 212, 238} | |
| 242-tone RU | CRU 1 | | CRU 2 | | |
| | [-244: -3] {{238, 212, 170, 144, 104, 78, 36, 10} | | [3: 244] {10, 36, 78, 104, 144, 170, 212, 238} | | |
| 484-tone RU 16 pilots | CRU 1 | | | | |
| | [-244: -3, 3: 244] {-{238, 212, 70, 144, 104, 78, 36, 10}, 10, 36, 78, 104, 144, 170, 212, 238} | | | | |

It should be understood that, in addition to contiguous RUs in a strict sense, a 26-tone RU including two contiguous 13-tones, a 484-tone RU including two contiguous 242-tones (484L and 484R), and a 996-tone RU including two contiguous 498-tones (996L and 996R) may be referred to as contiguous RUs in a broad sense. For a subcarrier range of an n×996-tone RU, when the bandwidth is 80 MHz, a subcarrier range of a 996-tone RU is [-500: -3, 3: 500]. When the bandwidth is larger, the subcarrier range of the n*996-tone RU may be obtained by reusing a structure of the pilot subcarrier. For a plurality of RUs, subcarrier ranges and pilot indices of the plurality of RUs are a set of subcarrier ranges and pilot indices of RUs that form the plurality of RUs.

When a communication device uses the WLAN technology to transmit data, the communication device is limited by both a maximum transmit power and a maximum power spectral density. For example, the Federal Communications Commission of the United States recently issued a related regulation on a 6 GHz spectrum that defines a communication manner for low power indoor (Low Power Indoor, LPI). According to this regulation, a maximum power of an AP is limited to 36 dBm, and a maximum power spectral density is limited to 5 dBm/MHz. For a STA, a maximum power of the STA is limited to 24 dBm, and a maximum power spectral density is limited to -1 dBm/MHz. In comparison with the maximum power, a limitation on the maximum power spectral density is stricter. The allowed maximum power is generally affected more by the power spectral density. As a transmit bandwidth increases, a maximum transmit power of the communication device increases accordingly. As shown in Table 3, when the bandwidth is 320 MHz, the transmit power reaches the maximum power specified in the foregoing regulation. For a small bandwidth and RU, in a scenario in which the power spectral density is limited, the communication device can usually transmit data only at a power far lower than the maximum power. This greatly affects a transmission rate and a transmission distance.

**Table 3: Relationship between the maximum transmit power and the bandwidth in the LPI scenario**

| Transmit bandwidth | Maximum AP power | Maximum STA power |
|---|---|---|
| 20 MHz | 18 | 12 |
| 40 MHz | 21 | 15 |
| 80 MHz | 24 | 18 |
| 160 MHz | 27 | 21 |
| 320 MHz | 36 | 24 |

To resolve these problems, according to the example embodiments of this disclosure, an improved solution is provided. In the improved solution, a physical resource unit (Physical Resource Unit, PRU) formed by discrete subcarriers is used to transmit data over a larger bandwidth than the contiguous RU. In this way, the transmit-end device can transmit data at a high transmit power. In addition, because the discretized subcarriers are evenly distributed on the entire bandwidth segment by segment, it can be ensured that a large PAPR increase is not caused in data transmission due to the discrete subcarriers of a VRU. In the foregoing subcarrier division solution, an LTF (long training field) field corresponding to each user can have a low PAPR. In the technical solutions of this disclosure, bandwidth resources can be fully utilized in this manner, thereby improving system efficiency.

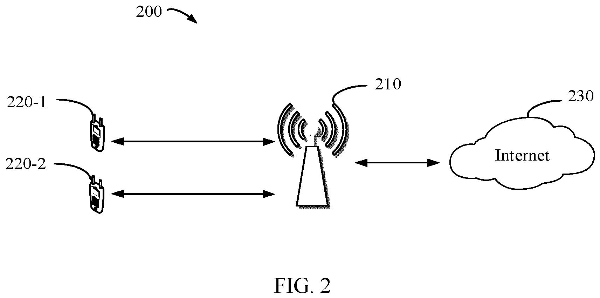

Example embodiments of this disclosure are discussed in detail in the following with reference to FIG. 2 to FIG. 7.

FIG. 2 is a schematic diagram of a communication environment 200 in which an embodiment of this disclosure can be implemented. As shown in FIG. 2, the communication environment 200 includes an access point AP 210 and stations STAs 220-1 and 220-2 (which may also be collectively referred to as station STA 220). In addition, the access point AP 210 accesses the Internet 230 in a wired or wireless manner. It should be understood that the communication environment 200 is used as an example only and does not imply any limitation on the scope of this application. Embodiments of this application may further be embodied in another network environment or architecture. In addition, it should be further understood that the communication environment 200 may further include other components or entities for purposes such as a communication connection, data transmission, and network security. For simplification of the description, these components or entities are not shown in FIG. 2, but this does not mean that embodiments of this application do not have these elements or entities.

The access point AP may provide wireless network coverage for a station STA within a specific area. For example, the access point AP 210 may be associated with the stations STAs 220-1 and 220-2, and perform uplink and downlink communication by using a predetermined protocol (for example, the IEEE 802.11 protocol), including point-to-multipoint transmission and point-to-point transmission. In addition, packet data based on various frame structures, such as a physical layer protocol data unit PPDU, may be transmitted between the access point AP 210 and the station STA 220.

The network environment 200 according to this embodiment of this application may be a wireless network that complies with any currently known or future to-be-developed protocol, including but not limited to a WLAN based on standards such as 802.11ac, 802.11n, 802.11g, 802.11b, and 802.11a, a narrow band Internet of things (Narrow Band Internet of Things, NB-IoT) system, a global system for mobile communications (Global System for Mobile Communications, GSM), an enhanced data rates GSM evolution (Enhanced Data Rates GSM Evolution, EDGE) system, a wideband code division multiple access (Wideband Code Division Multiple Access, WCDMA) system, a code division multiple access 2000 (Code Division Multiple Access, CDMA2000) system, a time division-synchronous code division multiple access (Time Division-Synchronous Code Division Multiple Access, TD-SCDMA) system, a long term evolution (Long Term Evolution, LTE) system, and a 5G NR network.

In some embodiments, the access point AP 210 may be, for example, a wireless router. The stations STAs 220-1 and 220-2 may include wireless mobile devices. Examples of the wireless mobile devices include but are not limited to: a smartphone, a notebook computer, a tablet computer, a smart wearable device, a vehicle-mounted mobile device, and the like.

### First implementation of this disclosure

According to the foregoing descriptions of the current bandwidth configuration and the subcarrier resource division, for resource units RUs of a same size, relative locations of pilot subcarriers in the resource units RUs are not necessarily the same. If a nominal resource unit RU is directly evenly discretized on a larger bandwidth, some subcarriers may be mapped to locations of original pilot subcarriers, and some pilot subcarriers may also be mapped to locations of original data subcarriers. It is clear that this does not facilitate communication quality and data transmission. According to an example embodiment of this disclosure, an improved communication mechanism is provided. In the improved communication mechanism, a PPDU is transmitted based on a specific tone plan by using a physical resource unit PRU including discrete subcarriers, and there is a mapping relationship between the PRU and a VRU. The mechanism may involve the access point 210 and the station STA 220 as shown in FIG. 2.

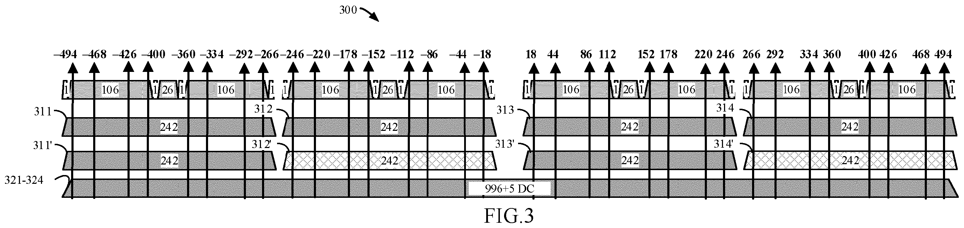

The following describes a schematic diagram of reassembling the physical resource units PRUs with reference to FIG. 3.

As shown in FIG. 3, an example in which a first bandwidth is 80 MHz is used. The first bandwidth may include a virtual resource unit VRU, for example, four 242-tone VRUs 311 to 314. According to a tone plan, pilot subcarriers of the 242-tone VRUs 311 and 313 have same locations in respective RUs, and pilot subcarriers of the 242-tone VRUs 312 and 314 have same locations in respective RUs. In practice, the four 242-tone VRUs 311 to 314 may be separately allocated to one or more users for simultaneous uplink orthogonal frequency-division multiple access (Orthogonal Frequency-Division Multiple Access, OFDMA) transmission.

In step 1, subcarriers of some VRUs in the group of VRUs 311 to 314 are reversed in frequency domain, to obtain VRUs 311' to 314'. For example, the 242-tone RUs 311 and 313 may be reversed. Alternatively, in another example, the 242-tone RUs 312 and 314 may be reversed. In the example in FIG. 3, the subcarriers of the 242-tone RUs 312 and 314 are reversed. After the reversion, pilot subcarriers of the 242-tone VRUs 311' to 314' have same relative locations in respective RUs of the 242-tone VRUs 311' to 314'.

In some example embodiments, after reversion in step 1, reversion may be further performed on some consecutive subcarriers in the VRUs 311' to 314' in frequency domain. For example, each of the 242-tone VRUs 311' to 314' includes two 106-tone VRUs, and subcarriers of one 106-tone VRU in each of the 242-tone VRUs 31 1' to 314' are reversed, so that pilot subcarriers in the VRUs 311' to 314' are more evenly distributed.

In step 2, subcarriers in each of the 242-tone VRUs 311' to 314' are indexed and divided into N RU segments, where N is a quantity of VRUs corresponding to the first bandwidth. Herein, a first RU segment is{1, 5, 9, ..., 241}, a second RU segment is {2, 6, 10, ..., 242}, a third RU segment is {3, 7, 11, ..., 239}, and a fourth RU segment is {4, 8, 12, ..., 240}.

In step 3, N RU segments from different 242-tone VRUs 311' to 314' form N reassembled RUs. In other words, each reassembled RU includes the N segments from the different VRUs 311' to 314', and every N consecutive subcarriers correspond to a different 242-tone VRU in 311' to 314' in frequency domain. The reassembled RU formed based on step 3 has a structure similar to a structure of data.

In the embodiment in which reversion is performed on some consecutive subcarriers in the VRUs 31 1' to 314' after step 1, reversion may be performed on a part that is of each reassembled RU and that corresponds to the some consecutive subcarriers of the VRUs 31 1' to 314'.

Step 4: Perform reversion on the reassembled RUs corresponding to the some reversed VRUs in the VRUs 311 to 314, to obtain physical resource units PRUs 321 to 324. For example, if reversion is performed on the subcarriers of the 242-tone VRUs 311 and 313 in step 1, reversion is performed on subcarriers of the reassembled RUs 321 and 323 in step 4. If reversion is performed on the subcarriers of the 242-tone VRUs 312 and 314 in step 1, reversion is performed on subcarriers of the reassembled RUs 322 and 324 in step 4. In this way, impact of the processing in step 1 on the original RU division may be restored.

The PRUs 321 to 324 obtained based on step 1 to step 4 are separately evenly distributed in the first bandwidth 80 MHz, and occupy different subcarrier locations. In addition, the PRUs 321 to 324 respectively have same subcarrier division as the VRUs 321 to 324, and there is a mapping relationship between each of the PRUs 321 to 324 and each of the VRUs 321 to 324.

Although the first implementation is described by using an example in which the first bandwidth is 80 MHz, this mechanism is also applicable to a VRU of another bandwidth (for example, 160 MHz or 320 MHz) and another size. For example, when the first bandwidth is 160 MHz, the first bandwidth includes eight 242-tone VRUs. Correspondingly, in step 2, each VRU may be evenly divided into eight RU segments, and then in step 3, eight reassembled 242-tone RUs are formed in a manner similar to Sudoku. For another example, when the first bandwidth is 320 MHz, the first bandwidth includes sixteen 242-tone VRUs. Correspondingly, in step 2, each VRU may be evenly divided into 16 RU segments, and then in step 3, 16 reassembled 242-tone RUs are formed in a manner similar to Sudoku. In addition, the 320 MHz bandwidth may be further divided into two 160 MHz bandwidths for similar operations. This is not described herein again.

In some example embodiments, the size of the resource unit RU may be different from that of the 242-tone RU. For example, the resource unit may be a 106-tone RU, a 484-tone RU, or a 996-tone RU. For example, when a group of 106-tone VRUs are discretized and reassembled, an operation may still be performed in a unit of 242 tones, and the user uses only a discretization result of subcarriers corresponding to the 106-tone RU.

In some example embodiments, when the operation of the block 3 is performed, a plurality of reassembling solutions conforming to a Sudoku structure may be obtained. A reassembling solution that enables an LTF field corresponding to the user to have a minimum peak to average power ratio PAPR (peak to average power ratio) may be selected. In addition, the reassembling solution may be preconfigured on a transmit end and a receive end of communication, and the PPDU is sent or received on the first bandwidth based on the reassembling solution.

In some example embodiments, the PPDU may include indication information, or the transmit-end device may send the indication information independent of the PPDU, to indicate whether the PRU used for the PPDU includes consecutive subcarriers or discrete subcarriers.

### Second implementation of this disclosure

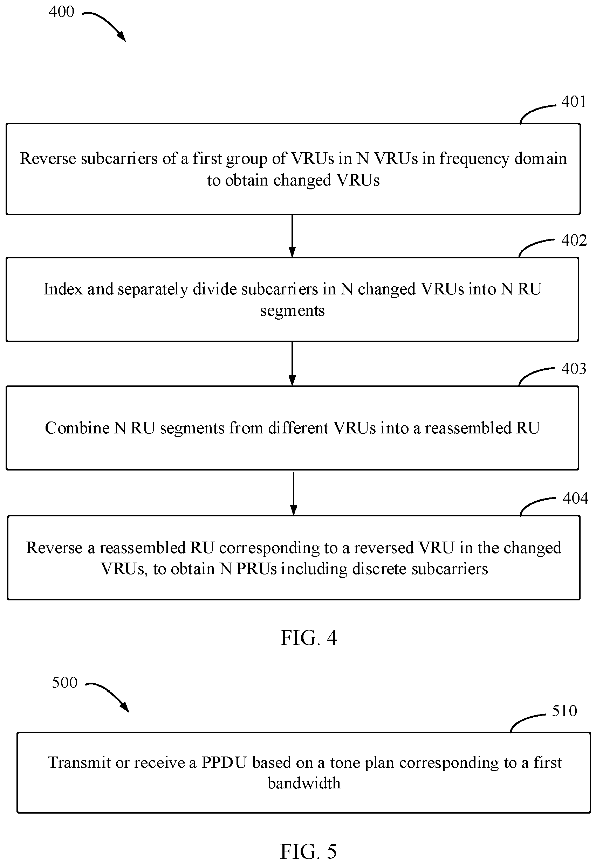

A second implementation of this disclosure relates to a process similar to the first implementation. A process 400 of generating a PRU including discrete subcarriers is described in the following with reference to FIG. 4.

As shown in FIG. 4, for a first bandwidth including N 242-tone VRUs, in block 401, subcarriers of a first group of VRUs in the N 242-tone VRUs are reversed in frequency domain, to obtain changed VRUs. For example, the first group of VRUs may include VRUs whose RU indices are odd numbers in the N 242-tone VRUs. Alternatively, for another example, the first group of VRUs may include VRUs whose RU indices are even numbers in the N 242-tone VRUs. After reversion and sorting are performed, pilot subcarriers of the VRUs have same relative locations in respective RUs.

Optionally, after block 401, at least some consecutive subcarriers in each VRU may be further reversed in frequency domain. For example, a second 52-tone RU and a fourth 52-tone RU in each 242-tone VRU may be reversed. Alternatively, a first 52-tone RU and a third 52-tone RU may be reversed. In this way, pilot subcarriers in each 242-tone VRU are more evenly distributed.

In block 402, subcarriers in the N reversed VRUs are indexed, and each reversed VRU is divided into the following N RU segments: a first RU segment of {1, N+1, 2*N+1, ...}, a second RU segment of {2, N+2, 2*N+2, ...}, a third RU segment of {3, N+3, 2*N+3, ...}, ..., and an N^{th} RU segment of {N, 2*N, 3*N, ...}. Herein, N is a quantity of VRUs corresponding to the first bandwidth.

In block 403, N RU segments from different VRUs are combined into a reassembled RU, and a total of N reassembled RUs are obtained. In other words, each reassembled RU includes the first RU segment, the second RU segment, ..., and the N^{th} RU segment respectively from the different VRUs. In addition, in frequency domain, every N consecutive subcarriers corresponds to a different VRU. In other words, the reassembled RU obtained in block 403 has a structure similar to a structure of data.

If reversion is performed on at least some consecutive subcarriers in each VRU after block 401, after block 403, reversion may be performed on a part that is in each reassembled RU and that corresponds to the at least some consecutive subcarriers in each changed VRU, to restore impact on RU division.

In block 404, reversion is performed on reassembled RUs corresponding to the reversed VRUs in the N changed VRUs, to obtain N PRUs including discrete subcarriers. For example, if reversion is performed on subcarriers of a VRU whose RU index is an odd number in block 401, reversion is performed on subcarriers of a reassembled RU whose RU index is an odd number in block 404. If reversion is performed on subcarriers of a VRU whose RU index is an even number in block 401, reversion is performed on subcarriers of a reassembled RU whose RU index is an even number in block 404. In this way, impact of change in block 401 on the original RU division may be restored.

According to the communication mechanism provided in this embodiment of this disclosure, consecutive subcarriers of a VRU are evenly distributed on a larger bandwidth, to form a PRU including discrete subcarriers that occupy the entire bandwidth, so that a transmit-end device can transmit data at a high transmit power. Discretized subcarriers are evenly distributed on the bandwidth segment by segment, to ensure that discretization of VRUs does not cause a large PAPR increase during data transmission. Based on the mechanism, the technical solutions of this disclosure can fully use bandwidth resources, thereby improving system efficiency.

### Third implementation of this disclosure

According to a third implementation of this disclosure, an example process of discretizing subcarriers in a unit of a 996-tone RU on a first bandwidth is provided. It is assumed that the first bandwidth may be 160 MHz or 320 MHz, and includes N 996-tone RUs. Each 996-tone RU may include four 242-tone RUs, for example, a first 242-tone RU, a second 242-tone RU, a third 242-tone RU, and a fourth 242-tone RU.

When PRUs used to transmit a PPDU are determined, a first group of 242-tone VRUs in the 996-tone VRUs may be reversed. For example, the second 242-tone RU and the fourth 242-tone RU in each 996-tone VRU, that is, 242-tone RUs whose indices are even numbers, may be reversed. Alternatively, the first 242-tone RU and the third 242-tone RU in each 996-tone VRU, that is, 242-tone RUs whose indices are odd numbers, may be reversed. This is not limited in this disclosure. In this way, locations of pilot subcarriers in each changed 996-tone VRU are more evenly distributed. It should be understood that the foregoing steps are optional steps. In practice, it is also feasible if the foregoing steps are not performed.

Subcarrier indices of each 996-tone RU are {1, ..., 996}, and the indexed subcarriers are divided into the following N RU segments: a first RU segment of {1, N+1, 2*N+1, ...}, a second RU segment of {2, N+2, 2*N+2, ...}, a third RU segment of {3, N+3, 2*N+3, ...}, ..., and an N^{th} RU segment of {N, 2*N, 3*N, ...}. Herein, N is equal to a quantity of VRUs corresponding to the first bandwidth.

Next, N RU segments from different N 996-tone VRUs are reassembled into N 996-tone PRUs. The reassembled 996-tone PRU has a result similar to Sudoku. To be specific, each 996-tone PRU includes N RU segments: a first RU segment, a second RU segment, ..., and an N^{th} RU segment, and the N RU segments in a same reassembled 996-tone PRU are from the N different 996-tone VRUs. In terms of frequencies, every N adjacent subcarriers on the first bandwidth are from N different 996-tone PRUs.

In some embodiments, if the optional step of reversing subcarriers is first performed when the PRUs are determined, corresponding 242-tone PRUs in the reassembled 996-tone PRUs are separately reversed. In this way, impact of the foregoing optional steps on subcarrier division is eliminated.

According to the communication mechanism provided in this embodiment of this disclosure, consecutive subcarriers of a VRU are evenly distributed on a larger bandwidth, to form a PRU including discrete subcarriers that occupy the entire bandwidth. In addition, an original subcarrier resource division result is not changed. In this way, a transmit-end device may be allowed to transmit data at a high transmit power. Discretized subcarriers are evenly distributed on the bandwidth segment by segment, to ensure that discretization of VRUs does not cause a large PAPR increase during data transmission. Therefore, the technical solutions of this disclosure can fully use bandwidth resources, thereby improving system efficiency.

It should be understood that, based on the first to the third implementations of this disclosure, a plurality of subcarrier discretization solutions conforming to a Sudoku structure may be obtained. In practice, a specific subcarrier discretization solution may be selected according to a requirement and preconfigured at a transmit end and a receive end, and communication is performed based on the solution.

Table 4 to Table 6 below provide RU indices, subcarrier ranges, and pilot subcarrier indices based on different tone plans and the communication mechanism provided in this disclosure. The reassembling solutions may produce a lower PAPR and better system performance. Certainly, other reassembling solutions are also feasible.

**Table 4: Indices, subcarrier ranges, and pilot subcarrier indices of reassembled PRUs in a unit of a 242-tone RU for an 80 MHz bandwidth**

| VRU type | Indices, subcarrier ranges, and pilot subcarrier locations of reassembled PRUs | | | |
|---|---|---|---|---|
| 242-tone RU 8 pilots | RU 1 | RU2 | RU3 | RU4 |
| | [-500:4:-368, -365:4:-261, - 250:4:-146, -145:4:-13, 15:4:143, 148:4:252, 259:4:363, 370:4:498] {-468, -400, -246, 178, 152, 220, 426, 4 94} | [-499:4:-367, -366:4:-262, -252:4:-148, -143:4:-15, 14:4:142, 149:4:253, 261:4:365, 68:4:500] {-334, -266, -220, -152, 18, 86, 400, 468} | [-498:4:-370, - 363:4:-259, - 251:4:-147, - 144:4:-12, 13:4:145, 146:4:250, 260:4:364, 369:4:497] {-494, -426, -112, -44, 178, 246, 292, 360} | [-497:4:-369, - 364:4:-260, - 253:4:-149, - 142:4:-14, 12:4:144, 147:4:251, 262:4:366, 367:4:499] {-360, -292, -86, -18, 44, 112, 266, 334} |
| 242-tone RU 8 pilots | RU 1 | RU2 | RU3 | RU4 |
| | [-500:4:-368, -365:4:-261, - 253:4:-149, -142:4:-14, 15:4:143, 148:4:252, 262:4:366, 367:4:499] {-468, -400, -86, -18, 152, 220, 266, 334} | [-499:4:-367, - 366:4:-262, - 252:4:-148, - 143:4:-15, 14:4:142, 149:4:253, 261:4:365, 368:4:500] {-334, -266, - 220, -152, 18, 86, 400, 468} | [-498:4:-370, - 363:4:-259, - 251:4:-147, - 144:4:-12, 13:4:145, 146:4:250, 260:4:364, 369:4:497] {-494, -426, -112, -44, 178, 246, 292, 360} | [-497:4:-369, - 364:4:-260, - 250:4:-146, - 145:4:-13, 12:4:144, 147:4:251, 259:4:363, 370:4:498] {-360, -292, -24 6, -178, 44, 112, 426, 494} |
| 242-tone RU 8 pilots | RU 1 | RU2 | RU3 | RU4 |
| | [-500:4:-368, -365:4:-261, - 252:4:-148, -143:4:-15, 13:4:145, 146:4:250, 259:4:363, 370:4:498] {-468, -400, -220, -152, 178, 24 6, 426, 494} | [-499:4:-367, - 366:4:-262, - 253:4:-149, - 142:4:-14, 12:4:144, 147:4:251, 260:4:364, 369:4:497] {-334, -266, -86, -18, 44, 112, 292, 360} | [-498:4:-370,-363:4:-259, - 251:4:-147, - 144:4:-12, 15:4:143, 148:4:252, 262:4:366, 367:4:499] {-494, -426, -112, -44, 152, 220, 266, 334} | [-497:4:-369, - 364:4:-260, - 250:4:-146, - 145:4:-13, 14:4:142, 149:4:253, 261:4:365, 368:4:500] {-360, -292, -24 6, -178, 18, 86, 4 00, 468} |
| 242-tone RU 8 pilots | RU 1 | RU2 | RU3 | RU4 |
| | [-500:4:-368, -365:4:-261, - 250:4:-146, -145:4:-13, 15:4:143, 148:4:252, 259:4:363, 370:4:498] {-468, -400, -246, - 178, 152, 220, 426, 4 94} | [-499:4:-367, - 366:4:-262, - 253:4:-149, - 142:4:-14, 12:4:144, 147:4:251, 260:4:364, 369:4:497] {-334, -266, -86, -18, 44, 112, 292, 360} | [-498:4:-370, - 363:4:-259, - 252:4:-148, - 143:4:-15, 13:4:145, 146:4:250, 261:4:365, 368:4:500] {-494, -426, -220, -152, 178, 246, 400, 468} | [-497:4:-369, - 364:4:-260, - 251:4:-147, - 144:4:-12, 14:4:142, 149:4:253, 262:4:366, 367:4:499] {-360, -292, -112, -44, 18, 86, 266, 334} |
| 242-tone RU 8 pilots | RU 1 | RU2 | RU3 | RU4 |
| | [-500:4:-368, -365:4:-261, - 252:4:-148, -143:4:-15, 13:4:145, 146:4:250, 259:4:363, 370:4:498] {-468, -400, -220, -152, 178, 24 6, 426, 494} | [-499:4:-367, - 366:4:-262, - 253:4:-149, - 142:4:-14, 12:4:144, 147:4:251, 260:4:364, 369:4:497] {-334, -266, -86, -18, 44, 112, 292, 360} | [-498:4:-370, - 363:4:-259, - 250:4:-146, - 145:4:-13, 15:4:143, 148:252, 261:4:365, 368:4:500] {-494, -426, - 246, -178, 152, 220, 400, 468} | [-497:4:-369, - 364:4:-260, - 251:4:-147, - 144:4:-12, 14:4:142, 149:4:253, 262:4:366, 367:4:499] {-360, -292, -112, -44, 18, 86, 266, 334} |
| 242-tone RU 8 pilots | RU 1 | RU2 | RU3 | RU4 |
| | [-500:4:-368, - 365:4:-261, - 250:4:-146, - 145:4:-13, 15:4:143, 148:4:252, 259:4:363, 370:4:498] {-468, -400, -246, - 178,152,220,426, 494} | [-499:4:-367, - 366:4:-262, - 253:4:-149, - 142:4:-14, 12:4:144, 147:4:251, 260:4:364, 369:4:497] {-334, -266, -86, -18, 44, 112, 292, 360} | [-498:4:-370, - 363:4:-259, - 252:4:-148, - 143:4:-15, 13:4:145, 146:4:250, 261:4:365, 368:4:500] {-494, -426, - 220, -152, 178, 246, 400, 468} | [-497:4:-369, - 364:4:-260, - 251:4:-147, - 144:4:-12, 14:4:142, 149:4:253, 262:4:366, 367:4:499] {-360, -292, - 112, -44, 18, 86, 266, 334} |
| 242-tone RU 8 pilots | RU 1 | RU2 | RU3 | RU4 |
| | [-500:4:-368, -365:4:-261, - 252:4:-148, -143:4:-15, 13:4:145, 146:4:250, 259:4:363, 370:4:498] {-468, -400, -220, -152, 178, 24 6, 426, 494} | [-499:4:-367, - 366:4:-262, - 251:4:-147, - 144:4:-12, 14:4:142, 149:4:253, 260:4:364, 369:4:497] {-334, -266, - 112, -44, 18, 86, 292, 360} | [-498:4:-370, - 363:4:-259, - 250:4:-146, - 145:4:-13, 15:4:143, 148:252, 261:4:365, 368:4:500] {-494, -426, - 246, -178, 152, 220, 400, 468} | [-497:4:-369, - 364:4:-260, - 253:4:-149, - 142:4:-14, 12:4:144, 147:4:251, 262:4:366, 367:4:499] {-360, -292, -86, -18, 44, 112, 266, 334} |
| 242-tone RU 8 pilots | RU 1 | RU2 | RU3 | RU4 |
| | [-500:4:-368, - 365:4:-261, - 253:4:-149, - 142:4:-14, 15:4:143, 148:4:252, 262:4:366, 367:4:499] {-468, -400, -86, - 18, 152, 220, 266, 334} | [-499:4:-367, - 366:4:-262, - 251:4:-147, - 144:4:-12, 14:4:142, 149:4:253, 260:4:364, 369:4:497] {-334, -266, - 112, -44, 18, 86, 292, 360} | [-498:4:-370, - 363:4:-259, - 252:4:-148, - 143:4:-15, 13:4:145, 146:4:250, 261:4:365, 368:4:500] {-494, -426, - 220, -152, 178, 246, 400, 468} | [-497:4: -369, - 364:4: -260, - 250:4: -146,-145:4: -13, 12:4:144, 147:4:251, 259:4:363, 370:4:498] {-360, -292, - 246, -178, 44, 112, 426, 494} |
| 242-tone RU 8 pilots | RU 1 | RU2 | RU3 | RU4 |
| | [-500:4:-368, -365:4:-261, - 252:4:-148, -143:4:-15, 13:4:145, 146:4:250, 259:4:363, 370:4:498] {-468, -400, -220, -152, 178, 24 6, 426, 494} | [-499:4:-367, - 366:4:-262, - 253:4:-149, - 142:4:-14, 15:4:143, 148:4:252, 261:4:365, 368:4:500] {-334, -266, -86, -18, 152, 220, 400, 468} | [-498:4:-370, - 363:4:-259, - 250:4:-146, - 145:4:-13, 12:4:144, 147:4:251, 260:4:364, 369:4:497] {-494, -426, - 246, -178, 44, 112, 292, 360} | [-497:4:-369, - 364:4:-260, - 251:4:-147, - 144:4:-12, 14:4:142, 149:4:253, 262:4:366, 367:4:499] {-360, -292, - 112, -44, 18, 86, 266, 334} |
| 242-tone RU 8 pilots | RU 1 | RU2 | RU3 | RU4 |
| | [-500:4:-368, -365:4:-261, - 252:4:-148, -143:4:-15, 14:4:142, 149:4:253, 262:4:366, 367:4:499] {-468, -400, -220, -152, 18, 86, 266, 334} | [-499:4:-367, - 366:4:-262, - 251:4:-147, - 144:4:-12, 15:4:143, 148:4:252, 259:4:363, 370:4:498] {-334, -266, - 112, -44, 152, 220, 426, 494} | [-498:4:-370, - 363:4:-259, - 250:4:-146, - 145:4:-13, 12:4:144, 147:4:251, 260:4:364, 369:4:497] {-494, -426, - 246, -178, 44, 112, 292, 360} | [-497:4:-369, - 364:4:-260, - 253:4:-149, - 142:4:-14, 13:4:145, 146:4:250, 261:4:365, 368:4:500] {-360, -292, -86, -18, 178, 246, 400, 468} |
| 242-tone RU 8 pilots | RU 1 | RU2 | RU 3 | RU4 |
| | [-500:4:-368, - 365:4:-261, - 250:4:-146, - 145:4:-13, 15:4:143, 148:4:252, 259:4:363, 370:4:498] {-468, -400, -246, - 178, 152, 220, 426, 494} | [-499:4:-367, - 366:4:-262, - 251:4:-147, - 144:4:-12, 14:4:142, 149:4:253, 260:4:364, 369:4:497] {-334, -266, - 112, -44, 18, 86, 292, 360} | [-498:4:-370, - 363:4:-259, - 252:4:-148, - 143:4:-15, 13:4:145, 146:4:250, 261:4:365, 368:4:500] {-494, -426, - 220, -152, 178, 246, 400, 468} | [-497:4:-369, - 364:4:-260, - 253:4:-149, - 142:4:-14, 12:4:144, 147:4:251, 262:4:366, 367:4:499] {-360, -292, -86, -18, 44, 112, 266, 334} |
| 242-tone RU 8 pilots | RU 1 [-500:4:-368, - 365:4:-261, - 253:4:-149, - 142:4:-14, 13:4:145, 146:4:250, 260:4:364, 369:4:497] {-468, -400, -86,- 18, 178, 246, 292, 360} | RU 2 [-499:4:-367, - 366:4:-262, - 252:4:-148, - 143:4:-15, 14:4:142, 149:4:253, 261:4:365, 368:4:500] {-334, -266, - 220, -152, 18, 86, 400, 468} | RU 3 [-498:4:-370, - 363:4:-259, - 251:4:-147, - 144:4:-12, 15:4:143, 148:4:252, 262:4:366, 367:4:499] {-494, -426, - 112, -44, 152, 220, 266, 334} | RU 4 [-497:4:-369, - 364:4:-260, - 250:4:-146, - 145:4:-13, 12:4:144, 147:4:251, 259:4:363, 370:4:498] {-360, -292, - 246, -178, 44, 112, 426, 494} |
| 242-tone RU 8 pilots | RU 1 | RU 2 | RU3 | RU4 |
| | [-500:4:-368, - 365:4:-261, - 253:4:-149, - 142:4:-14, 13:4:145, 146:4:250, 260:4:364, 369:4:497] {-468, -400, -86,- 18, 178, 246, 292, 360} | [-499:4:-367, - 366:4:-262, - 252:4:-148, - 143:4:-15, 12:4:144, 147:4:251, 259:4:363, 370:4:498] {-334,-266,- 220, -152, 44, 112, 426, 494} | [-498:4:-370, - 363:4:-259, - 251:4:-147, - 144:4:-12, 15:4:143, 148:4:252, 262:4:366, 367:4:499] {-494, -426, - 112, -44, 152, 220, 266, 334} | [-497:4: -369, - 364:4: -260, - 250:4: -146,- 145:4: -13, 14:4:142, 149:4:253, 261:4:365, 368:4:500] {-360, -292, -24 6, -178, 18, 86, 4 00, 468} |

**Table 5: Indices, subcarrier ranges, and pilot subcarrier indices of reassembled PRUs in a unit of a 106-tone RU for an 80 MHz bandwidth**

| VRU type | Indices, subcarrier ranges, and pilot subcarrier locations of reassembled PRUs | | | | | | | |
|---|---|---|---|---|---|---|---|---|
| 106-tone RU (for HE or EHTM ) 4 pilots | RU 1 [-499:8:-395, - 361:8:-265, - 252:8:-148, - 112:8:-16, 19:8:115, 152:8:248 , 262:8:358 , 401:8:497 ] {-220,-112, 152, 334} | RU 2 [-498:8:-394, - 362:8:-266, - 251:8:-147, - 111:8:-15, 20:8:116, 151:8:247 , 263:8:359 , 398:8:494 ] {-426,-266, 44, 494} | RU 3 [-497:8:-401,-364:8:-260, - 248:8:-152,-115:8:-19, 13:8:117, 154:8:250 266:8:362 399:8:495 ] {-292,-152, 178, 266} | RU 4 [-496:8:-400, - 365:8:-261, - 247:8:-151, - 116:8:-20, 15:8:111, 153:8:249 , 264:8:360 , 394:8:498 ] {-400, - 44, 360, 426} | RU 5 [-495:8:-399,-359:8:-263, - 250:8:-154,-114:8:-18, 14:8:118, 150:8:246 267:8:363 395:8:499 ] {-178,-18, 86, 246} | RU 6 [-494:8:-398,-358:8:-262, - 245:8:-149,-113:8:-17, 16:8:112, 148:8:252 261:8:365 397:8:493 ] {-494,-334, 112, 220} | RU 7 [-493:8:-397, - 363:8:-267, - 246:8:-150, - 118:8:-14, 18:8:114, 147:8:251 , 265:8:361 , 396:8:492 ] {-246,-86, 18, 468} | RU 8 [-492:8:-396, - 360:8:-264, - 249:8:-153, - 117:8:-13, 17:8:113, 149:8:245 , 260:8:364 , 400:8:496 ] {-468, - 360, 292, 400} |
| 106-tone RU (for HE or EHT, S) 4 pilots | RU 1 | RU 2 | RU 3 | RU 4 | RU 5 | RU 6 | RU 7 | RU 8 |
| | [-499:8:-395, - 359:8:-263, - 252:8:-148, - 111:8:-15, 20:8:116, 151:8:247 , 264:8:360 , 400:8:496 ] { -220, 44, 360, 400} | [-498:8:-394,-363:8:-267, - 247:8:-151,-112:8:-16, 19:8:115, 147:8:251 262:8:358 , 398:8:494 ] {-426,- 112, 334, 494} | [-497:8:-401, - 364:8:-260, - 248:8:-152, - 117:8:-13, 17:8:113, 153:8:249 , 266:8:362 , 396:8:492 ] {-292, - 152, 266, 468} | [-496:8:-400, - 360:8:-264, - 251:8:-147, - 115:8:-19, 15:8:111, 154:8:250 , 260:8:364 , 399:8:495 ] {-400, - 360, 178, 292} | [-495:8:-399, - 365:8:-261, - 246:8:-150, - 116:8:-20, 14:8:118, 152:8:248 , 263:8:359 , 401:8:497 ] {-246,- 44, 86, 152} | [-494:8:-398, - 358:8:-262, - 245:8:-149, - 118:8:-14, 13:8:117, 150:8:246 , 265:8:361 , 397:8:493 ] {-494, - 334, -86, 246} | [-493:8:-397, - 361:8:-265, - 250:8:-154, - 114:8:-18, 16:8:112, 148:8:252 , 267:8:363 , 395:8:499 ] {-178, - 18, 112, 220} | [-492:8:-396, - 362:8:-266, - 249:8:-153, - 113:8:-17, 18:8:114, 149:8:245 , 261:8:365 , 394:8:498 ] {-468, - 266, 18, 426} |
| 106- tone RU (For HE S) 4 pilots | RU 1 | RU 2 | RU 3 | RU 4 | RU 5 | RU 6 | RU 7 | RU 8 |
| | [-499:8:- 395,- 361:8:- 265, - 248:8:- 152,- 111:8:- 15, 19:8:115, 148:8:252 262:8:358 400:8:496 ] {-152, 220,334, 400} | [-498:8:- 394,- 365:8:- 261, - 249:8:- 153,- 112:8:- 16, 20:8:116, 149:8:245 265:8:361 398:8:494 ] {-426,- 112,44, 494} | [-497:8:- 401, - 362:8:- 266, - 252:8:- 148, - 116:8:- 20, 17:8:113, 152:8:248 , 261:8:365 , 397:8:493 ] {-266, - 220, -44, 152} | [-496:8:- 400, - 358:8:- 262, - 245:8:- 149, - 115:8:- 19, 13:8:117, 151:8:247 , 264:8:360 , 394:8:498 ] {-400, - 334, 360, 426} | [-495:8:- 399, - 359:8:- 263, - 246:8:- 150, - 118:8:- 14, 18:8:114, 154:8:250 , 267:8:363 , 395:8:499 ] {-246,- 86, 18, 178} | [-494:8:- 398, - 363:8:- 267, - 247:8:- 151, - 117:8:- 13, 16:8:112, 153:8:249 , 260:8:364 , 396:8:492 ] { -494, 112, 292, 468} | [-493:8:- 397, - 360:8:- 264, - 250:8:- 154, - 113:8:- 17, 14:8:118, 147:8:251 , 266:8:362 , 401:8:497 ] {-360, - 178, 86, 266} | [-492:8:- 396,- 364:8:- 260,- 251:8:- 147,- 114:8:- 18, 15:8:111, 150:8:246 263:8:359 399:8:495 ] {-468,- 292,-18, 246} |
| 106- tone RU (For HEM) 4 pilots | RU 1 | RU 2 | RU 3 | RU 4 | RU 5 | RU 6 | RU 7 | RU 8 |
| | [-499:8:- 395, - 361:8:- 265, - 245:8:-149,-116:8:-20, 16:8:112, 152:8:248 260:8:364 397:8:493 ] {-44, 112,152, 292} | [-498:8:- 394, - 359:8:- 263, - 246:8:-150, - 114:8:-18, 17:8:113, 147:8:251 , 262:8:358 , 401:8:497 ] {-426,-246, -18, 334} | [-497:8:- 401, - 365:8:- 261, - 248:8:-152,-113:8:-17, 14:8:118, 153:8:249 266:8:362 396:8:492 ] {-152, 86,266, 468} | [-496:8:- 400, - 364:8:- 260, - 247:8:-151, - 115:8:-19, 18:8:114, 154:8:250 , 267:8:363 , 395:8:499 ] {-400, - 292, 18, 178} | [-495:8:- 399, - 358:8:- 262, - 249:8:-153,-118:8:-14, 15:8:111, 150:8:246 261:8:365 398:8:494 ] {-334,-86,246, 494} | [-494:8:- 398, - 363:8:- 267, - 251:8:-147,-112:8:-16, 20:8:116, 151:8:247 263:8:359 394:8:498 ] {-494,-112,44, 426} | [-493:8:- 397, - 362:8:- 266, - 250:8:-154,-111:8:-15, 13:8:117, 148:8:252 264:8:360 399:8:495 ] {-266,-178,220, 360} | [-492:8:- 396,- 360:8:- 264,- 252:8:-148,-117:8:-13, 19:8:115, 149:8:245 265:8:361 400:8:496 ] {-468,-360,-220,400} |
| 106-tone RU (For EHT S) 4 pilots | RU 1 | RU 2 | RU 3 | RU 4 | RU 5 | RU 6 | RU 7 | RU 8 |
| | [-499:8:-395,-363:8:-267,-246:8:-150, - 118:8:- 14, 18:8:114, 154:8:250 263:8:359 399:8:495 ] {-246,-86, 18,178} | [-498:8:-394,-362:8:-266,-247:8:-151, - 111:8:-15, 13:8:117, 153:8:249 264:8:360 396:8:492 ] {-426,-266,360,468} | [-497:8:-401,-365:8:-261,-252:8:-148, - 112:8:-16, 20:8:116, 152:8:248 265:8:361 397:8:493 ] {-220,-112,44,152} | [-496:8:-400, - 364:8:-260, - 251:8:-147, - 115:8:-19, 17:8:113, 149:8:245 , 262:8:358 , 398:8:494 ] {-400, - 292, 334,494} | [-495:8:-399, - 359:8:-263, - 250:8:-154, - 114:8:-18, 14:8:118, 150:8:246 , 267:8:363 , 395:8:499 ] {-178, - 18, 86,246} | [-494:8:-398, - 358:8:-262, - 245:8:-149, - 113:8:-17, 19:8:115, 147:8:251 , 260:8:364 , 400:8:496 ] {-494, - 334, 292,400} | [-493:8:-397, - 361:8:-265, - 248:8:-152, - 116:8:-20, 16:8:112, 148:8:252 , 261:8:365 , 401:8:497 ] {-152,-44, 112,220} | [-492:8:-396,-360:8:-264, - 249:8:-153,-117:8:-13, 15:8:111, 151:8:247 266:8:362 394:8:498 ] {-468,-360,266,426} |
| 106- tone RU (For EHT M) 4 pilots | RU 1 | RU 2 | RU 3 | RU 4 | RU 5 | RU 6 | RU 7 | RU 8 |
| | [-499:8:- 395,- 359:8:- 263,- 252:8:- 148, - 112:8:- 16, 20:8:116, 152:8:248 267:8:363 399:8:495 ] {-220,- 112, 44, 152} | [-498:8:- 394, - 362:8:- 266, - 245:8:- 149, - 117:8:- 13, 17:8:113, 153:8:249 , 262:8:358 , 398:8:494 ] {-426,- 266, 334, 494} | [-497:8:- 401,- 361:8:- 265,- 250:8:- 154, - 114:8:- 18, 14:8:118, 150:8:246 261:8:365 397:8:493 ] {-178,- 18, 86, 246} | [-496:8:- 400, - 364:8:- 260, - 251:8:- 147, - 111:8:- 15, 19:8:115, 151:8:247 , 264:8:360 , 396:8:492 ] {-400, - 292, 360, 468} | [-495:8:- 399,- 363:8:- 267,- 248:8:- 152, - 116:8:- 20, 16:8:112, 148:8:252 263:8:359 395:8:499 ] {-152,- 44,112, 220} | [-494:8:- 398,- 358:8:- 262,- 249:8:- 153, - 113:8:- 17, 13:8:117, 149:8:245 266:8:362 394:8:498 ] {-494,- 334, 266, 426} | [-493:8:- 397,- 365:8:- 261,- 246:8:- 150, - 118:8:- 14, 18:8:114, 154:8:250 265:8:361 401:8:497 ] {-246,- 86, 18, 178} | [-492:8:- 396,- 360:8:- 264, - 247:8:- 151,- 115:8:- 19, 15:8:111, 147:8:251 260:8:364 400:8:496 ] {-468, - 360, 292, 400} |

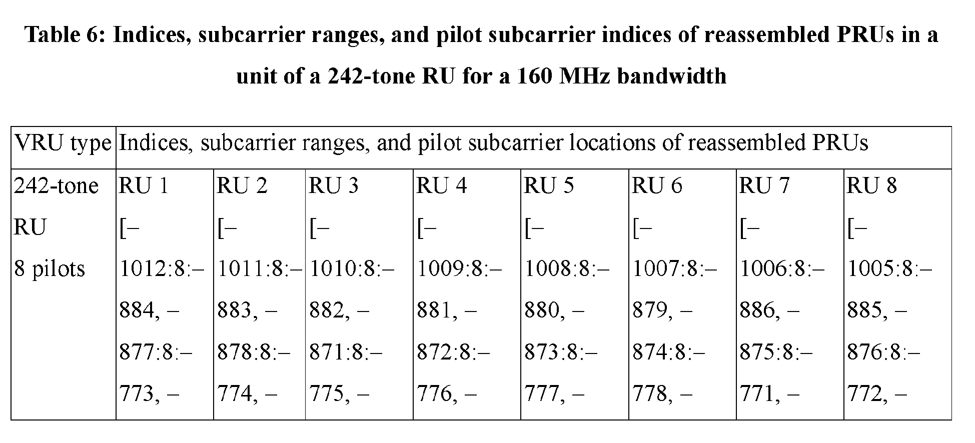

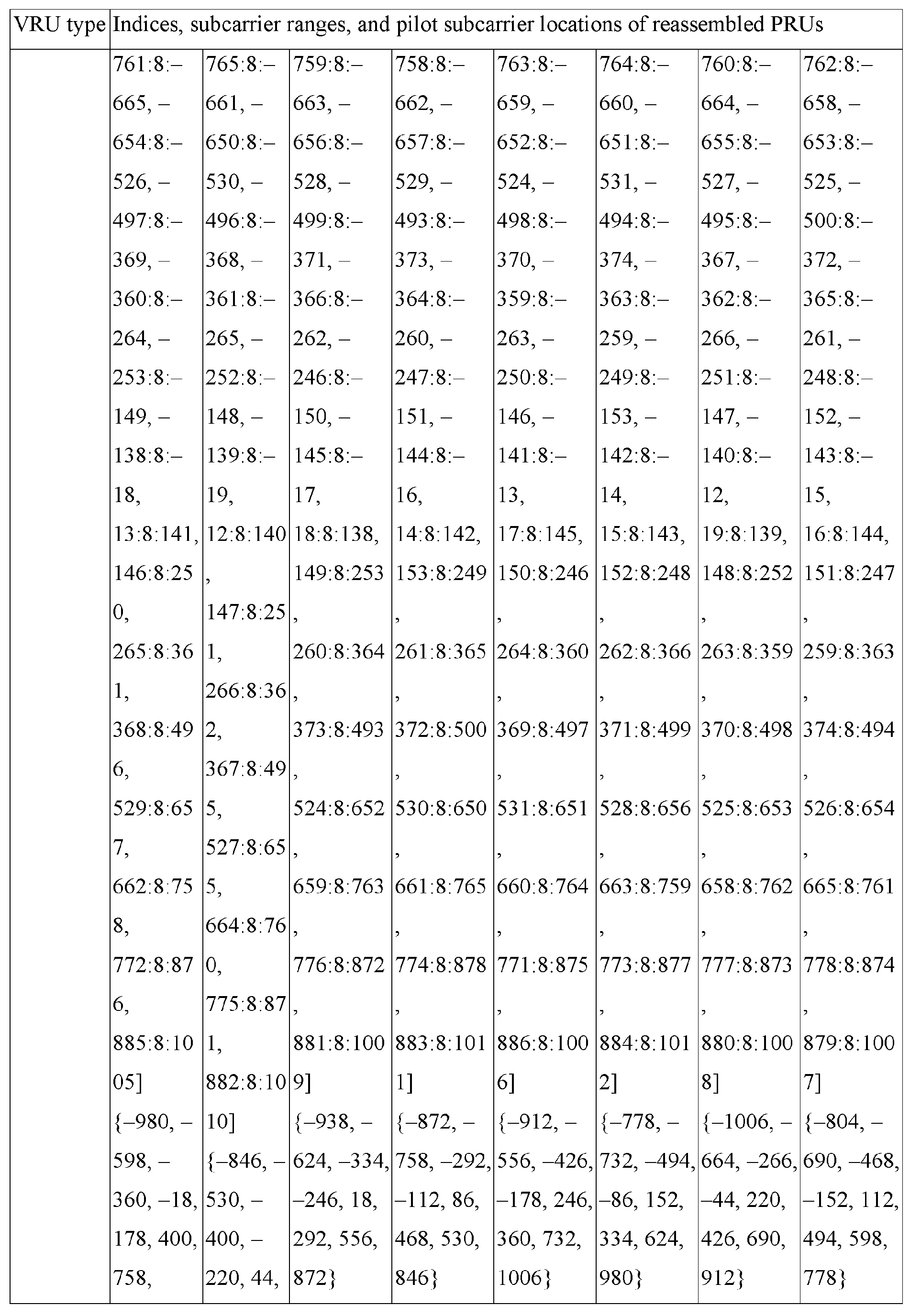

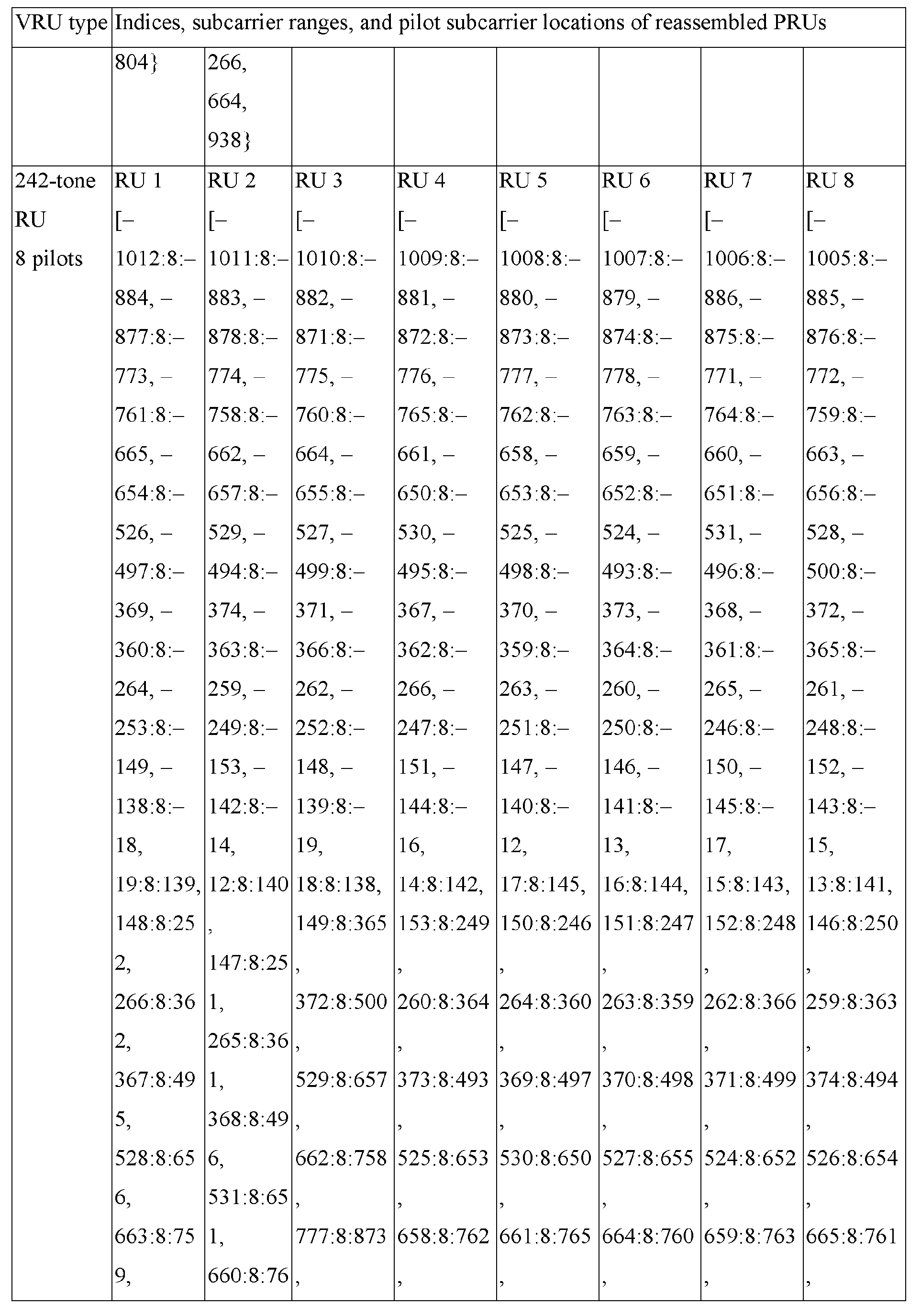

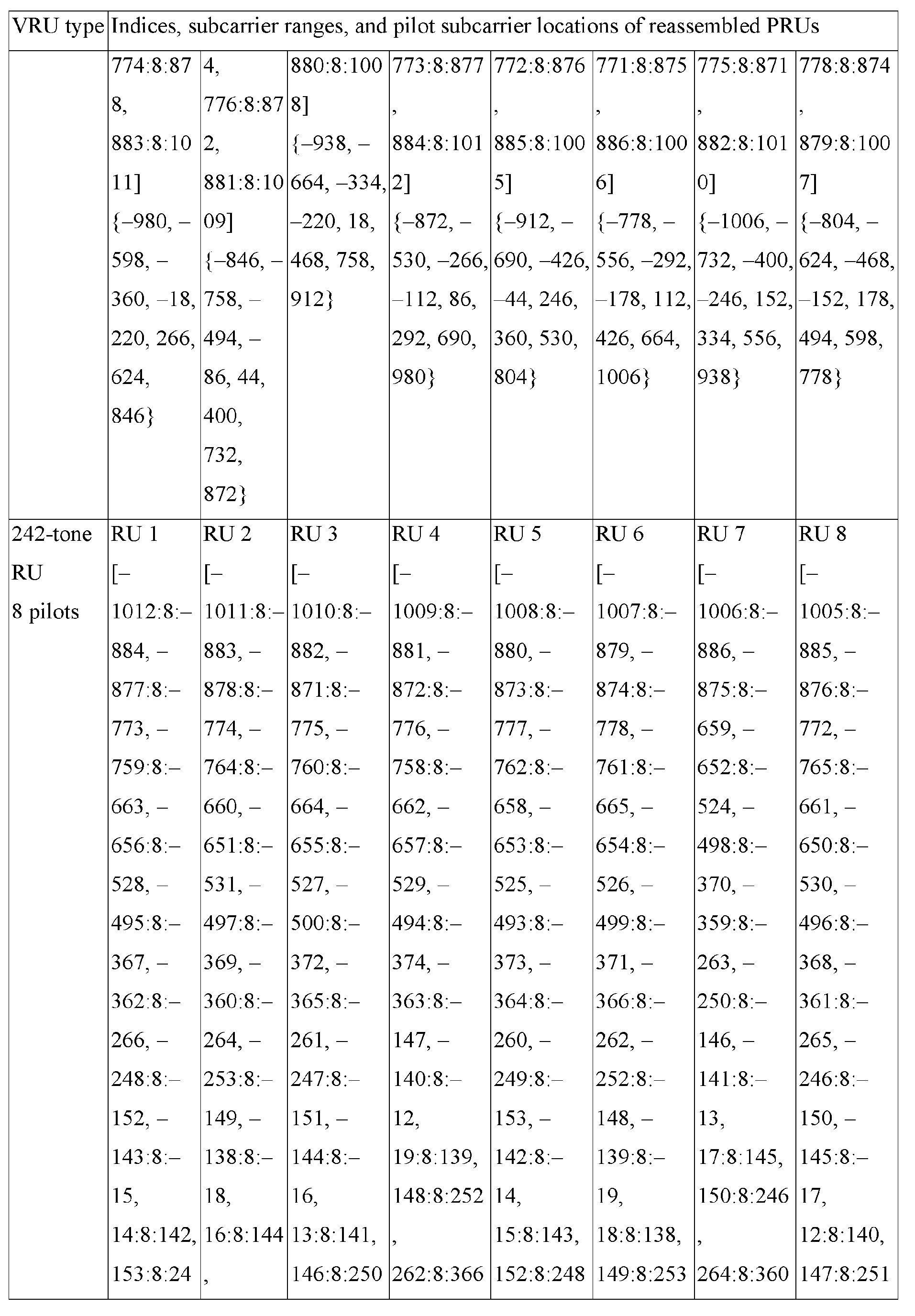

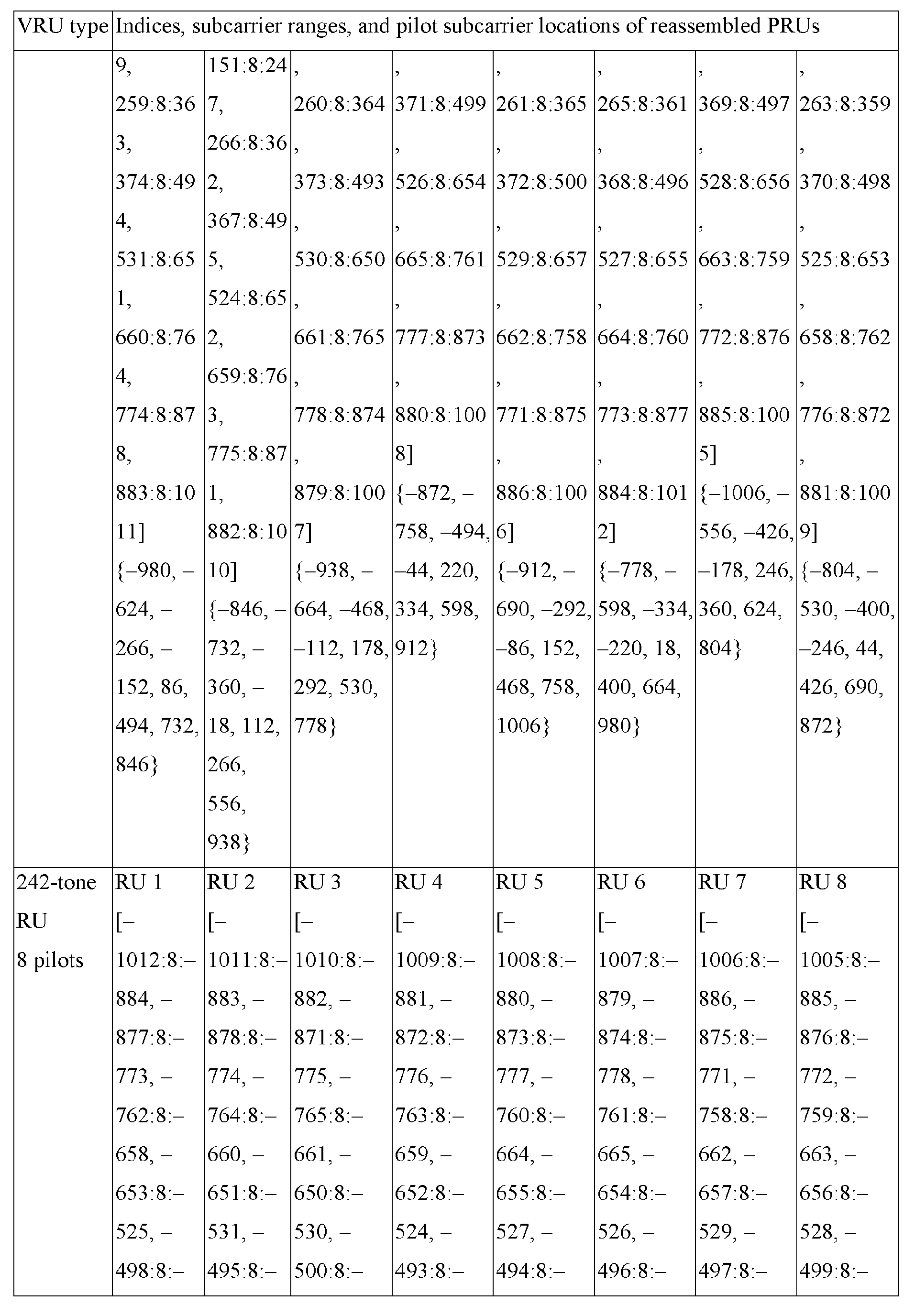

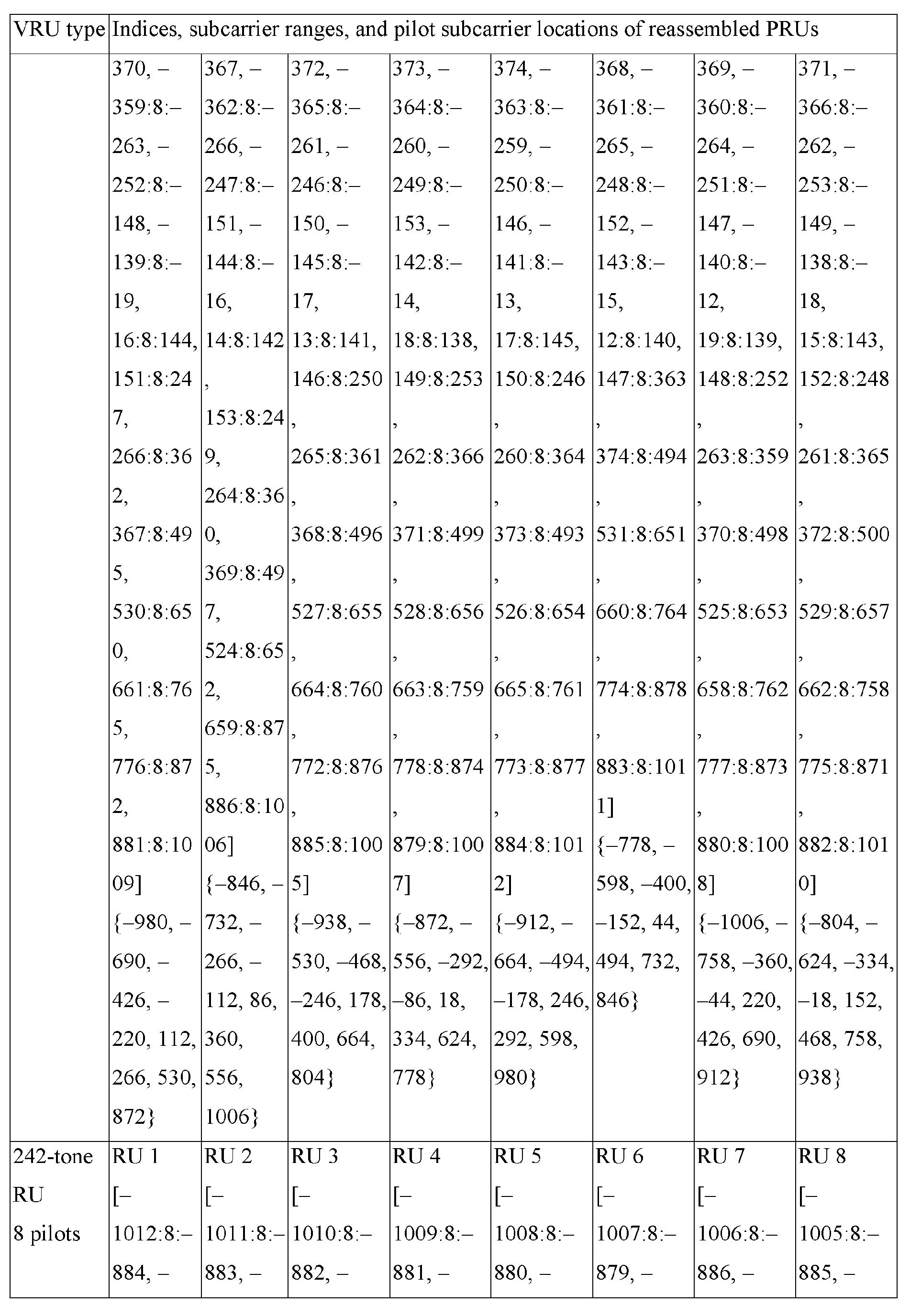

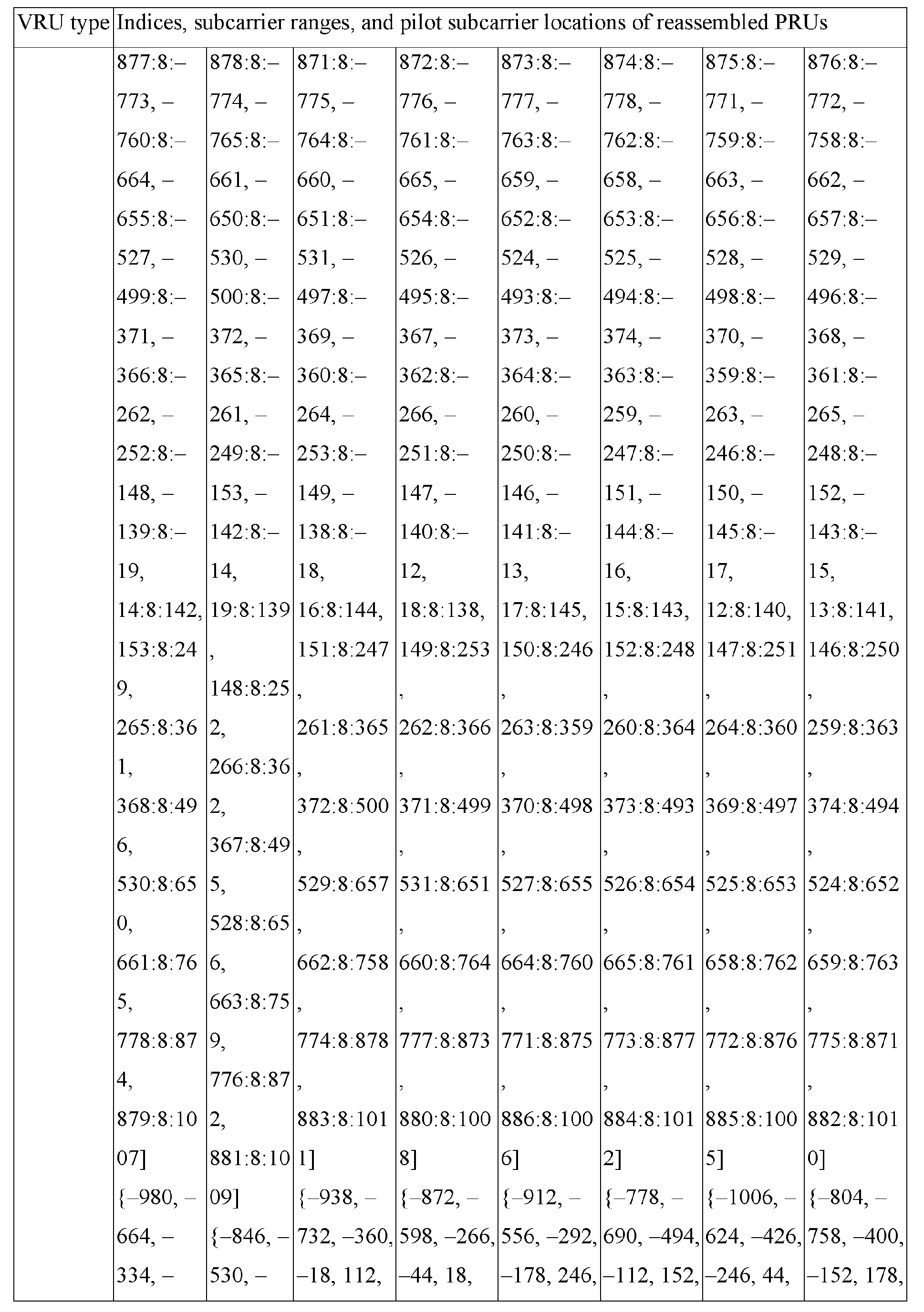

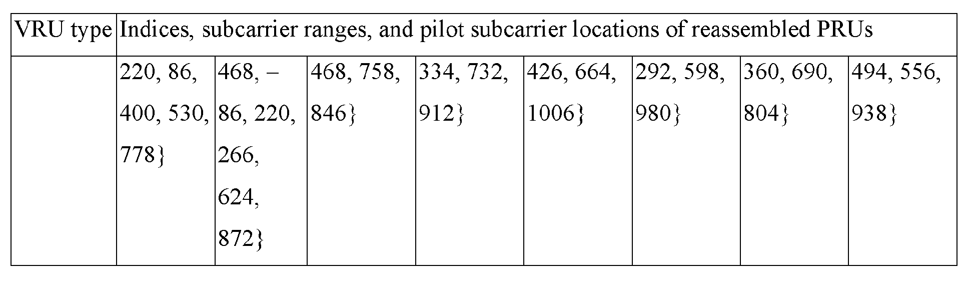

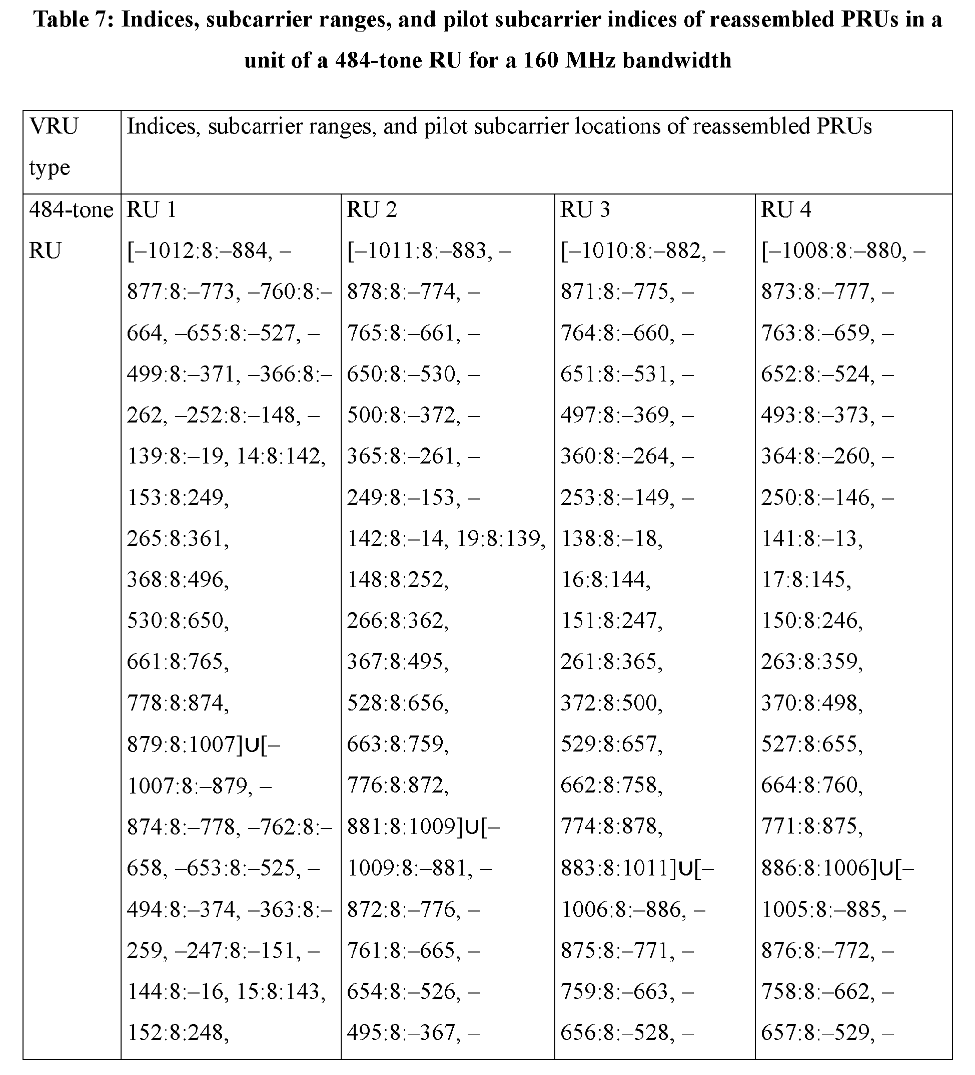

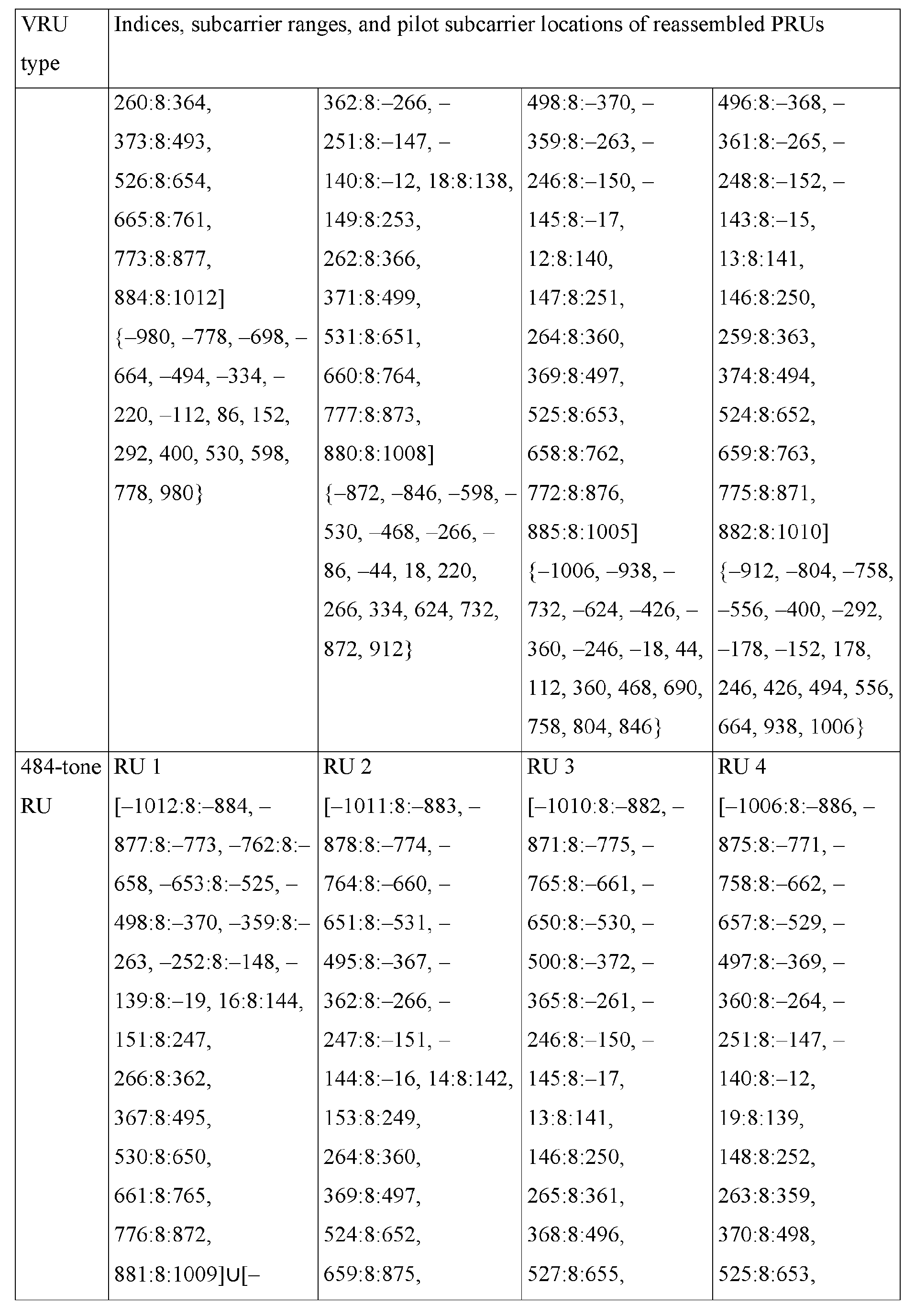

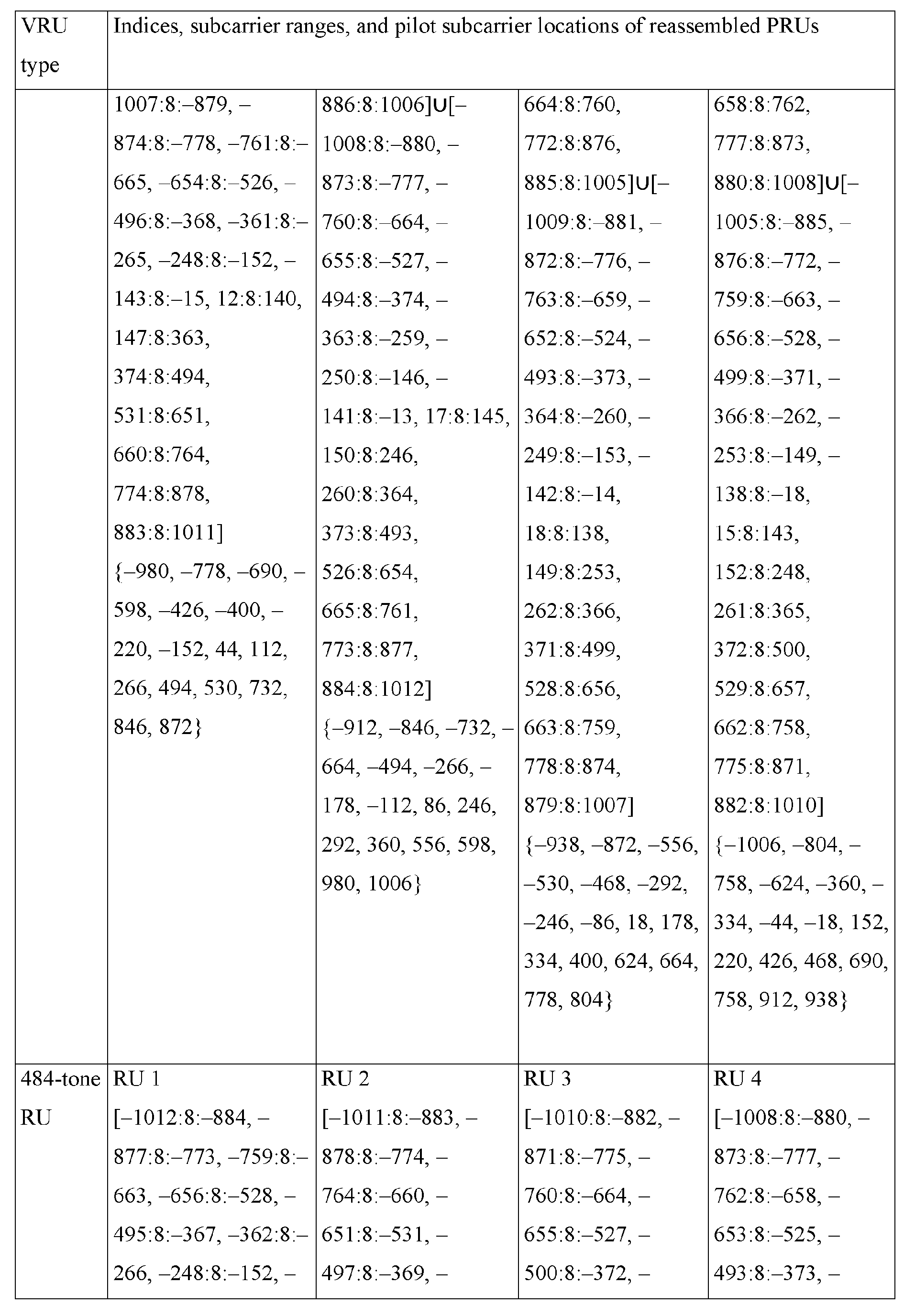

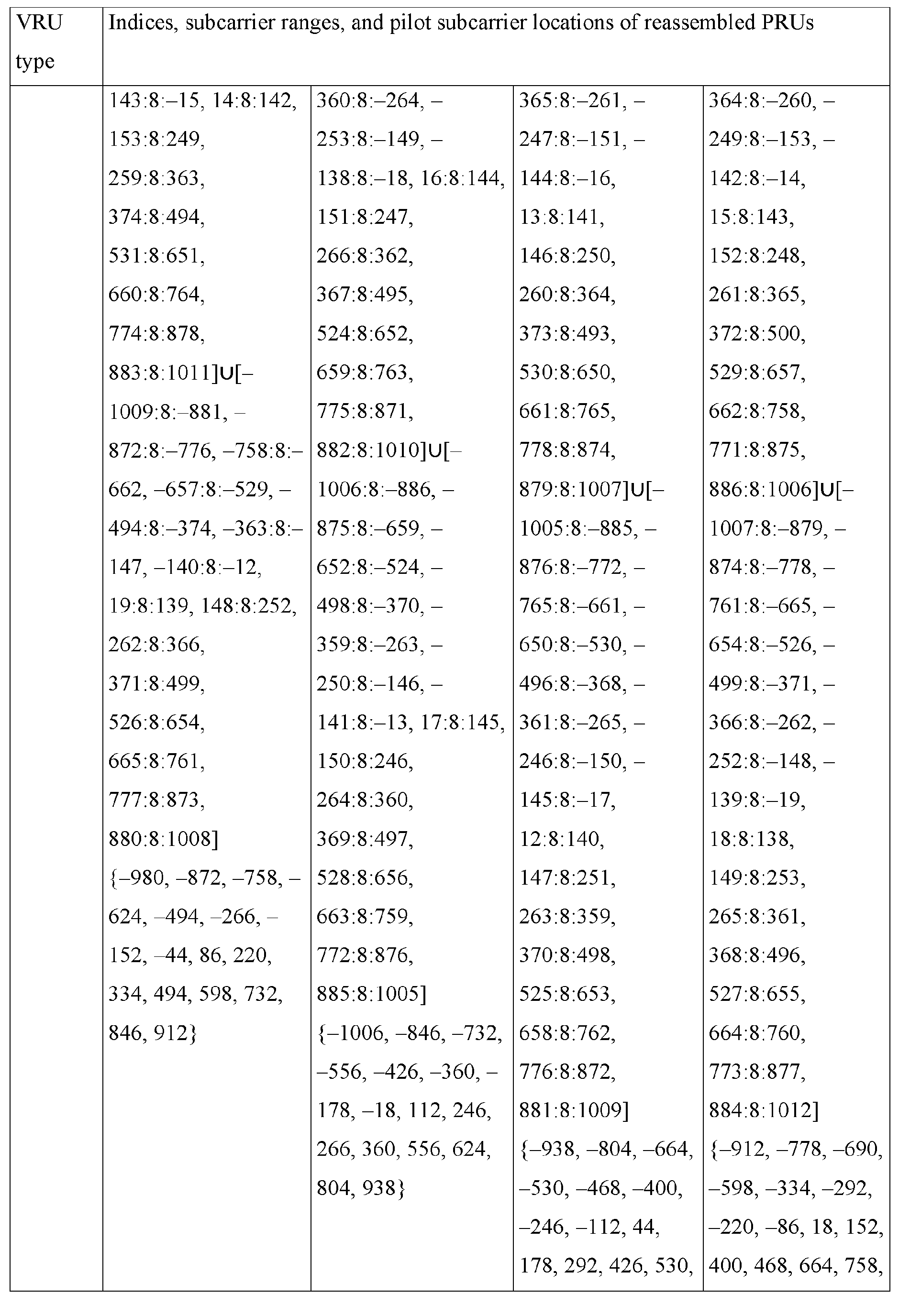

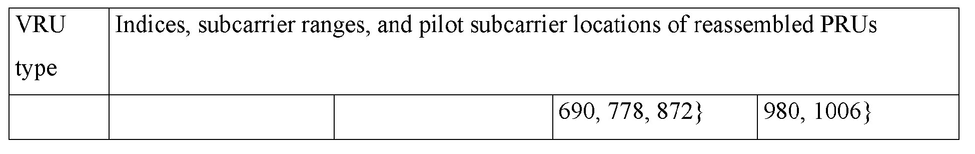

It should be understood that specific tone plans shown in Table 4 to Table 7 and principles of the example embodiments of this disclosure are also applicable to a bandwidth configuration in which a total bandwidth or an RU size is of another value. For example, when the PPDU is sent or received on a total bandwidth of 320 MHz, the total bandwidth may be divided into a first part of bandwidth and a second part of bandwidth, each part is 160 MHz, and the tone plan based on Table 6 or Table 7 may be applied to each part of bandwidth. For another example, the total bandwidth of 320 MHz may be divided into a first part of bandwidth, a second part of bandwidth, a third part of bandwidth, and a fourth part of bandwidth, each part is 80 MHz, and the tone plan based on Table 4 or Table 5 may be applied to each part of bandwidth; and so on. Therefore, details of a bandwidth configuration and a tone plan based on a similar principle are not described herein. FIG. 5 is a flowchart of a communication method according to an embodiment of this disclosure. The method 500 may be implemented at the access point AP 210 or the STA end shown in FIG. 2. For ease of discussion, the following describes the method 500 with reference to FIG. 2. It should be understood that the method 500 is also applicable to another communication scenario and device.

The following describes the method 500 by using the AP 210 as an example. It should be understood that the STA end may also execute the method 500. For example, both the STA 220-1 and the STA 220-2 may execute the method 500.

In step 510, the access point AP 210 transmits or receives a PPDU based on a tone plan corresponding to a first bandwidth. The tone plan includes a physical resource unit PRU, and the PRU includes discrete subcarriers.

In some example embodiments, the PPDU may include indication information indicating whether a PRU used by the PPDU is a VRU or a discrete RU. The VRU is a contiguous RU. The discrete RU includes discrete subcarriers. Optionally, the indication information may also be transmitted independently of the PPDU.

In some example embodiments, there is a mapping relationship between the PRU and the VRU. In some example embodiments, the first bandwidth may include 80 MHz, 160 MHz, 320 MHz, and the like. The first bandwidth is 80 MHz, and a tone plan corresponding to the 80 MHz includes a first PRU, a second PRU, a third PRU, and a fourth PRU. Indices of discrete subcarriers of the first PRU are [-500:4:-368, -365:4:-261, -250:4:-146, -145:4:-13, 15:4:143, 148:4:252, 259:4:363, 370:4:498]; indices of discrete subcarriers of the second PRU are [-499:4:-367, - 366:4:-262, -252:4:-148, -143:4:-15, 14:4:142, 149:4:253, 261:4:365, 68:4:500]; indices of discrete subcarriers of the third PRU are [-498:4:-370, -363:4:-259, -251:4:-147, -144:4:-12, 13:4:145, 146:4:250, 260:4:364, 369:4:497]; and indices of discrete subcarriers of the fourth PRU are [-497:4:-369, -364:4:-260, -253:4:-149, -142:4:-14, 12:4:144, 147:4:251, 262:4:366, 367:4:499]. Herein, a:b:c indicates subcarrier indices from an index a to an index c by using b as a step.

In some example embodiments, indices of pilot subcarriers of the first PRU are {-468, -400, - 246, -178, 152, 220, 426, 494}, indices of pilot subcarriers of the second PRU are {-334, -266, - 220, -152, 18, 86, 400, 468}, indices of pilot subcarriers of the third PRU are {-494, -426, -112, -44, 178, 246, 292, 360}, and indices of pilot subcarriers of the fourth PRU are {-360, -292, -86, -18, 44, 112, 266, 334}.

In some example embodiments, the first bandwidth is 80 MHz, and a tone plan corresponding to the 80 MHz includes a first PRU, a second PRU, a third PRU, and a fourth PRU. Indices of discrete subcarriers of the first PRU are [-500:4:-368, -365:4:-261, -253:4:-149, -142:4:-14, 15:4:143, 148:4:252, 262:4:366, 367:4:499]; indices of discrete subcarriers of the second PRU are [-499:4:-367, -366:4:-262, -252:4:-148, -143:4:-15, 14:4:142, 149:4:253, 261:4:365, 368:4:500]; indices of discrete subcarriers of the third PRU are [-498:4:-370, -363:4:-259, -251:4:-147, -144:4:-12, 13:4:145, 146:4:250, 260:4:364, 369:4:497]; and indices of discrete subcarriers of the fourth PRU are [-497:4:-369, -364:4: -260, -250:4: -146, -145:4: -13, 12:4:144, 147:4:251, 259:4:363, 370:4:498]. Herein, a:b:c indicates subcarrier indices from an index a to an index c by using b as a step.

In some example embodiments, indices of pilot subcarriers of the first PRU are {-468, -400, -86, -18, 152, 220, 266, 334}, indices of pilot subcarriers of the second PRU are {-334, -266, -220, - 152, 18, 86, 400, 468}, indices of pilot subcarriers of the third PRU are {-494, -426, -112, -44, 178, 246, 292, 360}, and indices of pilot subcarriers of the fourth PRU are {-360, -292, -246, - 178, 44, 112, 426, 494}.

In some example embodiments, the first bandwidth is 80 MHz, and a tone plan corresponding to the 80 MHz includes a first PRU, a second PRU, a third PRU, and a fourth PRU. Indices of discrete subcarriers of the first PRU are [-500:4:0368, 0365:4:0261, -252:4:0148, 0143:4:015, 13:4:145, 146:4:250, 259:4:363, 370:4:498]; indices of discrete subcarriers of the second PRU are [-499:4:-367, -366:4:-262, -253:4:-149, -142:4:-14, 12:4:144, 147:4:251, 260:4:364, 369:4:497]; indices of discrete subcarriers of the third PRU are [-498:4:-370, -363:4:-259, - 251:4:-147, -144:4:-12, 15:4:143, 148:4:252, 262:4:366, 367:4:499]; and indices of discrete subcarriers of the fourth PRU are [-497:4: -369, -364:4: -260, -250:4: -146, -145:4: -13, 14:4:142, 149:4:253, 261:4:365, 368:4:500]. Herein, a:b:c indicates subcarrier indices from an index a to an index c by using b as a step.

In some example embodiments, indices of pilot subcarriers of the first PRU are {-468, -400, - 220, -152, 178, 246, 426, 494}, indices of pilot subcarriers of the second PRU are {-334, -266, - 86, -18, 44, 112, 292, 360}, indices of pilot subcarriers of the third PRU are {-494, -426, -112, - 44, 152, 220, 266, 334}, and indices of pilot subcarriers of the fourth PRU are {-360, -292, -246, -178, 18, 86, 400, 468}.

In some example embodiments, the first bandwidth is 80 MHz, and a tone plan corresponding to the 80 MHz includes a first PRU, a second PRU, a third PRU, and a fourth PRU. Indices of discrete subcarriers of the first PRU are [-500:4:0368, 0365:4:0261, -250:4:0146, 0145:4:013, 15:4:143, 148:4:252, 259:4:363, 370:4:498]; indices of discrete subcarriers of the second PRU are [-499:4:-367, -366:4:-262, -253:4:-149, -142:4:-14, 12:4:144, 147:4:251, 260:4:364, 369:4:497]; indices of discrete subcarriers of the third PRU are [-498:4:-370, -363:4:-259, - 252:4:-148, -143:4:-15, 13:4:145, 146:4:250, 261:4:365, 368:4:500]; and indices of discrete subcarriers of the fourth PRU are [-497:4:-369, -364:4:-260, -251:4:-147, -144:4:-12, 14:4:142, 149:4:253, 262:4:366, 367:4:499]. Herein, a:b:c indicates subcarrier indices from an index a to an index c by using b as a step.

In some example embodiments, indices of pilot subcarriers of the first PRU are {-468, -400, - 246, -178, 152, 220, 426, 494}, indices of pilot subcarriers of the second PRU are {-334, -266, - 86, -18, 44, 112, 292, 360}, indices of pilot subcarriers of the third PRU are {-494, -426, -220, - 152, 178, 246, 400, 468}, and indices of pilot subcarriers of the fourth PRU are {-360, -292, - 112, -44, 18, 86, 266, 334}.

In some example embodiments, the first bandwidth is 80 MHz, and a tone plan corresponding to the 80 MHz includes a first PRU, a second PRU, a third PRU, and a fourth PRU. Indices of discrete subcarriers of the first PRU are [-500:4:-368, -365:4:-261, -252:4:-148, -143:4:-15, 13:4:145, 146:4:250, 259:4:363, 370:4:498]; indices of discrete subcarriers of the second PRU are [-499:4:-367, -366:4:-262, -253:4:-149, -142:4:-14, 12:4:144, 147:4:251, 260:4:364, 369:4:497]; indices of discrete subcarriers of the third PRU are [-498:4:-370, -363:4:-259, -250:4:-146, -145:4:-13, 15:4:143, 148:252, 261:4:365, 368:4:500]; and indices of discrete subcarriers of the fourth PRU are [-497:4:-369, -364:4:-260, -251:4:-147, -144:4:-12, 14:4:142, 149:4:253, 262:4:366, 367:4:499]. Herein, a:b:c indicates subcarrier indices from an index a to an index c by using b as a step.

In some example embodiments, indices of pilot subcarriers of the first PRU are {-468, -400, - 220, -152, 178, 246, 426, 494}, indices of pilot subcarriers of the second PRU are {-334, -266, - 86, -18, 44, 112, 292, 360}, indices of pilot subcarriers of the third PRU are {-494, -426, -246, - 178, 152, 220, 400, 468}, and indices of pilot subcarriers of the fourth PRU are {-360, -292, - 112, -44, 18, 86, 266, 334}.

In some example embodiments, the first bandwidth is 80 MHz, and a tone plan corresponding to the 80 MHz includes a first PRU, a second PRU, a third PRU, and a fourth PRU. Indices of discrete subcarriers of the first PRU are [-500:4:-368, -365:4:-261, -250:4:-146, -145:4:-13, 15:4:143, 148:4:252, 259:4:363, 370:4:498]; indices of discrete subcarriers of the second PRU are [-499:4:-367, -366:4:-262, -253:4:-149, -142:4:-14, 12:4:144, 147:4:251, 260:4:364, 369:4:497]; indices of discrete subcarriers of the third PRU are [-498:4:-370, -363:4:-259, -252:4:-148, -143:4:-15, 13:4:145, 146:4:250, 261:4:365, 368:4:500]; and indices of discrete subcarriers of the fourth PRU are [-497:4:-369, -364:4:-260, -251:4:-147, -144:4:-12, 14:4:142, 149:4:253, 262:4:366, 367:4:499]. Herein, a:b:c indicates subcarrier indices from an index a to an index c by using b as a step.

In some example embodiments, indices of pilot subcarriers of the first PRU are {-468, -400, - 246, -178, 152, 220, 426, 494}, indices of pilot subcarriers of the second PRU are {-334, -266, - 86, -18, 44, 112, 292, 360}, indices of pilot subcarriers of the third PRU are {-494, -426, -220, - 152, 178, 246, 400, 468}, and indices of pilot subcarriers of the fourth PRU are {-360, -292, - 112, -44, 18, 86, 266, 334}.

In some example embodiments, the first bandwidth is 80 MHz, and a tone plan corresponding to the 80 MHz includes a first PRU, a second PRU, a third PRU, and a fourth PRU. Indices of discrete subcarriers of the first PRU are [-500:4:-368, -365:4:-261, -252:4:-148, -143:4:-15, 13:4:145, 146:4:250, 259:4:363, 370:4:498]; indices of discrete subcarriers of the second PRU are [-499:4:-367, -366:4:-262, -251:4:-147, -144:4:-12, 14:4:142, 149:4:253, 260:4:364, 369:4:497]; indices of discrete subcarriers of the third PRU are [-498:4:-370, -363:4:-259, -250:4:-146, -145:4:-13, 15:4:143, 148:252, 261:4:365, 368:4:500]; and indices of discrete subcarriers of the fourth PRU are [-497:4:-369, -364:4:-260, -253:4:-149, -142:4:-14, 12:4:144, 147:4:251, 262:4:366, 367:4:499]. Herein, a:b:c indicates subcarrier indices from an index a to an index c by using b as a step.

In some example embodiments, indices of pilot subcarriers of the first PRU are {-468, -400, - 220, -152, 178, 246, 426, 494}, indices of pilot subcarriers of the second PRU are {-334, -266, - 112, -44, 18, 86, 292, 360}, indices of pilot subcarriers of the third PRU are {-494, -426, -246, - 178, 152, 220, 400, 468}, and indices of pilot subcarriers of the fourth PRU are {-360, -292, -86, -18, 44, 112, 266, 334}.

In some example embodiments, the first bandwidth is 80 MHz, and a tone plan corresponding to the 80 MHz includes a first PRU, a second PRU, a third PRU, and a fourth PRU. Indices of discrete subcarriers of the first PRU are [-500:4:-368, -365:4:-261, -253:4:-149, -142:4:-14, 15:4:143, 148:4:252, 262:4:366, 367:4:499]; indices of discrete subcarriers of the second PRU are [-499:4:-367, -366:4:-262, -251:4:-147, -144:4:-12, 14:4:142, 149:4:253, 260:4:364, 369:4:497]; indices of discrete subcarriers of the third PRU are [-498:4:-370, -363:4:-259, -252:4:-148, -143:4:-15, 13:4:145, 146:4:250, 261:4:365, 368:4:500]; and indices of discrete subcarriers of the fourth PRU are [-497:4: -369, -364:4: -260, -250:4: -146, -145:4: -13, 12:4:144, 147:4:251, 259:4:363, 370:4:498]. Herein, a:b:c indicates subcarrier indices from an index a to an index c by using b as a step.

In some example embodiments, indices of pilot subcarriers of the first PRU are {-468, -400, -86, -18, 152, 220, 266, 334}, indices of pilot subcarriers of the second PRU are {-334, -266, -112, - 44, 18, 86, 292, 360}, indices of pilot subcarriers of the third PRU are {-494, -426, -220, -152, 178, 246, 400, 468}, and indices of pilot subcarriers of the fourth PRU are {-360, -292, -246, - 178, 44, 112, 426, 494}.

In some example embodiments, the first bandwidth is 80 MHz, and a tone plan corresponding to the 80 MHz includes a first PRU, a second PRU, a third PRU, and a fourth PRU. Indices of discrete subcarriers of the first PRU are [-500:4:-368, -365:4:-261, -252:4:-148, -143:4:-15, 13:4:145, 146:4:250, 259:4:363, 370:4:498]; indices of discrete subcarriers of the second PRU are [-499:4:-367, -366:4:-262, -253:4:-149, -142:4:-14, 15:4:143, 148:4:252, 261:4:365, 368:4:500]; indices of discrete subcarriers of the third PRU are [-498:4:-370, -363:4:-259, -250:4:-146, -145:4:-13, 12:4:144, 147:4:251, 260:4:364, 369:4:497]; and indices of discrete subcarriers of the fourth PRU are [-497:4:-369, -364:4:-260, -251:4:-147, -144:4:-12, 14:4:142, 149:4:253, 262:4:366, 367:4:499]. Herein, a:b:c indicates subcarrier indices from an index a to an index c by using b as a step.

In some example embodiments, indices of pilot subcarriers of the first PRU are {-468, -400, - 220, -152, 178, 246, 426, 494}, indices of pilot subcarriers of the second PRU are {-334, -266, - 86, -18, 152, 220, 400, 468}, indices of pilot subcarriers of the third PRU are {-494, -426, -246, -178, 44, 112, 292, 360}, and indices of pilot subcarriers of the fourth PRU are {-360, -292, -112, -44, 18, 86, 266, 334}.

In some example embodiments, the first bandwidth is 80 MHz, and a tone plan corresponding to the 80 MHz includes a first PRU, a second PRU, a third PRU, and a fourth PRU. Indices of discrete subcarriers of the first PRU are [-500:4:-368, -365:4:-261, -252:4:-148, -143:4:-15, 14:4:142, 149:4:253, 262:4:366, 367:4:499]; indices of discrete subcarriers of the second PRU are [-499:4:-367, -366:4:-262, -251:4:-147, -144:4:-12, 15:4:143, 148:4:252, 259:4:363, 370:4:498]; indices of discrete subcarriers of the third PRU are [-498:4:-370, -363:4:-259, -250:4:-146, -145:4:-13, 12:4:144, 147:4:251, 260:4:364, 369:4:497]; and indices of discrete subcarriers of the fourth PRU are [-497:4:-369, -364:4:-260, -253:4:-149, -142:4:-14, 13:4:145, 146:4:250, 261:4:365, 368:4:500]. Herein, a:b:c indicates subcarrier indices from an index a to an index c by using b as a step.

In some example embodiments, indices of pilot subcarriers of the first PRU are {-468, -400, - 220, -152, 18, 86, 266, 334}, indices of pilot subcarriers of the second PRU are {-334, -266, - 112, -44, 152, 220, 426, 494}, indices of pilot subcarriers of the third PRU are {-494, -426, -246, -178, 44, 112, 292, 360}, and indices of pilot subcarriers of the fourth PRU are {-360, -292, -86, -18, 178, 246, 400, 468}.

In some example embodiments, the first bandwidth is 80 MHz, and a tone plan corresponding to the 80 MHz includes a first PRU, a second PRU, a third PRU, and a fourth PRU. Indices of discrete subcarriers of the first PRU are [-500:4:-368, -365:4:-261, -250:4:-146, -145:4:-13, 15:4:143, 148:4:252, 259:4:363, 370:4:498]; indices of discrete subcarriers of the second PRU are [-499:4:-367, -366:4:-262, -251:4:-147, -144:4:-12, 14:4:142, 149:4:253, 260:4:364, 369:4:497]; indices of discrete subcarriers of the third PRU are [-498:4:-370, -363:4:-259, -252:4:-148, -143:4:-15, 13:4:145, 146:4:250, 261:4:365, 368:4:500]; and indices of discrete subcarriers of the fourth PRU are [-497:4:-369, -364:4:-260, -253:4:-149, -142:4:-14, 12:4:144, 147:4:251, 262:4:366, 367:4:499]. Herein, a:b:c indicates subcarrier indices from an index a to an index c by using b as a step.

In some example embodiments, indices of pilot subcarriers of the first PRU are {-468, -400, - 246, -178, 152, 220, 426, 494}, indices of pilot subcarriers of the second PRU are {-334, -266, - 112, -44, 18, 86, 292, 360}, indices of pilot subcarriers of the third PRU are {-494, -426, -220, - 152, 178, 246, 400, 468}, and indices of pilot subcarriers of the fourth PRU are {-360, -292, -86, -18, 44, 112, 266, 334}.

In some example embodiments, the first bandwidth is 80 MHz, and a tone plan corresponding to the 80 MHz includes a first PRU, a second PRU, a third PRU, and a fourth PRU. Indices of discrete subcarriers of the first PRU are [-500:4:-368, -365:4:-261, -253:4:-149, -142:4:-14, 13:4:145, 146:4:250, 260:4:364, 369:4:497]; indices of discrete subcarriers of the second PRU are [-499:4:-367, -366:4:-262, -252:4:-148, -143:4:-15, 14:4:142, 149:4:253, 261:4:365, 368:4:500]; indices of discrete subcarriers of the third PRU are [-498:4:-370, -363:4:-259, -251:4:-147, -144:4:-12, 15:4:143, 148:4:252, 262:4:366, 367:4:499]; and indices of discrete subcarriers of the fourth PRU are [-497:4: -369, -364:4: -260, -250:4: -146, -145:4: -13, 12:4:144, 147:4:251, 259:4:363, 370:4:498]. Herein, a:b:c indicates subcarrier indices from an index a to an index c by using b as a step.

In some example embodiments, indices of pilot subcarriers of the first PRU are {-468, -400, -86, -18, 178, 246, 292, 360}, indices of pilot subcarriers of the second PRU are {-334, -266, -220, - 152, 18, 86, 400, 468}, indices of pilot subcarriers of the third PRU are {-494, -426, -112, -44, 152, 220, 266, 334}, and indices of pilot subcarriers of the fourth PRU are {-360, -292, -246, - 178, 44, 112, 426, 494}.

In some example embodiments, the first bandwidth is 80 MHz, and a tone plan corresponding to the 80 MHz includes a first PRU, a second PRU, a third PRU, and a fourth PRU. Indices of discrete subcarriers of the first PRU are [-500:4:-368, -365:4:-261, -253:4:-149, -142:4:-14, 13:4:145, 146:4:250, 260:4:364, 369:4:497]; indices of discrete subcarriers of the second PRU are [-499:4:-367, -366:4:-262, -252:4:-148, -143:4:-15, 12:4:144, 147:4:251, 259:4:363, 370:4:498]; indices of discrete subcarriers of the third PRU are [-498:4:-370, -363:4:-259, -251:4:-147, -144:4:-12, 15:4:143, 148:4:252, 262:4:366, 367:4:499]; and indices of discrete subcarriers of the fourth PRU are [-497:4: -369, -364:4: -260, -250:4: -146, -145:4: -13, 14:4:142, 149:4:253, 261:4:365, 368:4:500]. Herein, a:b:c indicates subcarrier indices from an index a to an index c by using b as a step.

In some example embodiments, indices of pilot subcarriers of the first PRU are {-468, -400, -86, -18, 178, 246, 292, 360}, indices of pilot subcarriers of the second PRU are {-334, -266, -220, - 152, 44, 112, 426, 494}, indices of pilot subcarriers of the third PRU are {-494, -426, -112, -44, 152, 220, 266, 334}, and indices of pilot subcarriers of the fourth PRU are {-360, -292, -246, - 178, 18, 86, 400, 468}.

In some example embodiments, the first bandwidth is 80 MHz, and the tone plan corresponding to the 80 MHz includes a first PRU, a second PRU, a third PRU, a fourth PRU, a fifth PRU, a sixth PRU, a seventh PRU, and an eighth PRU. Indices of discrete subcarriers of the first PRU are [-499:8:-395, -361:8:-265, -252:8:-148, -112:8:-16, 19:8:115, 152:8:248, 262:8:358, 401:8:497]; indices of discrete subcarriers of the second PRU are [-498:8:-394, -362:8:-266, -251:8:-147, - 111:8:-15, 20:8:116, 151:8:247, 263:8:359, 398:8:494]; indices of discrete subcarriers of the third PRU are [-497:8:-401, -364:8:-260, -248:8:-152, -115:8:-19, 13:8:117, 154:8:250, 266:8:362, 399:8:495]; indices of discrete subcarriers of the fourth PRU are [-496:8:-400, -365:8:-261, - 247:8:-151, -116:8:-20, 15:8:111, 153:8:249, 264:8:360, 394:8:498]; indices of discrete subcarriers of the fifth PRU are [-495:8:-399, -359:8:-263, -250:8:-154, -114:8:-18, 14:8:118, 150:8:246, 267:8:363, 395:8:499]; indices of discrete subcarriers of the sixth PRU are [-494:8:-398, -358:8:-262, -245:8:-149, -113:8:-17, 16:8:112, 148:8:252, 261:8:365, 397:8:493]; indices of discrete subcarriers of the seventh PRU are [-493:8:-397, -363:8:-267, -246:8:-150, -118:8:-14, 18:8:114, 147:8:251, 265:8:361, 396:8:492]; and indices of discrete subcarriers of the eighth PRU are [-492:8:-396, -360:8:-264, -249:8:-153, -117:8:-13, 17:8:113, 149:8:245, 260:8:364, 400:8:496]. Herein, a:b:c indicates subcarrier indices from an index a to an index c by using b as a step.

In some example embodiments, indices of pilot subcarriers of the first PRU are {-220, -112, 152, 334}, indices of pilot subcarriers of the second PRU are {-426, -266, 44, 494}, indices of pilot subcarriers of the third PRU are {-292, -152, 178, 266}, indices of pilot subcarriers of the fourth PRU are {-400, -44, 360, 426}, indices of pilot subcarriers of the fifth PRU are {-178, -18, 86, 246}, indices of pilot subcarriers of the sixth PRU are {-494, -334, 112, 220}, indices of pilot subcarriers of the seventh PRU are {-246, -86, 18, 468}, and indices of pilot subcarriers of the eighth PRU are {-468, -360, 292, 400}.

In some example embodiments, the first bandwidth is 80 MHz, and a tone plan corresponding to the 80 MHz includes a first PRU, a second PRU, a third PRU, a fourth PRU, a fifth PRU, a sixth PRU, a seventh PRU, and an eighth PRU. Indices of discrete subcarriers of the first PRU are [-499:8:-395, -359:8:-263, -252:8:-148, -111:8:-15, 20:8:116, 151:8:247, 264:8:360, 400:8:496]; indices of discrete subcarriers of the second PRU are [-498:8:-394, -363:8:-267, -247:8:-151, - 112:8:-16, 19:8:115, 147:8:251, 262:8:358, 398:8:494]; indices of discrete subcarriers of the third PRU are [-497:8:-401, -364:8:-260, -248:8:-152, -117:8:-13, 17:8:113, 153:8:249, 266:8:362, 396:8:492]; indices of discrete subcarriers of the fourth PRU are [-496:8:-400, -360:8:-264, - 251:8:-147, -115:8:-19, 15:8:111, 154:8:250, 260:8:364, 399:8:495]; indices of discrete subcarriers of the fifth PRU are [-495:8:-399, -365:8:-261, -246:8:-150, -116:8:-20, 14:8:118, 152:8:248, 263:8:359, 401:8:497]; indices of discrete subcarriers of the sixth PRU are [-494:8:-398, -358:8:-262, -245:8:-149, -118:8:-14, 13:8:117, 150:8:246, 265:8:361, 397:8:493]; indices of discrete subcarriers of the seventh PRU are [-493:8:-397, -361:8:-265, -250:8:-154, -114:8:-18, 16:8:112, 148:8:252, 267:8:363, 395:8:499]; and indices of discrete subcarriers of the eighth PRU are [-492:8:-396, -362:8:-266, -249:8:-153, -113:8:-17, 18:8:114, 149:8:245, 261:8:365, 394:8:498]. Herein, a:b:c indicates subcarrier indices from an index a to an index c by using b as a step.

In some example embodiments, indices of pilot subcarriers of the first PRU are {-220, 44, 360, 400}, indices of pilot subcarriers of the second PRU are {-426, -112, 334, 494}, indices of pilot subcarriers of the third PRU are {-292, -152, 266, 468}, indices of pilot subcarriers of the fourth PRU are {-400, -360, 178, 292}, indices of pilot subcarriers of the fifth PRU are {-246, -44, 86, 152}, indices of pilot subcarriers of the sixth PRU are {-494, -334, -86, 246}, indices of pilot subcarriers of the seventh PRU are {-178, -18, 112, 220}, and indices of pilot subcarriers of the eighth PRU are {-468, -266, 18, 426}.

In some example embodiments, the first bandwidth is 80 MHz, and the tone plan corresponding to the 80 MHz includes a first PRU, a second PRU, a third PRU, a fourth PRU, a fifth PRU, a sixth PRU, a seventh PRU, and an eighth PRU. Indices of discrete subcarriers of the first PRU are [-499:8:-395, -361:8:-265, -248:8:-152, -111:8:-15, 19:8:115, 148:8:252, 262:8:358, 400:8:496]; indices of discrete subcarriers of the second PRU are [-498:8:-394, -365:8:-261, -249:8:-153, - 112:8:-16, 20:8:116, 149:8:245, 265:8:361, 398:8:494]; indices of discrete subcarriers of the third PRU are [-497:8:-401, -362:8:-266, -252:8:-148, -116:8:-20, 17:8:113, 152:8:248, 261:8:365, 397:8:493]; indices of discrete subcarriers of the fourth PRU are [-496:8:-400, -358:8:-262, - 245:8:-149, -115:8:-19, 13:8:117, 151:8:247, 264:8:360, 394:8:498]; indices of discrete subcarriers of the fifth PRU are [-495:8:-399, -359:8:-263, -246:8:-150, -118:8:-14, 18:8:114, 154:8:250, 267:8:363, 395:8:499]; indices of discrete subcarriers of the sixth PRU are [-494:8:-398, -363:8:-267, -247:8:-151, -117:8:-13, 16:8:112, 153:8:249, 260:8:364, 396:8:492]; indices of discrete subcarriers of the seventh PRU are [-493:8:-397, -360:8:-264, -250:8:-154, -113:8:-17, 14:8:118, 147:8:251, 266:8:362, 401:8:497]; and indices of discrete subcarriers of the eighth PRU are [-492:8:-396, -364:8:-260, -251:8:-147, -114:8:-18, 15:8:111, 150:8:246, 263:8:359, 399:8:495]. Herein, a:b:c indicates subcarrier indices from an index a to an index c by using b as a step.

In some example embodiments, indices of pilot subcarriers of the first PRU are {-152, 220, 334, 400}, indices of pilot subcarriers of the second PRU are {-426, -112, 44, 494}, indices of pilot subcarriers of the third PRU are {-266, -220, -44, 152}, indices of pilot subcarriers of the fourth PRU are {-400, -334, 360, 426}, indices of pilot subcarriers of the fifth PRU are {-246, -86, 18, 178}, indices of pilot subcarriers of the sixth PRU are {-494, 112, 292, 468}, indices of pilot subcarriers of the seventh PRU are {-360, -178, 86, 266}, and indices of pilot subcarriers of the eighth PRU are {-468, -292, -18, 246}.

In some example embodiments, the first bandwidth is 80 MHz, and the tone plan corresponding to the 80 MHz includes a first PRU, a second PRU, a third PRU, a fourth PRU, a fifth PRU, a sixth PRU, a seventh PRU, and an eighth PRU. Indices of discrete subcarriers of the first PRU are [-499:8:-395, -361:8:-265, -245:8:-149, -116:8:-20, 16:8:112, 152:8:248, 260:8:364, 397:8:493]; indices of discrete subcarriers of the second PRU are [-498:8:-394, -359:8:-263, -246:8:-150, - 114:8:-18, 17:8:113, 147:8:251, 262:8:358, 401:8:497]; indices of discrete subcarriers of the third PRU are [-497:8:-401, -365:8:-261, -248:8:-152, -113:8:-17, 14:8:118, 153:8:249, 266:8:362, 396:8:492]; indices of discrete subcarriers of the fourth PRU are [-496:8:-400, -364:8:-260, - 247:8:-151, -115:8:-19, 18:8:114, 154:8:250, 267:8:363, 395:8:499]; indices of discrete subcarriers of the fifth PRU are [-495:8:-399, -358:8:-262, -249:8:-153, -118:8:-14, 15:8:111, 150:8:246, 261:8:365, 398:8:494]; indices of discrete subcarriers of the sixth PRU are [-494:8:-398, -363:8:-267, -251:8:-147, -112:8:-16, 20:8:116, 151:8:247, 263:8:359, 394:8:498]; indices of discrete subcarriers of the seventh PRU are [-493:8:-397, -362:8:-266, -250:8:-154, -111:8:-15, 13:8:117, 148:8:252, 264:8:360, 399:8:495]; and indices of discrete subcarriers of the eighth PRU are [-492:8:-396, -360:8:-264, -252:8:-148, -117:8:-13, 19:8:115, 149:8:245, 265:8:361, 400:8:496]. Herein, a:b:c indicates subcarrier indices from an index a to an index c by using b as a step.

In some example embodiments, indices of pilot subcarriers of the first PRU are {-44, 112, 152, 292}, indices of pilot subcarriers of the second PRU are {-426, -246, -18, 334}, indices of pilot subcarriers of the third PRU are {-152, 86, 266, 468}, indices of pilot subcarriers of the fourth PRU are {-400, -292, 18, 178}, indices of pilot subcarriers of the fifth PRU are {-334, -86, 246, 494}, indices of pilot subcarriers of the sixth PRU are {-494, -112, 44, 426}, indices of pilot subcarriers of the seventh PRU are {-266, -178, 220, 360}, and indices of pilot subcarriers of the eighth PRU are {-468, -360, -220, 400}.

In some example embodiments, the first bandwidth is 80 MHz, and the tone plan corresponding to the 80 MHz includes a first PRU, a second PRU, a third PRU, a fourth PRU, a fifth PRU, a sixth PRU, a seventh PRU, and an eighth PRU. Indices of discrete subcarriers of the first PRU are [-499:8:-395, -363:8:-267, -246:8:-150, -118:8:-14, 18:8:114, 154:8:250, 263:8:359, 399:8:495]; indices of discrete subcarriers of the second PRU are [-498:8:-394, -362:8:-266, -247:8:-151, - 111:8:-15, 13:8:117, 153:8:249, 264:8:360, 396:8:492]; indices of discrete subcarriers of the third PRU are [-497:8:-401, -365:8:-261, -252:8:-148, -112:8:-16, 20:8:116, 152:8:248, 265:8:361, 397:8:493]; indices of discrete subcarriers of the fourth PRU are [-496:8:-400, -364:8:-260, - 251:8:-147, -115:8:-19, 17:8:113, 149:8:245, 262:8:358, 398:8:494]; indices of discrete subcarriers of the fifth PRU are [-495:8:-399, -359:8:-263, -250:8:-154, -114:8:-18, 14:8:118, 150:8:246, 267:8:363, 395:8:499]; indices of discrete subcarriers of the sixth PRU are [-494:8:-398, -358:8:-262, -245:8:-149, -113:8:-17, 19:8:115, 147:8:251, 260:8:364, 400:8:496]; indices of discrete subcarriers of the seventh PRU are [-493:8:-397, -361:8:-265, -248:8:-152, -116:8:-20, 16:8:112, 148:8:252, 261:8:365, 401:8:497]; and indices of discrete subcarriers of the eighth PRU are [-492:8:-396, -360:8:-264, -249:8:-153, -117:8:-13, 15:8:111, 151:8:247, 266:8:362, 394:8:498]. Herein, a:b:c indicates subcarrier indices from an index a to an index c by using b as a step.

In some example embodiments, indices of pilot subcarriers of the first PRU are {-246, -86, 18, 178}, indices of pilot subcarriers of the second PRU are {-426, -266, 360, 468}, indices of pilot subcarriers of the third PRU are {-220, -112, 44, 152}, indices of pilot subcarriers of the fourth PRU are {-400, -292, 334, 494}, indices of pilot subcarriers of the fifth PRU are {-178, -18, 86, 246}, indices of pilot subcarriers of the sixth PRU are {-494, -334, 292, 400}, indices of pilot subcarriers of the seventh PRU are {-152, -44, 112, 220}, and indices of pilot subcarriers of the eighth PRU are {-468, -360, 266, 426}.

In some example embodiments, the first bandwidth is 80 MHz, and the tone plan corresponding to the 80 MHz includes a first PRU, a second PRU, a third PRU, a fourth PRU, a fifth PRU, a sixth PRU, a seventh PRU, and an eighth PRU. Indices of discrete subcarriers of the first PRU are [-499:8:-395, -359:8:-263, -252:8:-148, -112:8:-16, 20:8:116, 152:8:248, 267:8:363, 399:8:495]; indices of discrete subcarriers of the second PRU are [-498:8:-394, -362:8:-266, -245:8:-149, - 117:8:-13, 17:8:113, 153:8:249, 262:8:358, 398:8:494]; indices of discrete subcarriers of the third PRU are [-497:8:-401, -361:8:-265, -250:8:-154, -114:8:-18, 14:8:118, 150:8:246, 261:8:365, 397:8:493]; indices of discrete subcarriers of the fourth PRU are [-496:8:-400, -364:8:-260, - 251:8:-147, -111:8:-15, 19:8:115, 151:8:247, 264:8:360, 396:8:492]; indices of discrete subcarriers of the fifth PRU are [-495:8:-399, -363:8:-267, -248:8:-152, -116:8:-20, 16:8:112, 148:8:252, 263:8:359, 395:8:499]; indices of discrete subcarriers of the sixth PRU are [-494:8:-398, -358:8:-262, -249:8:-153, -113:8:-17, 13:8:117, 149:8:245, 266:8:362, 394:8:498]; indices of discrete subcarriers of the seventh PRU are [-493:8:-397, -365:8:-261, -246:8:-150, -118:8:-14, 18:8:114, 154:8:250, 265:8:361, 401:8:497]; and indices of discrete subcarriers of the eighth PRU are [-492:8:-396, -360:8:-264, -247:8:-151, -115:8:-19, 15:8:111, 147:8:251, 260:8:364, 400:8:496]. Herein, a:b:c indicates subcarrier indices from an index a to an index c by using b as a step.

In some example embodiments, indices of pilot subcarriers of the first PRU are {-220, -112, 44, 152}, indices of pilot subcarriers of the second PRU are {-426, -266, 334, 494}, indices of pilot subcarriers of the third PRU are {-178, -18, 86, 246}, indices of pilot subcarriers of the fourth PRU are {-400, -292, 360, 468}, indices of pilot subcarriers of the fifth PRU are {-152, -44, 112, 220}, indices of pilot subcarriers of the sixth PRU are {-494, -334, 266, 426}, indices of pilot subcarriers of the seventh PRU are {-246, -86, 18, 178}, and indices of pilot subcarriers of the eighth PRU are {-468, -360, 292, 400}.

In some example embodiments, the first bandwidth is 160 MHz, and a tone plan corresponding to the 80 MHz includes a first PRU, a second PRU, a third PRU, a fourth PRU, a fifth PRU, a sixth PRU, a seventh PRU, and an eighth PRU. Indices of discrete subcarriers of the first PRU are [-1012:8:-884, -877:8:-773, -761:8:-665, -654:8:-526, -497:8:-369, -360:8:-264, -253:8:-149, -138:8:-18, 13:8:141, 146:8:250, 265:8:361, 368:8:496, 529:8:657, 662:8:758, 772:8:876, 885:8:1005]; indices of discrete subcarriers of the second PRU are [-1011:8:-883, -878:8:-774, - 765:8:-661, -650:8:-530, -496:8:-368, -361:8:-265, -252:8:-148, -139:8:-19, 12:8:140, 147:8:251, 266:8:362, 367:8:495, 527:8:655, 664:8:760, 775:8:871, 882:8:1010]; indices of discrete subcarriers of the third PRU are [-1010:8:-882, -871:8:-775, -759:8:-663, -656:8:-528, -499:8:-371, -366:8:-262, -246:8:-150, -145:8:-17, 18:8:138, 149:8:253, 260:8:364, 373:8:493, 524:8:652, 659:8:763, 776:8:872, 881:8:1009]; indices of discrete subcarriers of the fourth PRU are [-1009:8:-881, -872:8:-776, -758:8:-662, -657:8:-529, -493:8:-373, -364:8:-260, -247:8:-151, -144:8:-16, 14:8:142, 153:8:249, 261:8:365, 372:8:500, 530:8:650, 661:8:765, 774:8:878, 883:8:1011]; indices of discrete subcarriers of the fifth PRU are [-1008:8:-880, -873:8:-777, - 763:8:-659, -652:8:-524, -498:8:-370, -359:8:-263, -250:8:-146, -141:8:-13, 17:8:145, 150:8:246, 264:8:360, 369:8:497, 531:8:651, 660:8:764, 771:8:875, 886:8:1006]; indices of discrete subcarriers of the sixth PRU are [-1007:8:-879, -874:8:-778, -764:8:-660, -651:8:-531, -494:8:-374, -363:8:-259, -249:8:-153, -142:8:-14, 15:8:143, 152:8:248, 262:8:366, 371:8:499, 528:8:656, 663:8:759, 773:8:877, 884:8:1012]; indices of discrete subcarriers of the seventh PRU are [-1006:8:-886, -875:8:-771, -760:8:-664, -655:8:-527, -495:8:-367, -362:8:-266, -251:8:-147, -140:8:-12, 19:8:139, 148:8:252, 263:8:359, 370:8:498, 525:8:653, 658:8:762, 777:8:873, 880:8:1008]; and indices of discrete subcarriers of the eighth PRU are [-1005:8:-885, -876:8:-772, -762:8:-658, -653:8:-525, -500:8:-372, -365:8:-261, -248:8:-152, -143:8:-15, 16:8:144, 151:8:247, 259:8:363, 374:8:494, 526:8:654, 665:8:761, 778:8:874, 879:8:1007]. Herein, a:b:c indicates subcarrier indices from an index a to an index c by using b as a step.

In some example embodiments, indices of pilot subcarriers of the first PRU are {-980, -598, - 360, -18, 178, 400, 758, 804}, indices of pilot subcarriers of the second PRU are {-846, -530, - 400, -220, 44, 266, 664, 938}, indices of pilot subcarriers of the third PRU are {-938, -624, -334, -246, 18, 292, 556, 872}, indices of pilot subcarriers of the fourth PRU are {-872, -758, -292, - 112, 86, 468, 530, 846}, indices of pilot subcarriers of the fifth PRU are {-912, -556, -426, -178, 246, 360, 732, 1006}, indices of pilot subcarriers of the sixth PRU are {-778, -732, -494, -86, 152, 334, 624, 980}, indices of pilot subcarriers of the seventh PRU are {-1006, -664, -266, -44, 220, 426, 690, 912}, and indices of pilot subcarriers of the eighth PRU are {-804, -690, -468, - 152, 112, 494, 598, 778}.

In some example embodiments, the first bandwidth is 160 MHz, and a tone plan corresponding to the 80 MHz includes a first PRU, a second PRU, a third PRU, a fourth PRU, a fifth PRU, a sixth PRU, a seventh PRU, and an eighth PRU. Indices of discrete subcarriers of the first PRU are [-1012:8:-884, -877:8:-773, -761:8:-665, -654:8:-526, -497:8:-369, -360:8:-264, -253:8:-149, -138:8:-18, 19:8:139, 148:8:252, 266:8:362, 367:8:495, 528:8:656, 663:8:759, 774:8:878, 883:8:1011]; indices of discrete subcarriers of the second PRU are [-1011:8:-883, -878:8:-774, - 758:8:-662, -657:8:-529, -494:8:-374, -363:8:-259, -249:8:-153, -142:8:-14, 12:8:140, 147:8:251, 265:8:361, 368:8:496, 531:8:651, 660:8:764, 776:8:872, 881:8:1009]; indices of discrete subcarriers of the third PRU are [-1010:8:-882, -871:8:-775, -760:8:-664, -655:8:-527, -499:8:-371, -366:8:-262, -252:8:-148, -139:8:-19, 18:8:138, 149:8:365, 372:8:500, 529:8:657, 662:8:758, 777:8:873, 880:8:1008]; indices of discrete subcarriers of the fourth PRU are [-1009:8:-881, -872:8:-776, -765:8:-661, -650:8:-530, -495:8:-367, -362:8:-266, -247:8:-151, -144:8:-16, 14:8:142, 153:8:249, 260:8:364, 373:8:493, 525:8:653, 658:8:762, 773:8:877, 884:8:1012]; indices of discrete subcarriers of the fifth PRU are [-1008:8:-880, -873:8:-777, - 762:8:-658, -653:8:-525, -498:8:-370, -359:8:-263, -251:8:-147, -140:8:-12, 17:8:145, 150:8:246, 264:8:360, 369:8:497, 530:8:650, 661:8:765, 772:8:876, 885:8:1005]; indices of discrete subcarriers of the sixth PRU are [-1007:8:-879, -874:8:-778, -763:8:-659, -652:8:-524, -493:8:-373, -364:8:-260, -250:8:-146, -141:8:-13, 16:8:144, 151:8:247, 263:8:359, 370:8:498, 527:8:655, 664:8:760, 771:8:875, 886:8:1006]; indices of discrete subcarriers of the seventh PRU are [-1006:8:-886, -875:8:-771, -764:8:-660, -651:8:-531, -496:8:-368, -361:8:-265, -246:8:-150, -145:8:-17, 15:8:143, 152:8:248, 262:8:366, 371:8:499, 524:8:652, 659:8:763, 775:8:871, 882:8:1010]; and indices of discrete subcarriers of the eighth PRU are [-1005:8:-885, -876:8:-772, -759:8:-663, -656:8:-528, -500:8:-372, -365:8:-261, -248:8:-152, -143:8:-15, 13:8:141, 146:8:250, 259:8:363, 374:8:494, 526:8:654, 665:8:761, 778:8:874, 879:8:1007]. Herein, a:b:c indicates subcarrier indices from an index a to an index c by using b as a step.

In some example embodiments, indices of pilot subcarriers of the first PRU are {-980, -598, - 360, -18, 220, 266, 624, 846}, indices of pilot subcarriers of the second PRU are {-846, -758, - 494, -86, 44, 400, 732, 872}, indices of pilot subcarriers of the third PRU are {-938, -664, -334, -220, 18, 468, 758, 912}, indices of pilot subcarriers of the fourth PRU are {-872, -530, -266, - 112, 86, 292, 690, 980}, indices of pilot subcarriers of the fifth PRU are {-912, -690, -426, -44, 246, 360, 530, 804}, indices of pilot subcarriers of the sixth PRU are {-778, -556, -292, -178, 112, 426, 664, 1006}, indices of pilot subcarriers of the seventh PRU are {-1006, -732, -400, - 246, 152, 334, 556, 938}, and indices of pilot subcarriers of the eighth PRU are {-804, -624, - 468, -152, 178, 494, 598, 778}.

In some example embodiments, the first bandwidth is 160 MHz, and a tone plan corresponding to the 160 MHz includes a first PRU, a second PRU, a third PRU, a fourth PRU, a fifth PRU, a sixth PRU, a seventh PRU, and an eighth PRU. Indices of discrete subcarriers of the first PRU are [-1012:8:-884, -877:8:-773, -759:8:-663, -656:8:-528, -495:8:-367, -362:8:-266, -248:8:-152, -143:8:-15, 14:8:142, 153:8:249, 259:8:363, 374:8:494, 531:8:651, 660:8:764, 774:8:878, 883:8:1011]; indices of discrete subcarriers of the second PRU are [-1011:8:-883, -878:8:-774, - 764:8:-660, -651:8:-531, -497:8:-369, -360:8:-264, -253:8:-149, -138:8:-18, 16:8:144, 151:8:247, 266:8:362, 367:8:495, 524:8:652, 659:8:763, 775:8:871, 882:8:1010]; indices of discrete subcarriers of the third PRU are [-1010:8:-882, -871:8:-775, -760:8:-664, -655:8:-527, -500:8:-372, -365:8:-261, -247:8:-151, -144:8:-16, 13:8:141, 146:8:250, 260:8:364, 373:8:493, 530:8:650, 661:8:765, 778:8:874, 879:8:1007]; indices of discrete subcarriers of the fourth PRU are [-1009:8:-881, -872:8:-776, -758:8:-662, -657:8:-529, -494:8:-374, -363:8:-147, -140:8:-12, 19:8:139, 148:8:252, 262:8:366, 371:8:499, 526:8:654, 665:8:761, 777:8:873, 880:8:1008]; indices of discrete subcarriers of the fifth PRU are [-1008:8:-880, -873:8:-777, -762:8:-658, - 653:8:-525, -493:8:-373, -364:8:-260, -249:8:-153, -142:8:-14, 15:8:143, 152:8:248, 261:8:365, 372:8:500, 529:8:657, 662:8:758, 771:8:875, 886:8:1006]; indices of discrete subcarriers of the sixth PRU are [-1007:8:-879, -874:8:-778, -761:8:-665, -654:8:-526, - 499:8:-371, -366:8:-262, -252:8:-148, -139:8:-19, 18:8:138, 149:8:253, 265:8:361, 368:8:496, 527:8:655, 664:8:760, 773:8:877, 884:8:1012]; indices of discrete subcarriers of the seventh PRU are [-1006:8:-886, -875:8:-659, -652:8:-524, -498:8:-370, -359:8:-263, -250:8:-146, -141:8:-13, 17:8:145, 150:8:246, 264:8:360, 369:8:497, 528:8:656, 663:8:759, 772:8:876, 885:8:1005]; and indices of discrete subcarriers of the eighth PRU are [-1005:8:-885, -876:8:-772, -765:8:-661, -650:8:-530, -496:8:-368, -361:8:-265, -246:8:-150, -145:8:-17, 12:8:140, 147:8:251, 263:8:359, 370:8:498, 525:8:653, 658:8:762, 776:8:872, 881:8:1009]. Herein, a:b:c indicates subcarrier indices from an index a to an index c by using b as a step.

In some example embodiments, indices of pilot subcarriers of the first PRU are {-980, -624, - 266, -152, 86, 494, 732, 846}, indices of pilot subcarriers of the second PRU are {-846, -732, - 360, -18, 112, 266, 556, 938}, indices of pilot subcarriers of the third PRU are {-938, -664, -468, -112, 178, 292, 530, 778}, indices of pilot subcarriers of the fourth PRU are {-872, -758, -494, - 44, 220, 334, 598, 912}, indices of pilot subcarriers of the fifth PRU are {-912, -690, -292, -86, 152, 468, 758, 1006}, indices of pilot subcarriers of the sixth PRU are {-778, -598, -334, -220, 18, 400, 664, 980}, indices of pilot subcarriers of the seventh PRU are {-1006, -556, -426, -178, 246, 360, 624, 804}, and indices of pilot subcarriers of the eighth PRU are {-804, -530, -400, - 246, 44, 426, 690, 872}.

In some example embodiments, the first bandwidth is 160 MHz, and a tone plan corresponding to the 160 MHz includes a first PRU, a second PRU, a third PRU, a fourth PRU, a fifth PRU, a sixth PRU, a seventh PRU, and an eighth PRU. Indices of discrete subcarriers of the first PRU are [-1012:8:-884, -877:8:-773, -762:8:-658, -653:8:-525, -498:8:-370, -359:8:-263, -252:8:-148, -139:8:-19, 16:8:144, 151:8:247, 266:8:362, 367:8:495, 530:8:650, 661:8:765, 776:8:872, 881:8:1009]; indices of discrete subcarriers of the second PRU are [-1011:8:-883, -878:8:-774, - 764:8:-660, -651:8:-531, -495:8:-367, -362:8:-266, -247:8:-151, -144:8:-16, 14:8:142, 153:8:249, 264:8:360, 369:8:497, 524:8:652, 659:8:875, 886:8:1006]; indices of discrete subcarriers of the third PRU are [-1010:8:-882, -871:8:-775, -765:8:-661, -650:8:-530, - 500:8:-372, -365:8:-261, -246:8:-150, -145:8:-17, 13:8:141, 146:8:250, 265:8:361, 368:8:496, 527:8:655, 664:8:760, 772:8:876, 885:8:1005]; indices of discrete subcarriers of the fourth PRU are [-1009:8:-881, -872:8:-776, -763:8:-659, -652:8:-524, -493:8:-373, -364:8:-260, -249:8:-153, -142:8:-14, 18:8:138, 149:8:253, 262:8:366, 371:8:499, 528:8:656, 663:8:759, 778:8:874, 879:8:1007]; indices of discrete subcarriers of the fifth PRU are [-1008:8:-880, -873:8:-777, - 760:8:-664, -655:8:-527, -494:8:-374, -363:8:-259, -250:8:-146, -141:8:-13, 17:8:145, 150:8:246, 260:8:364, 373:8:493, 526:8:654, 665:8:761, 773:8:877, 884:8:1012]; indices of discrete subcarriers of the sixth PRU are [-1007:8:-879, -874:8:-778, -761:8:-665, -654:8:-526, -496:8:-368, -361:8:-265, -248:8:-152, -143:8:-15, 12:8:140, 147:8:363, 374:8:494, 531:8:651, 660:8:764, 774:8:878, 883:8:1011]; indices of discrete subcarriers of the seventh PRU are [-1006:8:-886, -875:8:-771, -758:8:-662, -657:8:-529, -497:8:-369, -360:8:-264, -251:8:-147, -140:8:-12, 19:8:139, 148:8:252, 263:8:359, 370:8:498, 525:8:653, 658:8:762, 777:8:873, 880:8:1008]; and indices of discrete subcarriers of the eighth PRU are [-1005:8:-885, -876:8:-772, -759:8:-663, -656:8:-528, -499:8:-371, -366:8:-262, -253:8:-149, -138:8:-18, 15:8:143, 152:8:248, 261:8:365, 372:8:500, 529:8:657, 662:8:758, 775:8:871, 882:8:1010]. Herein, a:b:c indicates subcarrier indices from an index a to an index c by using b as a step.

In some example embodiments, indices of pilot subcarriers of the first PRU are {-980, -690, - 426, -220, 112, 266, 530, 872}, indices of pilot subcarriers of the second PRU are {-846, -732, - 266, -112, 86, 360, 556, 1006}, indices of pilot subcarriers of the third PRU are {-938, -530, - 468, -246, 178, 400, 664, 804}, indices of pilot subcarriers of the fourth PRU are {-872, -556, - 292, -86, 18, 334, 624, 778}, indices of pilot subcarriers of the fifth PRU are {-912, -664, -494, -178, 246, 292, 598, 980}, indices of pilot subcarriers of the sixth PRU are {-778, -598, -400, - 152, 44, 494, 732, 846}, indices of pilot subcarriers of the seventh PRU are {-1006, -758, -360, -44, 220, 426, 690, 912}, and indices of pilot subcarriers of the eighth PRU are {-804, -624, - 334, -18, 152, 468, 758, 938}.

In some example embodiments, the first bandwidth is 160 MHz, and a tone plan corresponding to the 160 MHz includes a first PRU, a second PRU, a third PRU, a fourth PRU, a fifth PRU, a sixth PRU, a seventh PRU, and an eighth PRU. Indices of discrete subcarriers of the first PRU are [-1012:8:-884, -877:8:-773, -760:8:-664, -655:8:-527, -499:8:-371, -366:8:-262, -252:8:-148, -139:8:-19, 14:8:142, 153:8:249, 265:8:361, 368:8:496, 530:8:650, 661:8:765, 778:8:874, 879:8:1007]; indices of discrete subcarriers of the second PRU are [-1011:8:-883, -878:8:-774, - 765:8:-661, -650:8:-530, -500:8:-372, -365:8:-261, -249:8:-153, -142:8:-14, 19:8:139, 148:8:252, 266:8:362, 367:8:495, 528:8:656, 663:8:759, 776:8:872, 881:8:1009]; indices of discrete subcarriers of the third PRU are [-1010:8:-882, -871:8:-775, -764:8:-660, -651:8:-531, -497:8:-369, -360:8:-264, -253:8:-149, -138:8:-18, 16:8:144, 151:8:247, 261:8:365, 372:8:500, 529:8:657, 662:8:758, 774:8:878, 883:8:1011]; indices of discrete subcarriers of the fourth PRU are [-1009:8:-881, -872:8:-776, -761:8:-665, -654:8:-526, -495:8:-367, -362:8:-266, -251:8:-147, -140:8:-12, 18:8:138, 149:8:253, 262:8:366, 371:8:499, 531:8:651, 660:8:764, 777:8:873, 880:8:1008]; indices of discrete subcarriers of the fifth PRU are [-1008:8:-880, -873:8:-777, - 763:8:-659, -652:8:-524, -493:8:-373, -364:8:-260, -250:8:-146, -141:8:-13, 17:8:145, 150:8:246, 263:8:359, 370:8:498, 527:8:655, 664:8:760, 771:8:875, 886:8:1006]; indices of discrete subcarriers of the sixth PRU are [-1007:8:-879, -874:8:-778, -762:8:-658, -653:8:-525, -494:8:-374, -363:8:-259, -247:8:-151, -144:8:-16, 15:8:143, 152:8:248, 260:8:364, 373:8:493, 526:8:654, 665:8:761, 773:8:877, 884:8:1012]; indices of discrete subcarriers of the seventh PRU are [-1006:8:-886, -875:8:-771, -759:8:-663, -656:8:-528, -498:8:-370, -359:8:-263, -246:8:-150, -145:8:-17, 12:8:140, 147:8:251, 264:8:360, 369:8:497, 525:8:653, 658:8:762, 772:8:876, 885:8:1005]; and indices of discrete subcarriers of the eighth PRU are [-1005:8:-885, -876:8:-772, -758:8:-662, -657:8:-529, -496:8:-368, -361:8:-265, -248:8:-152, -143:8:-15, 13:8:141, 146:8:250, 259:8:363, 374:8:494, 524:8:652, 659:8:763, 775:8:871, 882:8:1010]. Herein, a:b:c indicates subcarrier indices from an index a to an index c by using b as a step.

In some example embodiments, indices of pilot subcarriers of the first PRU are {-980, -664, - 334, -220, 86, 400, 530, 778}, indices of pilot subcarriers of the second PRU are {-846, -530, - 468, -86, 220, 266, 624, 872}, indices of pilot subcarriers of the third PRU are {-938, -732, -360, -18, 112, 468, 758, 846}, indices of pilot subcarriers of the fourth PRU are {-872, -598, -266, - 44, 18, 334, 732, 912}, indices of pilot subcarriers of the fifth PRU are {-912, -556, -292, -178, 246, 426, 664, 1006}, indices of pilot subcarriers of the sixth PRU are {-778, -690, -494, -112, 152, 292, 598, 980}, indices of pilot subcarriers of the seventh PRU are {-1006, -624, -426, -246, 44, 360, 690, 804}, and indices of pilot subcarriers of the eighth PRU are {-804, -758, -400, - 152, 178, 494, 556, 938}.

In some example embodiments, the first bandwidth is 160 MHz, and a tone plan corresponding to the 160 MHz includes a first PRU, a second PRU, a third PRU, and a fourth PRU. Each PRU includes 484 discrete subcarriers. Indices of discrete subcarriers of the first PRU are [-1012:8:-884, -877:8:-773, -760:8:-664, -655:8:-527, -499:8:-371, -366:8:-262, -252:8:-148, -139:8:-19, 14:8:142, 153:8:249, 265:8:361, 368:8:496, 530:8:650, 661:8:765, 778:8:874, 879:8:1007]U[-1007:8:-879, -874:8:-778, -762:8:-658, -653:8:-525, -494:8:-374, -363:8:-259, -247:8:-151, -144:8:-16, 15:8:143, 152:8:248, 260:8:364, 373:8:493, 526:8:654, 665:8:761, 773:8:877, 884:8:1012]; indices of discrete subcarriers of the second PRU are [-1011:8:-883, -878:8:-774, - 765:8:-661, -650:8:-530, -500:8:-372, -365:8:-261, -249:8:-153, -142:8:-14, 19:8:139, 148:8:252, 266:8:362, 367:8:495, 528:8:656, 663:8:759, 776:8:872, 881:8:1009]U[-1009:8:-881, -872:8:-776, -761:8:-665, -654:8:-526, -495:8:-367, -362:8:-266, -251:8:-147, -140:8:-12, 18:8:138, 149:8:253, 262:8:366, 371:8:499, 531:8:651, 660:8:764, 777:8:873, 880:8:1008]; indices of discrete subcarriers of the third PRU are [-1010:8:-882, -871:8:-775, -764:8:-660, - 651:8:-531, -497:8:-369, -360:8:-264, -253:8:-149, -138:8:-18, 16:8:144, 151:8:247, 261:8:365, 372:8:500, 529:8:657, 662:8:758, 774:8:878, 883:8:1011]U[-1006:8:-886, -875:8:-771, -759:8:-663, -656:8:-528, -498:8:-370, -359:8:-263, -246:8:-150, -145:8:-17, 12:8:140, 147:8:251, 264:8:360, 369:8:497, 525:8:653, 658:8:762, 772:8:876, 885:8:1005]; and indices of discrete subcarriers of the fourth PRU are [-1008:8:-880, -873:8:-777, -763:8:-659, -652:8:-524, -493:8:-373, -364:8:-260, -250:8:-146, -141:8:-13, 17:8:145, 150:8:246, 263:8:359, 370:8:498, 527:8:655, 664:8:760, 771:8:875, 886:8:1006]U[-1005:8:-885, -876:8:-772, -758:8:-662, -657:8:-529, -496:8:-368, -361:8:-265, -248:8:-152, -143:8:-15, 13:8:141, 146:8:250, 259:8:363, 374:8:494, 524:8:652, 659:8:763, 775:8:871, 882:8:1010]. Herein, a:b:c indicates subcarrier indices from an index a to an index c by using b as a step.

In some example embodiments, indices of pilot subcarriers of the first PRU are {-980, -778, - 698, -664, -494, -334, -220, -112, 86, 152, 292, 400, 530, 598, 778, 980}, indices of pilot subcarriers of the second PRU are {-872, -846, -598, -530, -468, -266, -86, -44, 18, 220, 266, 334, 624, 732, 872, 912}, indices of pilot subcarriers of the third PRU are {-1006, -938, -732, - 624, -426, -360, -246, -18, 44, 112, 360, 468, 690, 758, 804, 846}, and indices of pilot subcarriers of the fourth PRU are {-912, -804, -758, -556, -400, -292, -178, -152, 178, 246, 426, 494, 556, 664, 938, 1006}.

In some example embodiments, the first bandwidth is 160 MHz, the first bandwidth is 160 MHz, and a tone plan corresponding to the 160 MHz includes a first PRU, a second PRU, a third PRU, and a fourth PRU. Each PRU includes 484 discrete subcarriers. Indices of discrete subcarriers of the first PRU are [-1012:8:-884, -877:8:-773, -762:8:-658, -653:8:-525, -498:8:-370, -359:8:-263, -252:8:-148, -139:8:-19, 16:8:144, 151:8:247, 266:8:362, 367:8:495, 530:8:650, 661:8:765, 776:8:872, 881:8:1009]U[-1007:8:-879, -874:8:-778, -761:8:-665, -654:8:-526, -496:8:-368, - 361:8:-265, -248:8:-152, -143:8:-15, 12:8:140, 147:8:363, 374:8:494, 531:8:651, 660:8:764, 774:8:878, 883:8:1011]; indices of discrete subcarriers of the second PRU are [-1011:8:-883, - 878:8:-774, -764:8:-660, -651:8:-531, -495:8:-367, -362:8:-266, -247:8:-151, -144:8:-16, 14:8:142, 153:8:249, 264:8:360, 369:8:497, 524:8:652, 659:8:875, 886:8:1006]U[-1008:8:-880, -873:8:-777, -760:8:-664, -655:8:-527, -494:8:-374, -363:8:-259, -250:8:-146, -141:8:-13, 17:8:145, 150:8:246, 260:8:364, 373:8:493, 526:8:654, 665:8:761, 773:8:877, 884:8:1012]; indices of discrete subcarriers of the third PRU are [-1010:8:-882, -871:8:-775, -765:8:-661, - 650:8:-530, -500:8:-372, -365:8:-261, -246:8:-150, -145:8:-17, 13:8:141, 146:8:250, 265:8:361, 368:8:496, 527:8:655, 664:8:760, 772:8:876, 885:8:1005]U[-1009:8:-881, -872:8:-776, -763:8:-659, -652:8:-524, -493:8:-373, -364:8:-260, -249:8:-153, -142:8:-14, 18:8:138, 149:8:253, 262:8:366, 371:8:499, 528:8:656, 663:8:759, 778:8:874, 879:8:1007]; and indices of discrete subcarriers of the fourth PRU are [-1006:8:-886, -875:8:-771, -758:8:-662, -657:8:-529, -497:8:-369, -360:8:-264, -251:8:-147, -140:8:-12, 19:8:139, 148:8:252, 263:8:359, 370:8:498, 525:8:653, 658:8:762, 777:8:873, 880:8:1008]U[-1005:8:-885, -876:8:-772, -759:8:-663, -656:8:-528, -499:8:-371, -366:8:-262, -253:8:-149, -138:8:-18, 15:8:143, 152:8:248, 261:8:365, 372:8:500, 529:8:657, 662:8:758, 775:8:871, 882:8:1010].

In some example embodiments, indices of pilot subcarriers of the first PRU are {-980, -778, - 690, -598, -426, -400, -220, -152, 44, 112, 266, 494, 530, 732, 846, 872}, indices of pilot subcarriers of the second PRU are {-912, -846, -732, -664, -494, -266, -178, -112, 86, 246, 292, 360, 556, 598, 980, 1006}, indices of pilot subcarriers of the third PRU are {-938, -872, -556, - 530, -468, -292, -246, -86, 18, 178, 334, 400, 624, 664, 778, 804}, and indices of pilot subcarriers of the fourth PRU are {-1006, -804, -758, -624, -360, -334, -44, -18, 152, 220, 426, 468, 690, 758, 912, 938}.

In some example embodiments, the first bandwidth is 160 MHz, the first bandwidth is 160 MHz, and a tone plan corresponding to the 160 MHz includes a first PRU, a second PRU, a third PRU, and a fourth PRU. Each PRU includes 484 discrete subcarriers. Indices of discrete subcarriers of the first PRU are [-1012:8:-884, -877:8:-773, -759:8:-663, -656:8:-528, -495:8:-367, -362:8:-266, -248:8:-152, -143:8:-15, 14:8:142, 153:8:249, 259:8:363, 374:8:494, 531:8:651, 660:8:764, 774:8:878, 883:8:1011]U[-1009:8:-881, -872:8:-776, -758:8:-662, -657:8:-529, -494:8:-374, - 363:8:-147, -140:8:-12, 19:8:139, 148:8:252, 262:8:366, 371:8:499, 526:8:654, 665:8:761, 777:8:873, 880:8:1008]; indices of discrete subcarriers of the second PRU are [-1011:8:-883, - 878:8:-774, -764:8:-660, -651:8:-531, -497:8:-369, -360:8:-264, -253:8:-149, -138:8:-18, 16:8:144, 151:8:247, 266:8:362, 367:8:495, 524:8:652, 659:8:763, 775:8:871, 882:8:1010]U[-1006:8:-886, -875:8:-659, -652:8:-524, -498:8:-370, -359:8:-263, -250:8:-146, -141:8:-13, 17:8:145, 150:8:246, 264:8:360, 369:8:497, 528:8:656, 663:8:759, 772:8:876, 885:8:1005]; indices of discrete subcarriers of the third PRU are [-1010:8:-882, -871:8:-775, -760:8:-664, - 655:8:-527, -500:8:-372, -365:8:-261, -247:8:-151, -144:8:-16, 13:8:141, 146:8:250, 260:8:364, 373:8:493, 530:8:650, 661:8:765, 778:8:874, 879:8:1007]U[-1005:8:-885, -876:8:-772, -765:8:-661, -650:8:-530, -496:8:-368, -361:8:-265, -246:8:-150, -145:8:-17, 12:8:140, 147:8:251, 263:8:359, 370:8:498, 525:8:653, 658:8:762, 776:8:872, 881:8:1009]; and indices of discrete subcarriers of the fourth PRU are [-1008:8:-880, -873:8:-777, -762:8:-658, -653:8:-525, -493:8:-373, -364:8:-260, -249:8:-153, -142:8:-14, 15:8:143, 152:8:248, 261:8:365, 372:8:500, 529:8:657, 662:8:758, 771:8:875, 886:8:1006]∪[-1007:8:-879,-874:8-778,-761:8-665, -654:8:-526, -499:8:-371, -366:8:-262, -252:8:-148, -139:8:-19, 18:8:138, 149:8:253, 265:8:361, 368:8:496, 527:8:655, 664:8:760, 773:8:877, 884:8:1012].

In some example embodiments, indices of pilot subcarriers of the first PRU are {-980, -872, - 758, -624, -494, -266, -152, -44, 86, 220, 334, 494, 598, 732, 846, 912}, indices of pilot subcarriers of the second PRU are {-1006, -846, -732, -556, -426, -360, -178, -18, 112, 246, 266, 360, 556, 624, 804, 938}, indices of pilot subcarriers of the third PRU are {-938, -804, -664, -530, -468, -400, -246, -112, 44, 178, 292, 426, 530, 690, 778, 872}, and indices of pilot subcarriers of the fourth PRU are {-912, -778, -690, -598, -334, -292, -220, -86, 18, 152, 400, 468, 664, 758, 980, 1006}.

In some example embodiments, the PPDU is transmitted or received on a total bandwidth of 320 MHz. The total bandwidth includes a first part of bandwidth and a second part of bandwidth each of which is 160 MHz. The first part of bandwidth and the second part of bandwidth respectively include PRUs based on the tone plan corresponding to the first bandwidth.

In some example embodiments, the PPDU is transmitted or received on a total bandwidth of 320 MHz. The total bandwidth includes a first part of bandwidth, a second part of bandwidth, a third part of bandwidth, and a fourth part of bandwidth each of which is 80 MHz. The first part of bandwidth, the second part of bandwidth, the third part of bandwidth, and the fourth part of bandwidth respectively include PRUs based on the tone plan corresponding to the first bandwidth.

### Example apparatus and example device

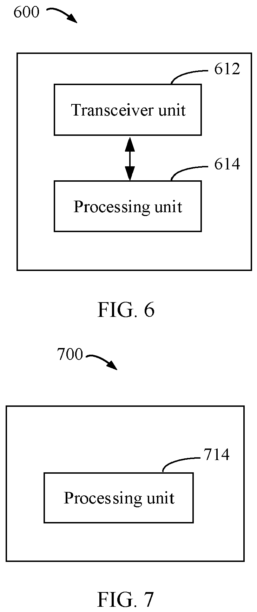

FIG. 6 is a schematic block diagram of a communication device 600 according to an example embodiment of this disclosure. The communication device 600 shown in FIG. 6 may be implemented at a transmit end or a receive end of communication, including but not limited to an AP, a STA, and the like. Certainly, another appropriate device may also be used for implementation. It should be understood that the communication device 600 is merely used as an example and does not imply any limitation on the scope of this disclosure. Embodiments of this disclosure may be further embodied in communication devices with different architectures and functions. It should be further understood that the communication device 600 may further include other components or entities that are not shown for ease of description, but this does not mean that embodiments of this disclosure do not have these components or entities.

As shown in FIG. 6, the communication device 600 includes a transceiver unit 612 and a processing unit 614.

The processing unit 614 is configured to control the transceiver unit 612 to transmit or receive a PPDU based on a tone plan corresponding to a first bandwidth. The tone plan includes a PRU, and the PRU includes discrete subcarriers. The PRU includes various PRUs according to the third implementation. Therefore, details are not described herein again.

The transceiver unit 612 is configured to transmit or receive the PPDU. In addition, the transceiver unit 612 is further configured to receive indication information. The indication information indicates whether the PPDU is transmitted or received by using a VRU including consecutive subcarriers, or whether the PPDU is transmitted or received by using the PRU.

It should be understood that the transceiver unit 612 and the processing unit 614 in the communication device 600 may be further configured to implement, for example, other steps in the communication process discussed in FIG. 5. For specific details, refer to the foregoing related descriptions. Details are not described herein again.

It should be understood that the communication device 600 may be implemented by using an application-specific integrated circuit, one or more FPGAs (field programmable gate arrays), a PLD (programmable logic device), a controller, a state machine, a logic gate, a discrete hardware component, any other suitable circuit, any combination of circuits that can perform various processes of this disclosure, a chip, a board, a communication device, or the like.

FIG. 7 is a schematic block diagram of a communication device 700 according to an example embodiment of this disclosure. The communication device 700 shown in FIG. 7 may be implemented by using any appropriate device. It should be understood that the communication device 700 is merely used as an example and does not imply any limitation on the scope of this disclosure. Embodiments of this disclosure may be further embodied in communication devices with different architectures and functions. It should be further understood that the communication device 700 may further include other components or entities that are not shown for ease of description, but this does not mean that embodiments of this disclosure do not have these components or entities.

As shown in FIG. 7, the communication device 700 includes a processing unit 714.

The processing unit 714 is configured to generate various PRUs according to the first implementation or the second implementation based on a tone plan corresponding to a first bandwidth. Therefore, details are not described herein again.

Optionally, the communication device 700 may further include a memory coupled to the processing unit 714. The memory is configured to store instructions executed by the processing unit 714. When the instructions are executed by the processing unit 714, the processing unit 714 can implement functions according to the first implementation or the second implementation. For specific details, refer to the foregoing descriptions. Details are not described herein again.

It should be understood that the communication device 700 may be implemented by using an application-specific integrated circuit, one or more FPGAs (field programmable gate arrays), a PLD (programmable logic device), a controller, a state machine, a logic gate, a discrete hardware component, any other suitable circuit, any combination of circuits that can perform various processes of this disclosure, a chip, a board, a communication device, or the like.

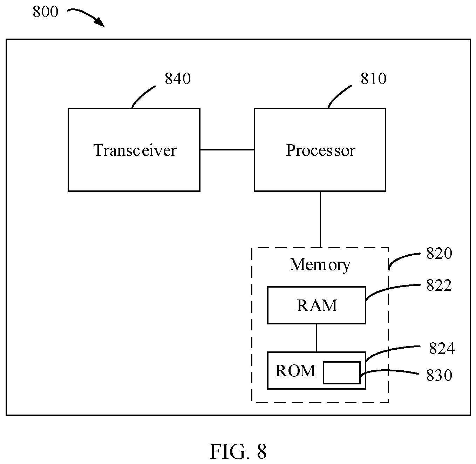

FIG. 8 is a simplified block diagram of an example device 800 suitable for implementing embodiments of this disclosure. The device 800 may be configured to implement a communication device in this disclosure. As shown in the figure, the device 800 includes one or more processors 810 and a transceiver 840 coupled to the processor 810.

In some example implementations, the transceiver 840 is configured to implement functions of the transceiver unit 612 in FIG. 6. For specific details, refer to the foregoing descriptions. Details are not described herein again.

The processor 810 may be configured to implement functions of the processing unit 614 in FIG. 6. For specific details, refer to the foregoing descriptions. Details are not described herein again. In some other example implementations, the processor 810 may be configured to implement functions of the processing unit 714 in FIG. 7. For specific details, refer to the foregoing descriptions. Details are not described herein again.

Optionally, the device 800 further includes a memory 820 coupled to the processor 810. The memory 820 is configured to store instructions executed by the processor. When the instructions are executed by the processor, the processor can implement the functions of the processing unit 614 in FIG. 6. For specific details, refer to the foregoing descriptions. Details are not described herein again.

Optionally, the memory 820 is configured to store instructions executed by the processor. When the instructions are executed by the processor, the processor can implement the functions of the processing unit 714 in FIG. 7. For specific details, refer to the foregoing descriptions. Details are not described herein again.

The transceiver 840 may be configured to perform two-way communication. The transceiver 840 may have at least one communication interface used for communication. The communication interface may include any interface necessary for communicating with another device.

The processor 810 may be of any appropriate type suitable for a local technical environment, and may include but is not limited to one or more of a general-purpose computer, a dedicated computer, a microcontroller, a digital signal controller (DSP), and a controller-based multi-core controller architecture. The device 800 may have a plurality of processors, such as application-specific integrated circuit chips. In terms of time, the device 800 belongs to a clock synchronized with a primary processor.

The memory 820 may include one or more nonvolatile memories and one or more volatile memories. Examples of the non-volatile memory include, but are not limited to, a read-only memory (ROM) 824, an erasable programmable read-only memory (EPROM), a flash memory, a hard disk, a compact disc (CD), a digital video disk (DVD), and another magnetic storage and/or optical storage. Examples of the volatile memory include, but are not limited to, a random access memory (RAM) 822 and another volatile memory that does not persist in power interruption duration.

A computer program 830 includes computer-executable instructions executed by the associated processor 810. The program 830 may be stored in the ROM 820. The processor 810 may perform any appropriate actions and processing by loading the program 830 into the RAM 820. Embodiments of this disclosure may be implemented by using the program 830, so that the device 800 can perform any process discussed with reference to FIG. 2 to FIG. 5. Embodiments of this disclosure may be alternatively implemented by using hardware or a combination of software and hardware.

In some embodiments, the program 830 may be tangibly included in a computer-readable medium. The computer-readable medium may be included in the device 800 (for example, in the memory 820) or another storage device that can be accessed by the device 800. The program 830 may be loaded from the computer-readable medium into the RAM 822 for execution. The computer-readable medium may include any type of tangible nonvolatile memory, such as a ROM, an EPROM, a flash memory, a hard disk, a CD, or a DVD.

Generally, various embodiments of this disclosure may be implemented by hardware, a dedicated circuit, software, logic, or any combination thereof. Some aspects may be implemented by hardware, and other aspects may be implemented by firmware or software. The aspects may be implemented by a controller, a microprocessor, or another computing device. Although aspects of embodiments of this disclosure are shown and described as block diagrams, flowcharts, or other diagrams, it should be understood that the blocks, devices, systems, technologies, or methods described in this specification may be implemented as, for example, non-limiting examples, hardware, software, firmware, dedicated circuits, logic, general-purpose hardware, controllers, other computing devices, or a combination thereof.

This disclosure further provides at least one computer program product tangibly stored on a non-transitory computer-readable storage medium. The computer program product includes computer-executable instructions, such as instructions included in a program module, that are executed in a device on a real or virtual target processor to perform the foregoing processes/methods described with reference to FIG. 2 to FIG. 5. Generally, the program module includes a routine, a program, a library, an object, a class, a component, a data structure, and the like for executing a particular task or implementing a particular abstract data type. In various embodiments, according to a requirement, functions of the program module may be combined or functions of the program module may be split. Machine-executable instructions for the program module may be executed locally or in a distributed device. In the distributed device, the program module may be located in a local storage medium and a remote storage medium.

Computer program code for implementing the methods in this disclosure may be written in one or more programming languages. The computer program code may be provided for a processor of a general-purpose computer, a dedicated computer, or another programmable data processing apparatus. Therefore, when the program code is executed by the computer or the another programmable data processing apparatus, functions/operations specified in the flowcharts and/or block diagrams are implemented. The program code may be executed completely on a computer, partially on a computer, as an independent software package, partially on a computer and partially on a remote computer, or completely on a remote computer or server.

In the context of this disclosure, the computer program code or related data may be carried by any appropriate carrier, so that a device, an apparatus, or a processor can perform various processing and operations described above. Examples of the carrier include a signal, a computer-readable medium, and the like. Examples of the signal may include propagation signals in electrical, optical, radio, sound, or other forms, such as a carrier and an infrared signal.

The computer-readable medium may be any tangible medium that includes or stores a program used for or related to an instruction execution system, apparatus, or device. The computer-readable medium may be a computer-readable signal medium or a computer-readable storage medium. The computer-readable medium may include but is not limited to an electronic, a magnetic, an optical, an electromagnetic, an infrared, or a semiconductor system, apparatus, or device, or any appropriate combination thereof. More detailed examples of the computer-readable storage medium include an electrical connection with one or more wires, a portable computer disk, a hard disk, a random access memory (RAM), a read-only memory (ROM), an erasable programmable read-only memory (EPROM or flash memory), an optical storage device, a magnetic storage device, or any appropriate combination thereof.

In addition, although the operations of the methods in this disclosure are described in a particular order in the accompanying drawings, this does not require or imply that these operations need to be performed in the particular order or that all of the shown operations need to be performed to achieve a desired result. Instead, execution orders of the steps depicted in the flowcharts may change. Additionally or optionally, some steps may be omitted, a plurality of steps may be combined into one step for execution, and/or one step may be decomposed into a plurality of steps for execution. It should further be noted that features and functions of two or more apparatuses according to this disclosure may be embodied in one apparatus. Features and functions of one apparatus described above may be further divided to be embodied in a plurality of apparatuses. The implementations of this disclosure are described above. The foregoing descriptions are examples, are not exhaustive, and are not limited to the disclosed implementations. Many modifications and variations are apparent to a person of ordinary skill in the art without departing from the scope and spirit of the described implementations. Selection of terms used in this specification is intended to well explain implementation principles, actual application, or improvements to technologies in the market, or to enable another person of ordinary skill in the art to understand the implementations disclosed in this specification.

## Claims

1. A communication method, wherein the method comprises:
sending or receiving a physical layer protocol data unit PPDU based on a tone plan corresponding to a first bandwidth, wherein
the tone plan comprises a physical resource unit PRU, and the PRU comprises discrete subcarriers.

2. The method according to claim 1, wherein the PPDU comprises indication information, and the indication information indicates that the PPDU is transmitted or received by using a virtual resource unit VRU that comprises consecutive subcarriers, or the PPDU is transmitted or received by using the PRU.

3. The method according to claim 2, wherein there is a mapping relationship between the PRU and the VRU.

4. The method according to any one of claims 1 to 3, wherein the first bandwidth is 80 MHz, and a tone plan corresponding to the 80 MHz comprises a first PRU, a second PRU, a third PRU, a fourth PRU, a fifth PRU, a sixth PRU, a seventh PRU, and an eighth PRU;
indices of discrete subcarriers of the first PRU are [-499:8:-395, -361:8:-265, -252:8:-148, -112:8:-16, 19:8:115, 152:8:248, 262:8:358, 401:8:497];
indices of discrete subcarriers of the second PRU are [-498:8:-394, -362:8:-266, -251:8:-147, -111:8:-15, 20:8:116, 151:8:247, 263:8:359, 398:8:494];
indices of discrete subcarriers of the third PRU are [-497:8:-401, -364:8:-260, -248:8:-152, -115:8:-19, 13:8:117, 154:8:250, 266:8:362, 399:8:495];
indices of discrete subcarriers of the fourth PRU are [-496:8:-400, -365:8:-261, -247:8:-151, -116:8:-20, 15:8:111, 153:8:249, 264:8:360, 394:8:498];
indices of discrete subcarriers of the fifth PRU are [-495:8:-399, -359:8:-263, -250:8:-154, -114:8:-18, 14:8:118, 150:8:246, 267:8:363, 395:8:499];
indices of discrete subcarriers of the sixth PRU are [-494:8:-398, -358:8:-262, -245:8:-149, -113:8:-17, 16:8:112, 148:8:252, 261:8:365, 397:8:493];
indices of discrete subcarriers of the seventh PRU are [-493:8:-397, -363:8:-267, -246:8:-150, -118:8:-14, 18:8:114, 147:8:251, 265:8:361, 396:8:492];
indices of discrete subcarriers of the eighth PRU are [-492:8:-396, -360:8:-264, -249:8:-153, -117:8:-13, 17:8:113, 149:8:245, 260:8:364, 400:8:496]; and
a:b:c indicates subcarrier indices from an index a to an index c by using b as a step.

5. The method according to claim 4, wherein
indices of pilot subcarriers of the first PRU are {-220, -112, 152, 334};
indices of pilot subcarriers of the second PRU are {-426, -266, 44, 494};
indices of pilot subcarriers of the third PRU are {-292, -152, 178, 266};
indices of pilot subcarriers of the fourth PRU are {-400, -44, 360, 426};
indices of pilot subcarriers of the fifth PRU are {-178, -18, 86, 246};
indices of pilot subcarriers of the sixth PRU are {-494, -334, 112, 220};
indices of pilot subcarriers of the seventh PRU are {-246, -86, 18, 468}; and
indices of pilot subcarriers of the eighth PRU are {-468, -360, 292, 400}.

6. The method according to any one of claims 1 to 3, wherein the first bandwidth is 80 MHz, and a tone plan corresponding to the 80 MHz comprises a first PRU, a second PRU, a third PRU, a fourth PRU, a fifth PRU, a sixth PRU, a seventh PRU, and an eighth PRU;
indices of discrete subcarriers of the first PRU are [-499:8:-395, -359:8:-263, -252:8:-148, -111:8:-15, 20:8:116, 151:8:247, 264:8:360, 400:8:496];
indices of discrete subcarriers of the second PRU are [-498:8:-394, -363:8:-267, -247:8:-151, -112:8:-16, 19:8:115, 147:8:251, 262:8:358, 398:8:494];
indices of discrete subcarriers of the third PRU are [-497:8:-401, -364:8:-260, -248:8:-152, -117:8:-13, 17:8:113, 153:8:249, 266:8:362, 396:8:492];
indices of discrete subcarriers of the fourth PRU are [-496:8:-400, -360:8:-264, -251:8:-147, -115:8:-19, 15:8:111, 154:8:250, 260:8:364, 399:8:495];
indices of discrete subcarriers of the fifth PRU are [-495:8:-399, -365:8:-261, -246:8:-150, -116:8:-20, 14:8:118, 152:8:248, 263:8:359, 401:8:497];
indices of discrete subcarriers of the sixth PRU are [-494:8:-398, -358:8:-262, -245:8:-149, -118:8:-14, 13:8:117, 150:8:246, 265:8:361, 397:8:493];
indices of discrete subcarriers of the seventh PRU are [-493:8:-397, -361:8:-265, -250:8:-154, -114:8:-18, 16:8:112, 148:8:252, 267:8:363, 395:8:499];
indices of discrete subcarriers of the eighth PRU are [-492:8:-396, -362:8:-266, -249:8:-153, -113:8:-17, 18:8:114, 149:8:245, 261:8:365, 394:8:498]; and
a:b:c indicates subcarrier indices from an index a to an index c by using b as a step.

7. The method according to claim 6, wherein
indices of pilot subcarriers of the first PRU are {-220, 44, 360, 400};
indices of pilot subcarriers of the second PRU are {-426, -112, 334, 494};
indices of pilot subcarriers of the third PRU are {-292, -152, 266, 468};
indices of pilot subcarriers of the fourth PRU are {-400, -360, 178, 292};
indices of pilot subcarriers of the fifth PRU are {-246, -44, 86, 152};
indices of pilot subcarriers of the sixth PRU are {-494, -334, -86, 246};
indices of pilot subcarriers of the seventh PRU are {-178, -18, 112, 220}; and
indices of pilot subcarriers of the eighth PRU are {-468, -266, 18, 426}.

8. The method according to any one of claims 1 to 3, wherein the first bandwidth is 160 MHz, and a tone plan corresponding to the 160 MHz comprises a first PRU, a second PRU, a third PRU, a fourth PRU, a fifth PRU, a sixth PRU, a seventh PRU, and an eighth PRU;
indices of discrete subcarriers of the first PRU are [-1012:8:-884, -877:8:-773, -761:8:-665, -654:8:-526, -497:8:-369, -360:8:-264, -253:8:-149, -138:8:-18, 13:8:141, 146:8:250, 265:8:361, 368:8:496, 529:8:657, 662:8:758, 772:8:876, 885:8:1005];
indices of discrete subcarriers of the second PRU are [-1011:8:-883, -878:8:-774, -765:8:-661, -650:8:-530, -496:8:-368, -361:8:-265, -252:8:-148, -139:8:-19, 12:8:140, 147:8:251, 266:8:362, 367:8:495, 527:8:655, 664:8:760, 775:8:871, 882:8:1010];
indices of discrete subcarriers of the third PRU are [-1010:8:-882, -871:8:-775, -759:8:-663, -656:8:-528, -499:8:-371, -366:8:-262, -246:8:-150, -145:8:-17, 18:8:138, 149:8:253, 260:8:364, 373:8:493, 524:8:652, 659:8:763, 776:8:872, 881:8:1009];
indices of discrete subcarriers of the fourth PRU are [-1009:8:-881, -872:8:-776, -758:8:-662, -657:8:-529, -493:8:-373, -364:8:-260, -247:8:-151, -144:8:-16, 14:8:142, 153:8:249, 261:8:365, 372:8:500, 530:8:650, 661:8:765, 774:8:878, 883:8:1011];
indices of discrete subcarriers of the fifth PRU are [-1008:8:-880, -873:8:-777, -763:8:-659, -652:8:-524, -498:8:-370, -359:8:-263, -250:8:-146, -141:8:-13, 17:8:145, 150:8:246, 264:8:360, 369:8:497, 531:8:651, 660:8:764, 771:8:875, 886:8:1006];
indices of discrete subcarriers of the sixth PRU are [-1007:8:-879, -874:8:-778, -764:8:-660, -651:8:-531, -494:8:-374, -363:8:-259, -249:8:-153, -142:8:-14, 15:8:143, 152:8:248, 262:8:366, 371:8:499, 528:8:656, 663:8:759, 773:8:877, 884:8:1012];
indices of discrete subcarriers of the seventh PRU are [-1006:8:-886, -875:8:-771, -760:8:-664, -655:8:-527, -495:8:-367, -362:8:-266, -251:8:-147, -140:8:-12, 19:8:139, 148:8:252, 263:8:359, 370:8:498, 525:8:653, 658:8:762, 777:8:873, 880:8:1008];
indices of discrete subcarriers of the eighth PRU are [-1005:8:-885, -876:8:-772, -762:8:-658, -653:8:-525, -500:8:-372, -365:8:-261, -248:8:-152, -143:8:-15, 16:8:144, 151:8:247, 259:8:363, 374:8:494, 526:8:654, 665:8:761, 778:8:874, 879:8:1007]; and
a:b:c indicates subcarrier indices from an index a to an index c by using b as a step.

9. The method according to claim 8, wherein
indices of pilot subcarriers of the first PRU are {-980, -598, -360, -18, 178, 400, 758, 804};
indices of pilot subcarriers of the second PRU are {-846, -530, -400, -220, 44, 266, 664, 938};
indices of pilot subcarriers of the third PRU are {-938, -624, -334, -246, 18, 292, 556, 872};
indices of pilot subcarriers of the fourth PRU are {-872, -758, -292, -112, 86, 468, 530, 846};
indices of pilot subcarriers of the fifth PRU are {-912, -556, -426, -178, 246, 360, 732, 1006};
indices of pilot subcarriers of the sixth PRU are {-778, -732, -494, -86, 152, 334, 624, 980};
indices of pilot subcarriers of the seventh PRU are {-1006, -664, -266, -44, 220, 426, 690, 912}; and
indices of pilot subcarriers of the eighth PRU are {-804, -690, -468, -152, 112, 494, 598, 778}.

10. The method according to any one of claims 1 to 3, wherein the first bandwidth is 160 MHz, and a tone plan corresponding to the 160 MHz comprises a first PRU, a second PRU, a third PRU, a fourth PRU, a fifth PRU, a sixth PRU, a seventh PRU, and an eighth PRU;
indices of discrete subcarriers of the first PRU are [-1012:8:-884, -877:8:-773, -761:8:-665, -654:8:-526, -497:8:-369, -360:8:-264, -253:8:-149, -138:8:-18, 19:8:139, 148:8:252, 266:8:362, 367:8:495, 528:8:656, 663:8:759, 774:8:878, 883:8:1011];
indices of discrete subcarriers of the second PRU are [-1011:8:-883, -878:8:-774, -758:8:-662, -657:8:-529, -494:8:-374, -363:8:-259, -249:8:-153, -142:8:-14, 12:8:140, 147:8:251, 265:8:361, 368:8:496, 531:8:651, 660:8:764, 776:8:872, 881:8:1009];
indices of discrete subcarriers of the third PRU are [-1010:8:-882, -871:8:-775, -760:8:-664, -655:8:-527, -499:8:-371, -366:8:-262, -252:8:-148, -139:8:-19, 18:8:138, 149:8:365, 372:8:500, 529:8:657, 662:8:758, 777:8:873, 880:8:1008];
indices of discrete subcarriers of the fourth PRU are [-1009:8:-881, -872:8:-776, -765:8:-661, -650:8:-530, -495:8:-367, -362:8:-266, -247:8:-151, -144:8:-16, 14:8:142, 153:8:249, 260:8:364, 373:8:493, 525:8:653, 658:8:762, 773:8:877, 884:8:1012];
indices of discrete subcarriers of the fifth PRU are [-1008:8:-880, -873:8:-777, -762:8:-658, -653:8:-525, -498:8:-370, -359:8:-263, -251:8:-147, -140:8:-12, 17:8:145, 150:8:246, 264:8:360, 369:8:497, 530:8:650, 661:8:765, 772:8:876, 885:8:1005]; and indices of discrete subcarriers of the sixth PRU are [-1007:8:-879, -874:8:-778, -763:8:-659, -652:8:-524, - 493:8:-373, -364:8:-260, -250:8:-146, -141:8:-13, 16:8:144, 151:8:247, 263:8:359, 370:8:498, 527:8:655, 664:8:760, 771:8:875, 886:8:1006];
indices of discrete subcarriers of the seventh PRU are [-1006:8:-886, -875:8:-771, -764:8:-660, -651:8:-531, -496:8:-368, -361:8:-265, -246:8:-150, -145:8:-17, 15:8:143, 152:8:248, 262:8:366, 371:8:499, 524:8:652, 659:8:763, 775:8:871, 882:8:1010];
indices of discrete subcarriers of the eighth PRU are [-1005:8:-885, -876:8:-772, -759:8:-663, -656:8:-528, -500:8:-372, -365:8:-261, -248:8:-152, -143:8:-15, 13:8:141, 146:8:250, 259:8:363, 374:8:494, 526:8:654, 665:8:761, 778:8:874, 879:8:1007]; and
a:b:c indicates subcarrier indices from an index a to an index c by using b as a step.

11. The method according to claim 10, wherein
indices of pilot subcarriers of the first PRU are {-980, -598, -360, -18, 220, 266, 624, 846};
indices of pilot subcarriers of the second PRU are {-846, -758, -494, -86, 44, 400, 732, 872};
indices of pilot subcarriers of the third PRU are {-938, -664, -334, -220, 18, 468, 758, 912};
indices of pilot subcarriers of the fourth PRU are {-872, -530, -266, -112, 86, 292, 690, 980};
indices of pilot subcarriers of the fifth PRU are {-912, -690, -426, -44, 246, 360, 530, 804};
indices of pilot subcarriers of the sixth PRU are {-778, -556, -292, -178, 112, 426, 664, 1006};
indices of pilot subcarriers of the seventh PRU are {-1006, -732, -400, -246, 152, 334, 556, 938}; and
indices of pilot subcarriers of the eighth PRU are {-804, -624, -468, -152, 178, 494, 598, 778}.

12. A communication device, comprising:
at least one processor; and
at least one memory comprising computer program code, wherein
the at least one memory and the computer program code are used together with the at least one processor to enable the communication device to perform the method according to any one of claims 1 to 11.

13. A communication device, comprising a unit configured to perform the method according to any one of claims 1 to 11.

14. A computer-readable storage medium, wherein the computer-readable storage medium stores a computer program, and when the computer program is executed by a processor, the method according to any one of claims 1 to 11 is implemented.

15. A computer program product, comprising computer-executable instructions, wherein when the computer-executable instructions are executed by a processor, the method according to any one of claims 1 to 11 is implemented.
